(19) Europäisches Patentamt / European Patent Office / Office européen des brevets

(11) **EP 4 414 899 A1**

(12) **EUROPEAN PATENT APPLICATION**

(43) Date of publication:
**14.08.2024  Bulletin 2024/33**

(21) Application number: **24155341.1**

(22) Date of filing: **01.02.2024**

(51) International Patent Classification (IPC):
**G06N 10/60** $^{(2022.01)}$     **G06N 10/20** $^{(2022.01)}$

(52) Cooperative Patent Classification (CPC):
**G06N 10/60;** G06N 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **01.02.2023  US 202363442651 P**

(71) Applicant: **Xanadu Quantum Technologies Inc.**
**Toronto, Ontario M5G 2C8 (CA)**

(72) Inventors:
• **ARRAZOLA MANTILLA, Juan Miguel**
  **Toronto, M4Y 3C1 (CA)**
• **ZINI, Modjtaba**
  **Toronto, M4W 3G9 (CA)**
• **GRAN, Alain**
  **Barrie, L4N 3M4 (CA)**
• **CASARES, Pablo**
  **28521 Rivas-Vaciamadrid (ES)**

(74) Representative: **Cooley (UK) LLP**
**22 Bishopsgate**
**London EC2N 4BQ (GB)**

(54) **QUANTUM COMPUTER BASED SIMULATION OF PHYSICAL SYSTEMS USING QUBITIZATION OF PSEUDOPOTENTIAL HAMILTONIANS**

(57)     A method for simulation of a physical system such as a battery material, on a quantum computer and using ionic pseudopotentials, includes identifying, via a quantum computer, a ground state estimate for the physical system. A linear combination of unitaries (LCU) representing the physical system is received at the quantum computer, the LCU including a pseudopotential Hamiltonian term expressed as a sum of reflections. A qubitization of the pseudopotential Hamiltonian term is performed via the quantum computer based on (1) the LCU, (2) a first unitary operator configured to prepare a plurality of superpositions, and (3) a second unitary operator different from the first unitary operator, to produce a third unitary operator different from the first unitary operator and the second unitary operator. A quantum phase estimation is performed via the quantum computer based on the ground state estimate and the third unitary operator. The quantum phase estimation includes a set of at least one simulation, to identify a ground state energy estimate for the physical system.

600

Identify a ground state estimate for a physical system 602

↓

Receive a linear combination of unitaries (LCU) representing the physical system, the LCU including a pseudopotential Hamiltonian term expressed as a sum of reflections 604

↓

Perform a qubitization of the pseudopotential Hamiltonian term, based on (1) the LCU, (2) a first unitary operator configured to prepare a plurality of superpositions, and (3) a second unitary operator different from the first unitary operator, to produce a third unitary operator different from the first unitary operator and the second unitary operator 606

↓

Perform a quantum phase estimation, based on the ground state estimate and the third unitary operator, the quantum phase estimation including a set of at least one simulation, to identify a ground state energy estimate for the physical system 608

**FIG. 6**

EP 4 414 899 A1

**Description**

*Cross-Reference to Related Applications*

This application claims priority to and the benefit of U.S. Provisional Patent Application No. 63/442,651, filed February 1, 2023 and titled "QUANTUM COMPUTER BASED SIMULATION OF PHYSICAL SYSTEMS USING QUBITIZATION OF PSEUDOPOTENTIAL HAMILTONIANS," the contents of which are incorporated by reference herein in their entirety.

*Field*

The present disclosure is related to quantum computing, and more specifically, to the use of quantum computers to simulate properties of physical systems such as battery materials.

*Background*

Quantum computing is being actively studied as a potential method to help in the development of next-generation lithium-ion batteries. A guiding principle behind these efforts is that quantum algorithms are uniquely positioned to perform highly-accurate simulations without incurring prohibitive computational costs. Nevertheless, considerable progress is still needed on both hardware and algorithms to make such simulations a reality. Primary theoretical challenges include the high cost of implementing quantum algorithms and identifying their strongest applications.

*Summary*

In some embodiments, a non-transitory, processor-readable medium stores instructions that, when executed by a processor of a quantum computer, cause the processor to identify a ground state estimate for a physical system. The non-transitory, processor-readable medium also stores instructions to receive a linear combination of unitaries (LCU) representing the physical system. The LCU includes a pseudopotential Hamiltonian term expressed as a sum of reflections. The non-transitory, processor-readable medium also stores instructions to cause the processor to perform a qubitization of the pseudopotential Hamiltonian term, based on (1) the LCU, (2) a first unitary operator configured to prepare a plurality of superpositions, and (3) a second unitary operator different from the first unitary operator, to produce a third unitary operator different from the first unitary operator and the second unitary operator. The non-transitory, processor-readable medium also stores instructions to cause the processor to perform a quantum phase estimation, based on the ground state estimate and the third unitary operator, the quantum phase estimation including a set of at least one simulation, to identify a ground state energy estimate for the physical system.

In some embodiments, a non-transitory, processor-readable medium stores instructions that, when executed by a processor of a quantum computer, cause the processor to identify a ground state estimate for a physical system. The non-transitory, processor-readable medium also stores instructions to cause the processor to receive a linear combination of unitaries (LCU) representing the physical system, the LCU including a fermionic Hamiltonian. The non-transitory, processor-readable medium also stores instructions to cause the processor to perform a qubitization of the fermionic Hamiltonian, based on (1) the LCU, (2) a first unitary operator configured to prepare a plurality of superpositions, and (3) a second unitary operator different from the first unitary operator, to produce a third unitary operator different from the first unitary operator and the second unitary operator. The non-transitory, processor-readable medium also stores instructions to cause the processor to perform a quantum phase estimation, based on the ground state estimate and the third unitary operator, the quantum phase estimation including a set of at least one simulation, to identify a ground state energy estimate for the physical system.

In some embodiments, a non-transitory, processor-readable medium stores instructions that, when executed by a processor of a quantum computer, cause the processor to transform a Hamiltonian into a linear combination of unitaries (LCU), the Hamiltonian representing at least one atomic pseudopotential of a physical system. The non-transitory, processor-readable medium also stores instructions to cause the processor to perform a qubitization of the Hamiltonian, based on (1) the LCU, (2) a first unitary operator configured to prepare a plurality of superpositions, and (3) a second unitary operator different from the first unitary operator, to produce a third unitary operator different from the first unitary operator and the second unitary operator. The non-transitory, processor-readable medium also stores instructions to cause the processor to perform a quantum phase estimation, based on a ground state estimate and the third unitary operator, the quantum phase estimation including performing at least one simulation, to identify a ground state energy estimate of the physical system.

## Brief Description of the Drawings

The drawings primarily are for illustration purposes and are not intended to limit the scope of the subject matter described herein. The drawings are not necessarily to scale; in some instances, various aspects of the subject matter disclosed herein may be shown exaggerated or enlarged in the drawings to facilitate an understanding of different features. In the drawings, like reference characters generally refer to like features (e.g., functionally similar and/or structurally similar elements).

FIG. 1 is a diagram showing an oscillating character of an all-electron (AE) wave function versus a smooth behavior of a pseudo-wave function, in accordance with some embodiments.
FIG. 2 is a diagram showing an example voltage profile for Lithium-excess ("Li-excess") materials.
FIG. 3 shows example representations of atomic structures of Li-excess materials.
FIG. 4A is a diagram of an example SELECT circuit implementation, in accordance with some embodiments.
FIG. 4B is a diagram of an example SELSWAPDIRTY QROM circuit implementation, in accordance with some embodiments.
FIG. 5 is a diagram of an example pseudopotential quantum simulation workflow, in accordance with some embodiments.
FIG. 6 is a flow diagram showing a first example method for generating a ground state energy estimate for a physical system, in accordance with some embodiments.
FIG. 7 is a flow diagram showing a second example method for generating a ground state energy estimate for a physical system, in accordance with some embodiments.
FIG. 8 is a flow diagram showing a third example method for generating a ground state energy estimate for a physical system, in accordance with some embodiments.

## Detailed Description

Some systems and methods set forth herein facilitate the quantum computer based identification of a ground state energy estimate for a physical system. The physical system may exhibit a periodicity (e.g., a material used in the production of batteries). In some implementations, the physical system is modeled as a Hamiltonian, whose eigenstates represent states of interest (e.g., ground state) of the physical system. Some embodiments include the qubitization of a pseudopotential Hamiltonian, which to the inventors' knowledge, has not previously been performed, much less in the context of modeling / simulating physical systems.

There has been remarkable progress in developing quantum algorithms for simulating properties of molecules and materials. A variety of different strategies have been proposed, ranging from variational approaches designed for noisy hardware with few qubits, algorithms designed for early fault-tolerant quantum computers, and variants of quantum phase estimation that require the full capabilities of large-scale fault-tolerant quantum computers. Much attention has been placed on efforts to improve the efficiency of quantum phase estimation algorithms, which has led to an overall cost reduction of several orders of magnitude compared to early strategies. This progress has been fueled by innovations such as qubitization, Hamiltonian factorization techniques, interaction-picture simulations, and first quantization methods.

Simulating materials, however, presents unique challenges. Arguably, among the most pressing challenges is the use of large unit cells (supercells) to simulate important properties. For example, in the context of lithium-ion batteries, relatively large supercells are used to predict the most stable phases of cathode materials whose energies determine the voltage profile of the battery cell. The size of the supercell is even more critical for the simulation of chemical reactions at the electrode-electrolyte interface. This results in systems with many hundreds of electrons whose wave functions satisfy periodic boundary conditions. Plane waves are an ideal basis set for these systems, but a very large number of plane waves is needed to achieve high-accuracy simulations.

With respect to applications, while quantum computers may simulate key properties of batteries such as equilibrium voltages (see, e.g., "Simulating Key Properties of Lithium-Ion Batteries with a Fault-Tolerant Quantum Computer," A. Delgado, et al., Phys. Rev. A 106 (2022), hereinafter "Delgado et al.," the entire contents of which are incorporated by reference herein for all purposes), it is less clear what simulation problems benefit the most from the capabilities of quantum computers. After all, developing better lithium-ion batteries involved solving a multitude of problems, and scientists are equipped with simulation techniques that have been developed over decades, which can be run on powerful supercomputers. It is therefore desirable to identify problems where the limitations of classical methods are most severe, and whose solution would be most impactful for battery development. Overall, the need remains to lower the cost of quantum algorithms and to determine their strongest use cases.

According to some embodiments of the present disclosure, a quantum algorithm is introduced that uses ionic pseudopotentials (PPs) to reduce the cost of implementing quantum phase estimation for simulating materials. Pseudopotentials are widely used to reduce the cost of computer simulations based on density functional theory. A primary strategy is to replace the bare Coulomb potential due to the nucleus and the core electrons with an effective potential. This leads to a significant reduction in both the number of electrons and plane waves used to achieve an accurate representation of the system. The interaction between the valence electrons and the ionic cores, however, is then given by a pseudopotential operator that is mathematically more complicated than the Coulomb potential. This greatly complicates the implementation of the resulting quantum algorithm, which can potentially negate the benefits of reducing the number of electrons and plane waves.

To address the foregoing, and in accordance with some embodiments, highly-optimized implementation strategies are presented for qubitization-based quantum phase estimation in first quantization. In some such implementations, Hartwigsen-Goedecker-Hutter (HGH) pseudopotentials and a tailored linear combination of unitaries decomposition for the pseudopotential term of the Hamiltonian are used. The compilation of the qubitization encoding is carefully engineered to reduce the cost of implementation in the presence of the pseudopotential. Some methods set forth herein make frequent use of Quantum Read-Only Memory (QROM) subroutines to avoid costly quantum arithmetic. Overall, a similar cost for the algorithm (as compared to known approaches - see, e.g., "Fault-Tolerant Quantum Simulations of Chemistry in First Quantization," Y. Su, et al., PRX Quantum 2, 040332 (2021), hereinafter "Su et al.," the entire contents of which are incorporated by reference herein for all purposes) is achieved for a fixed number of plane waves, but algorithms of the present disclosure can use orders-of-magnitude fewer plane waves to reach convergence for typical materials. This results in considerable reductions in runtime for a given target accuracy of the simulation.

Some embodiments set forth herein include the use of quantum computers for simulating lithium-excess cathode materials. These materials offer a promising avenue to significantly increase the energy density of state-of-the-art cathodes. Lithium-excess materials have theoretical capacities that are roughly twice as high as commercial batteries. Such high capacities could make the driving range and cost of electric vehicles competitive with internal combustion engines. Lithium-excess materials, unfortunately, suffer from capacity loss even after a single charging cycle. The rapid degradation of Li-excess material during charging has been attributed to irreversible structural transformations of the material, but the interrelation between the proposed redox mechanisms and the observed transformations remains a topic of significant interest in battery research, as they are difficult to probe experimentally. Researchers often rely on density functional theory simulations, which are not accurate enough to convincingly identify the causes of irreversible structural changes. This makes it difficult to develop solutions for capacitance loss in lithium-excess cathode materials since its underlying cause is not fully understood.

A detailed estimation is set forth herein of the resources implicated for implementing quantum phase estimation algorithms of the present disclosure, as applied to three lithium-excess cathode materials: lithium manganese oxide ($Li_2MnO_3$), lithium nickel-manganese oxide ($Li[Li_{0.17}Ni_{0.25}Mn_{0.58}]O_2$), and lithium manganese oxyfluoride ($Li_{0.75}MnO_2F$). In each of these cases, the use of ionic pseudopotentials allows a reduction of the number of electrons by a factor of 2, and a reduction in the number of plane waves by roughly three orders of magnitude compared to all-electron simulations. This results in a total runtime for the algorithm that is about four orders of magnitude lower than in previous methods such as Su et al..

Section I below provides background information on first-quantization quantum algorithms for electronic structure, the theory of ionic pseudopotentials, and the basic properties of Quantum Read-Only Memories. An example quantum algorithm in accordance with some embodiments of the present disclosure is described in Section II, outlining a linear combination of unitaries and qubitization subroutines. A detailed error analysis is presented in Section III, and a calculation of the qubit and gate cost of the full algorithm is presented in Section IV. Simulation of Li-excess cathode materials is discussed in Section V, while Section VI describes the resource estimation for said simulation of Li-excess cathode materials. Summary comments pertaining to the foregoing sections are presented in Section VII.

**I. Interdisciplinary Considerations**

**A. The plane-wave electronic Hamiltonian in first quantization**

A goal of some embodiments of the quantum algorithm presented herein is to solve the electronic structure problem:

$$H\Psi_0\left(r_1, \dots, r_\eta\right) = E_0\Psi_0\left(r_1, \dots, r_\eta\right) \tag{1}$$

where $H$ is the Hamiltonian of $\eta$ interacting electrons, and $\Psi_0$ and $E_0$ are the ground-state wave function and energy, respectively.

In the Born-Oppenheimer approximation, the electronic Hamiltonian $H$ is given by

$$H = T + U + V, \tag{2}$$

where $T$ is the total kinetic energy operator, $U$ is the Coulomb potential due to the nuclei and $V$ is the electron-electron interaction term.

Plane-wave functions are a natural basis set to represent the electronic states in periodic materials. They can be used to encode the translational symmetry of crystal structures and allow us to derive closed-form expressions for the Hamiltonian matrix elements. Plane wave functions are defined as

$$\varphi_p(\boldsymbol{r}) = \frac{1}{\sqrt{\Omega}} e^{i G_p \cdot \boldsymbol{r}} \tag{3}$$

where $\Omega$ is the volume of the material's unit cell and $\boldsymbol{G_p}$ is the reciprocal lattice vector

$$\boldsymbol{G}_p = \left[ \sum_{i=1}^{3} p_i b_{i_x}, \sum_{i=1}^{3} p_i b_{i_y}, \sum_{i=1}^{3} p_i b_{i_z} \right] \tag{4}$$

where $\boldsymbol{b}_1$, $\boldsymbol{b}_2$, $\boldsymbol{b}_3$ are the primitive vectors of the reciprocal lattice. For a total number of plane waves $N$, the integer vectors $\boldsymbol{p}$ contained in the set

$$\mathcal{G} = \left[ -\frac{N^{1/3}}{2} + 1, \frac{N^{1/3}}{2} - 1 \right]^3 \tag{5}$$

define a uniform grid of points in the reciprocal lattice.

Some known works have argued in favor of using first quantization techniques to accommodate the large number of plane waves that are required for accurate simulations. In first quantization, the plane wave representation of the operators $T$, $U$ and $V$ are given by:

$$T = \sum_{i=1}^{\eta} \sum_{p \in \mathcal{G}} \frac{\|G_p\|^2}{2} |p\rangle\langle p|_i \tag{6}$$

$$U = -\frac{4\pi}{\Omega} \sum_{i=1}^{\eta} \sum_{q \in \mathcal{G}} \sum_{\substack{v \in \mathcal{G}_0 \\ (q-v) \in \mathcal{G}}} \frac{\sum_{l=1}^{L} Z_l e^{G_v \cdot R_l}}{\|G_v\|^2} |q - v\rangle\langle q|_i \tag{7}$$

$$V = \frac{2\pi}{\Omega} \sum_{i \neq j}^{\eta} \sum_{p,q \in \mathcal{G}} \sum_{\substack{v \in \mathcal{G}_0 \\ (p+v) \in \mathcal{G} \\ (q-v) \in \mathcal{G}}} \frac{1}{\|G_v\|^2} |p + v\rangle\langle p|_i |q - v\rangle\langle q|_j \tag{8}$$

where $Z_l$ and $\boldsymbol{R}_l$ are the atomic number and position of the lth atomic species, and Z denotes the number of atoms in the unit cell. In Eqs. (7) and (8), $\boldsymbol{G}_v = \boldsymbol{G}_q - \boldsymbol{G}_p$ and $\boldsymbol{G}_v = \boldsymbol{G}_p - \boldsymbol{G}_s = \boldsymbol{G}_r - \boldsymbol{G}_q$, respectively, and $\mathcal{G}_0 = \mathcal{G}$ \ (0, 0, 0). The qubit representation of the $N$ plane waves uses $n_p = \left\lceil \log(N^{1/3} + 1) \right\rceil$ many qubits for each coordinate. Thus a total of $3\eta n_p$ qubits are required for the system register.

## B. Ionic pseudopotentials

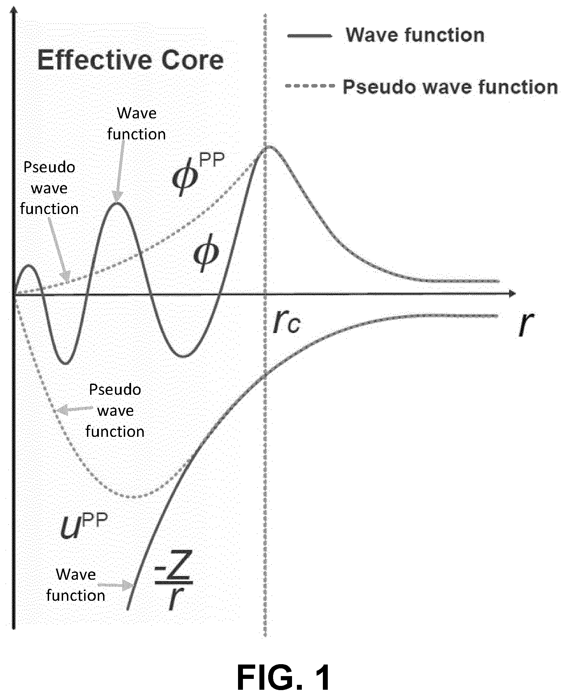

Performing accurate *all-electron* simulations of supercell structural models of battery materials is hampered by the huge number of plane waves that are needed to represent the core states and the valence states near the nucleus as sketched in FIG. 1. Different strategies such as the augmented and orthogonalized plane wave methods have been proposed to overcome this limitation. However, a key step to retain the advantages of plane waves for materials simulations was taken by Phillips, Kleinman and Antoncik (PKA). Crucially, it follows from the PKA transformation that the nuclear potential and the core electrons can be replaced by an effective potential known as a *pseudopotential* that produces the same energies of the valence states (see FIG. 1). Furthermore, the associated pseudo wave functions superimpose the true valence wave functions outside the core region, and can be accurately represented using a significantly smaller number of plane waves.

In some embodiments of the present disclosure, *ab-initio* ionic pseudopotentials (PPs), which have proven to be highly accurate for simulating materials, are used. They are typically generated from all-electron atomic calculations performed using density functional theory. Due to the spherical symmetry of the Coulomb potential, the pseudo wave functions, denoted as $\phi_{lm}(r)$, are eigenstates of the angular momentum operator and are characterized by the quantum numbers $(l, m)$. Starting from a pseudo wave function ansatz, the effective model potential $u_l(r)$ is found by inverting the radial Schrödinger equation. Norm-conserving PPs are obtained from pseudo wave functions enclosing the same charge as the true wave function in the core region $r < r_c$, where $r_c$ denotes a core radius around the nucleus. Finally, the ionic PP is obtained by removing the screening effects due to the valence electrons in the atom. This is referred to as "unscreening" the pseudopotential, which makes the PP transferable to different atomic environments.

FIG. 1 shows a representation of the oscillating character of the all-electron (AE) wave function $\phi$ versus the smooth behaviour of the pseudo-wave-function $\phi^{PP}$ in the core region $r < r_c$. The pseudo wave function is a solution of the pseudopotential $u^{PP}$ and superimposes the AE function for $r > r_c$.

The general form of the pseudopotential operator is:

$$u^{PP} = u^{loc} + u^{SL} \qquad (9)$$

where $u^{loc} := u^{loc}(r)$ is a local potential, i.e., obtained by evaluating a simple function at point r. It represents a screened Coulomb potential which joins smoothly the all-electron atomic potential at some radius $r > r_c$. The second operator in Eq. (9) is defined as

$$u^{SL} = \sum_{l=0}^{l_{max}} \sum_{m=-l}^{l} \Delta u_l(r) |lm\rangle\langle lm| \qquad (10)$$

where $l_{max}$ is the maximum angular momentum of the core electrons and $\langle r|lm\rangle = Y_{lm}(\theta,\phi)$ denotes the spherical harmonics. The $l$-dependent potential $\Delta u_l(r) = u_l(r) - u^{loc}(r)$ is a short-ranged potential vanishing beyond the core radius. Moreover, in the asymptotic limit $r \to \infty$, the full pseudopotential $u^{PP}$ behaves as $-Z_{ion}/r$, where $Z_{ion} = Z - \eta_{core}$ ($\eta_{core}$ is the number of core electrons) is the effective charge of the ionic core.

The operator $u^{SL}$ in Eq. (9) has a semi-local character since its action on a given basis function $\langle r|q\rangle = \varphi_q(r, \phi, \theta)$ is local in the radial coordinates but involves an integral over the angular variables $(\phi, \theta)$. Computing its plane wave matrix elements $u_{pq}^{SL}$ requires evaluating the radial integral:

$$I_{pq} = \int_0^\infty dr\, r^2 j_l(G_p r) \Delta u_l(r) j_l(G_q r) \qquad (11)$$

where $j_l$ denotes the spherical Bessel functions and $G_p$ is the norm of the reciprocal lattice vector $\boldsymbol{G_p}$. The number of such integrals scales as $\mathcal{O}(LN^2)$, where $L$ is the number of atoms in the material's unit cell and $N$ is the total number of plane waves. Typically, $N$ can be very large in actual simulations and computing these matrix elements becomes computationally expensive.

To reduce this computational cost, Kleinman and Bylander (KB) proposed the separable pseudopotentials by expressing the radial operator $\Delta u_l(r)$ in a form that is separable in the radial variables. The KB construction was further modified by Blöch to construct the non-local (NL) pseudopotential:

$$u^{PP} = u^{loc} + u^{NL} \qquad (12)$$

with the operator $u^{NL}$ given by:

$$u^{\text{NL}} = \sum_{l=0}^{l_{\max}} \sum_{m=-l}^{l} \frac{|\xi_{lm}\rangle\langle\xi_{lm}|}{\langle\xi_{lm}|\phi_{lm}\rangle}$$

$$(13)$$

In Eq. (13) $\langle r|\phi_{lm}\rangle = \phi_l(r)Y_{lm}(\phi, \theta)$ is a pseudo wave function solution of the model potential $u_l(r)$, and $\langle r|\xi_{lm}\rangle = \xi_l(r)Y_{lm}(\phi, \theta)$ are projectors defined as:

$$\xi_{lm}(r) = \left\{\varepsilon_l - \left[-\frac{1}{2}\nabla^2 + u^{\text{loc}}(r)\right]\right\}\phi_{lm}(r)$$

$$(14)$$

where $\varepsilon_l$ is the all-electron reference energy associated with the pseudo wave function $\phi_{lm}(r)$. Note from Eq. (13) that computing the matrix elements of the separable potential $u_{pq}^{NL}$, as opposed to the matrix elements of a semi-local operator (Eq. (11)), can involve only evaluating the product of the projection operations:

$$\langle\xi_{lm}|\varphi_q\rangle = \int dr\, \xi_{lm}^*(r)\varphi_q(r),$$

$$(15)$$

which scales linearly with the number of plane waves.

The non-local operator in Eq. (13) can be generalized to use two or more projectors per angular momentum quantum numbers,

$$u^{\text{NL}} = \sum_{l=0}^{l_{\max}} \sum_{m=-l}^{l} \left[\sum_{i,j} B_{ij}|\beta_i\rangle\langle\beta_j|\right]_{lm}$$

$$(16)$$

where the matrix $B_{ij} = \langle\phi_i|\xi_j\rangle$ is used to define the projectors $|\beta_i\rangle = \sum_j (B^{-1})_{ij}|\xi_j\rangle$. Pseudopotential operators of this form are called *generalized separable pseudopotentials,* and are routinely used in classical electronic structure calculations of materials. A further generalization of the non-local operator in Eq. (16) is obtained by relaxing the norm conservation condition. This can result in so-called ultrasoft pseudopotentials.

**C. Qubitization-based quantum phase estimation**

The quantum algorithm presented in this work is a qubitization-based quantum phase estimation (QPE) algorithm for computing ground-state energies of periodic materials. In contrast to other techniques, qubitization does not introduce any further approximations in implementing the unitary that encodes the eigenvalues of the Hamiltonian. This makes it particularly appealing when the accuracy of the simulation is paramount. A review of the qubitization method is provided below.

To qubitize a Hamiltonian, it can first be written as a linear combinations of unitaries (LCU),

$$H = \sum_\ell \alpha_\ell H_\ell$$

$$(17)$$

where each $H_\ell$ is a unitary and the coefficients $\alpha_\ell > 0$ are referred to as (unnormalized) *selection probabilities.* The specific choice of an LCU has a large impact on the cost of qubitization, especially through the parameter $\lambda = \sum_\ell \alpha_\ell$.

Define the qubitization operator:

$$Q = (2|\mathbf{0}\rangle\langle\mathbf{0}| - \mathbb{I})\text{PREP}_H^\dagger \text{SEL}_H \text{PREP}_H$$

$$(18)$$

with the prepare and select unitaries given by:

$$\text{PREP}_H |\mathbf{0}\rangle |\psi\rangle = \left( \sum_{\ell} \sqrt{\frac{\alpha_\ell}{\lambda}} |\ell\rangle \right) |\psi\rangle \tag{19}$$

$$\text{SEL}_H = \sum_{\ell} |\ell\rangle\langle\ell| \otimes H_\ell \tag{20}$$

Note that the reflection in Q and PREP (also referred to herein as a "first unitary operator") act on an auxiliary register 10). The latter prepares the so-called PREP state $\sum_{\ell} \sqrt{\frac{\alpha_\ell}{\lambda}} |\ell\rangle$ with amplitudes given by the selection probabilities. It does not alter the system register $|\psi\rangle$, which is acted upon by SEL (also referred to herein as a "second unitary operator") that applies the unitaries $H_\ell$. These subroutines satisfy the block-encoding equation

$$\langle \mathbf{0} | \text{PREP}_H^\dagger \text{SEL}_H \text{PREP}_H |\mathbf{0}\rangle = \frac{H}{\lambda} \tag{21}$$

The operator $Q$ (also referred to herein as a "third unitary operator") is block-diagonal, with each block $Q_k$ corresponding to a two-dimensional subspace $W_k$ spanned by an orthonormal basis $\text{span}\{|\mathbf{0}, \Phi_k\rangle, |\rho_k\rangle\}$, where $|\Phi_k\rangle$ is an eigenstate of $H$ with eigenvalue $E_k$. The term qubitization refers to these effective qubit subspaces. In its eigenbasis, $Q_k$ can be written as

$$Q_k = e^{i\theta_k} |\theta_k\rangle\langle\theta_k| + e^{-i\theta_k} |-\theta_k\rangle\langle-\theta_k| \tag{22}$$

where $|\pm\theta_k\rangle$ are the eigenstates, with $\theta_k = \arccos(E_k/\lambda)$. Thus, by applying QPE on Q with an initial state $|\mathbf{0}\rangle|\Psi_0\rangle$, where $|\mathbf{0}\rangle|\Psi_0\rangle = \alpha|\theta_0\rangle + \beta|-\theta_0\rangle$ for some $\alpha, \beta$, one recovers the ground state and its energy since $\cos(\pm\theta_0) = E_0/\lambda$.

In the QPE algorithm, the unitary Q is controlled on the state of auxiliary qubits, which increases the Toffoli cost of the algorithm. To avoid this, one can use a reflection to have the inverse unitary applied when the auxiliary qubit is in state 10). The only requirement for this modification to work is for SEL to be self-inverse, which algorithms / embodiments of the present disclosure satisfy.

When acting on an initial state $|\psi\rangle$, the QPE algorithm outputs an estimate of the ground-state energy $E_0$ (referred to herein as a "ground state energy estimate") with probability $p_0 = |\langle \psi_0 | \psi\rangle|^2$, where $|\psi_0\rangle$ in this context is the ground state estimate. The QPE routine needs to be repeated $\mathcal{O}$ $(1/p_0)$ times on average to retrieve $E_0$ with high probability. It is thus necessary to prepare a state with a sufficiently large overlap with the ground state. This is the initial state preparation problem: a crucial and daunting challenge for quantum algorithms. Strategies for preparing initial states have been studied. For example, Delgado et al. described a method for preparing a Hartree-Fock state for periodic materials in first quantization, which is relevant to embodiments set forth herein. It remains an open question, however, to find the best methods for state preparation and to determine whether they can achieve sufficiently large overlaps for practical purposes. In some embodiments of the present disclosure, the problem of reducing the cost of QPE is addressed, while acknowledging the importance of developing improved methods for initial state preparation.

### D. Quantum Read-Only Memory (QROM)

In some embodiments of the present disclosure, QROM is used in the quantum algorithm to prepare arbitrary states of few qubits. A variety of known methods may be suitable for this task (see, e.g., "Quantum State Preparation Without Coherent Arithmetic," S. McArdle, et al., Quantum Physics, arXiv:2210.14892 (2022), hereinafter "McArdle et al.," the entire contents of which are incorporated by reference herein for all purposes, which provides an overview of such techniques). A QROM, or a data-lookup oracle, is an operator $O$ that reads a register $|x\rangle$ and outputs a corresponding bitstring $|\theta_x\rangle$ into an auxiliary register as: $O|x\rangle|\mathbf{0}\rangle = |x\rangle|\theta_x\rangle$. The output bitstring $\theta_x$ is precomputed and available in a data-lookup table. The non-Clifford gate cost of QROM is exponential in the size of $x$ and polynomial in the size of $\theta_x$. Parallelization can decrease the depth at the expense of using more qubits.

| Operation | Additional qubits | Toffoli Depth | Toffoli count $\leq \cdot + \mathcal{O}(\log \cdot)$ |
|---|---|---|---|
| SELECT SELSWAPDIRTY | $b + \lceil \log N \rceil$ <br><br> $b(\beta + 1) + \lceil \log N \rceil$ | $N$ <br><br> $2\left\lceil \dfrac{N}{\beta} \right\rceil + 3\lceil \log \beta \rceil$ | $N$ <br><br> $2\left\lceil \dfrac{N}{\beta} \right\rceil + 3b\beta$ |

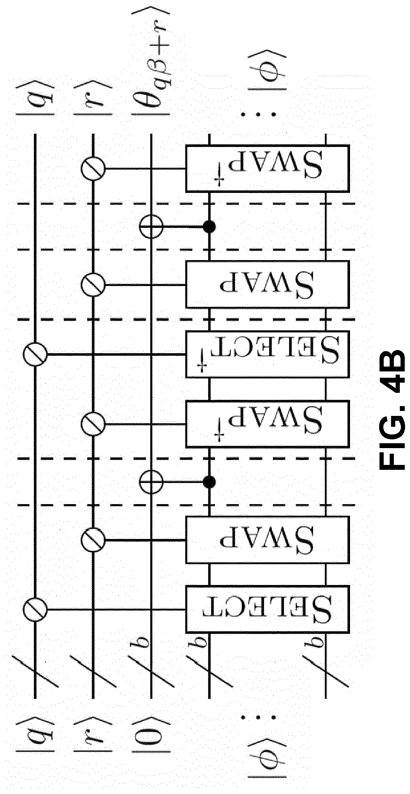

TABLE I. Gate and qubit cost of SELECT and SELSWAPDIRTY QROMs. The space-depth trade-off is determined by $\beta \in [1, N]$. Note that $b\beta$ qubits of the implementation shown in FIG. 4B may be dirty, while $b + \lceil \log(N) \rceil$ are clean qubits.

Consider the target state $|\psi\rangle = \Sigma_x a_x |x\rangle$, where the assumption $a_x \geq 0$ is used for simplicity. For any bit-string y of length $w \leq n$, where $n$ is the total number of qubits, denote by $p_y$ the probability that the first $w$ qubits of $|\psi\rangle$ are in state $|y\rangle$. Define also $\cos(\theta_y) = \sqrt{p_{y0}/p_y}$ , and the QROM oracles $O_w |y\rangle|0\rangle = |y\rangle|\theta_y\rangle$, outputting the classically precomputed and tabulated $\theta_y$ up to $b$ bits of precision for each w. The QROM oracles can be used iteratively to prepare any state $|\psi\rangle = \Sigma_x a_x |x\rangle$ as follows. By induction, for $1 \leq w \leq n$, do:

$$|\psi_w\rangle = \sum_{y \in \{0,1\}^w} \sqrt{p_y}|y\rangle|\mathbf{0}\rangle|\mathbf{0}\rangle$$

$$\underset{O_w}{\mapsto} \sum_{y \in \{0,1\}^w} \sqrt{p_y}|y\rangle|\mathbf{0}\rangle|\theta_y\rangle$$

$$\underset{R_{w+1}}{\longmapsto} \sum_{y \in \{0,1\}^w} \sqrt{p_y}|y\rangle\big(\cos(\theta_y)|\mathbf{0}\rangle + \sin(\theta_y)|1\rangle\big)|\mathbf{0}\rangle|\theta_y\rangle$$

$$\underset{O_w^\dagger}{\mapsto} \sum_{y \in \{0,1\}^{w+1}} \sqrt{p_y}|y\rangle|\mathbf{0}\rangle|\mathbf{0}\rangle = |\psi_{w+1}\rangle|\mathbf{0}\rangle|\mathbf{0}\rangle$$

$$(23)$$

where $R_{w+1}$ is a one-qubit rotation on the (w + 1)-th qubit controlled on the state of the auxiliary system, and $|0\rangle$ is used to denote all-zero states of different number of qubits. While non-negative amplitudes $a_x \geq 0$ were assumed, the complex phases of $|\psi\rangle$ can be implemented by storing $\phi_x = \arg[a_x/|a_x|]$ and applying it in the final iteration. In some embodiments of the present disclosure, $\phi_x = \pm 1$, meaning that the phase is real-valued and can be implemented using a Z gate.

The precision of the rotation angle is the main source of error, and the following result is obtained for the total error:

**Lemma I.1**. The error in the state preparation Eq. (23) is $2^{-b}\pi n$.

There are three different types of QROM oracles that can be used in Eq. (23). Two of these, called SELECT and SELSWAPDIRTY, are of interest to us. One important property of SELSWAPDIRTY is the space-depth trade-off that it offers. With the help of dirty qubits, i.e., qubits that do not need to be initialized to any specific state, the depth of the circuit can be lowered by parallelizing the controlled-SWAP gates used in the SWAP subroutine of SELSWAPDIRTY. Furthermore, the dirty qubits are returned to their initial state, therefore any qubit not undergoing simultaneous computation in the quantum circuit can be borrowed as a dirty qubit. Example costs of these routines are presented in Table I, and a more in-depth discussion is presented in Section G - "QROM: Application, Parallelization and Costs," below.

**II. Quantum algorithm**

The pseudopotential-based algorithm is now described, beginning with the construction of the plane-wave representation of the pseudopotential operators describing the ionic cores in the material. The LCU decomposition of the Hamiltonian is then described, as well as the implementation of the qubitization operator. Remark environments are used herein to highlight conceptual points that will be referenced multiple times.

## A. Plane wave matrix elements of the Hartwigsen-Goedecker-Hutter pseudopotential

In some embodiments of the present disclosure, separable Gaussian pseudopotentials proposed by Hartwigsen, Goedecker and Hutter (HGH) are used (see, e.g., "Relativistic Separable Dual-Space Gaussian Pseudopotentials from H to Rn," C. Hartwigsen, et al., Physical Review B 58, 3641 (1998), hereinafter "Hartwigsen et al.," the entire contents of which are incorporated by reference herein for all purposes). The HGH pseudopotentials are straightforward to define and have proven to be accurate and transferable. Furthermore, closed-form expressions have been derived for the plane-wave matrix elements of the local and non-local potentials (see Section A - "Plane Wave Matrix Elements of the Pseudopotential Operator," below), and their structure have been exploited to optimize the qubitization of the modified operator $U$, as discussed in Section IIC - "Quantum Algorithm - Linear Combination of Unitaries," below.

The HGH local potential is defined as

$$u^{\mathrm{loc}}(r) = -\frac{Z_{\mathrm{ion}}}{r}\mathrm{erf}(\alpha r) + \sum_{i=1}^{4} C_i\left(\sqrt{2}\alpha r\right)^{2i-2} e^{-(\alpha r)^2} \tag{24}$$

where $\mathrm{erf}(\alpha r)$ is the error function with $\alpha = \frac{1}{\sqrt{2}r_{\mathrm{loc}}}$, $r_{\mathrm{loc}}$ is a local radius parameter giving the charge distribution in the core, and the $C_i$ are tabulated coefficients (see, e.g., Hartwigsen et al.).

On the other hand, the non-local part $u^{\mathrm{NL}}$ is given by a sum of separable terms:

$$u^{\mathrm{NL}} = \sum_{lm} \sum_{i,j=1}^{3} \left|\beta_i^{(lm)}\right\rangle B_{ij}^{(l)} \left\langle\beta_j^{(lm)}\right| \tag{25}$$

where $\left\langle r\middle|\beta_i^{(lm)}\right\rangle = \beta_i^{(l)}(r)Y_{lm}(\phi,\theta)$. The radial functions $\beta_i^{(l)}(r)$ are Gaussian-type projectors given by

$$\beta_i^{(l)}(r) = A_l^i r^{l+2i-2}\exp\left[-\frac{1}{2}\left(\frac{r}{r_l}\right)^2\right] \tag{26}$$

where the $A_l^i$ is a constant defined in Section A2 ("Plane Wave Matrix Elements of the Pseudopotential Operator - Matrix Elements of the Non-Local Potential") below, and the radii $r_l$ give the range of the $l$-dependent projectors. The optimized values of the coefficients $B_{ij}^{(l)}$ and the radii $r_l$, are reported in Hartwigsen et al..

The plane-wave matrix elements of the local and non-local components of the HGH pseudopotentials are derived in Section A - "Plane Wave Matrix Elements of the Pseudopotential Operator." For an ion located at the coordinates $R$, the matrix elements of the local potential are given by

$$u_{pq}^{\mathrm{loc}}(R) = \frac{4\pi}{\Omega} e^{iG_v\cdot R} e^{-(G_v r_{\mathrm{loc}})^2/2} \left\{-\frac{Z_{\mathrm{ion}}}{G_v^2} + \frac{\sqrt{\pi}}{2}\left[C_1 r_{\mathrm{loc}}^3 + C_2\left(3r_{\mathrm{loc}}^3 - 5r_{\mathrm{loc}}^5 G_v^2\right) + C_3\left(15r_{\mathrm{loc}}^3 - \right.\right.$$
$$\left.\left. 10r_{\mathrm{loc}}^5 G_v^2 + r_{\mathrm{loc}}^7 G_v^4\right) + C_4\left(105r_{\mathrm{loc}}^3 - 105r_{\mathrm{loc}}^5 G_v^2 + 21r_{\mathrm{loc}}^7 G_v^4 - r_{\mathrm{loc}}^9 G_v^6\right)\right]\right\} \tag{27}$$

where $G_v = G_q - G_p$.

The matrix elements of the non-local operator in Eq. (16) are derived in Section A2 - "Plane Wave Matrix Elements of the Pseudopotential Operator - Matrix Elements of the Non-Local Potential," below. Typically, electronic structure calculations are performed using one or two projectors. Consider the case of one projector per angular momentum ($I = j = 1$). In this case, the plane wave matrix elements for the HGH non-local potential are given by:

$$u_{pq}^{\mathrm{NL}}(\boldsymbol{R}) = \frac{4\pi}{\Omega}\, e^{i\boldsymbol{G}_v\cdot\boldsymbol{R}}\left\{ 4B_0 r_0^3 e^{-(G_p^2+G_q^2)r_0^2/2} + \frac{16B_1 r_1^5}{3}\left(\boldsymbol{G}_p\cdot\boldsymbol{G}_q\right)e^{-(G_p^2+G_q^2)r_1^2/2}\right.$$

$$\left. + \left[\frac{32B_2 r_2^7}{15}\left(\boldsymbol{G}_p\cdot\boldsymbol{G}_q\right)^2 + \frac{32B_2 r_2^7}{45}\left(G_p G_q\right)^2\right]e^{-(G_p^2+G_q^2)r_2^2/2}\right\}$$

$$(28)$$

where the coefficient $B_l := B_{11}^{(l)}$. To see roughly how the projector expression Eq. (25) could lead to the expression above, one example is presented of how the equation decomposes to a sum of projections. Consider the first term, which can be written in full form as $4B_0 r_0^3 e^{-(G_p^2+G_q^2)r_0^2/2}|\boldsymbol{p}\rangle\langle\boldsymbol{q}|$ in Eq. (28). This can be expressed as a scalar multiple of the projection onto the Gaussian superposition state:

$$\sum_{p\in\mathcal{G}} e^{-G_p^2 r_0^2/2}|\boldsymbol{p}\rangle \qquad\qquad (29)$$

A similar rewriting applies to other terms in Eq. (28), and involves projection onto (derivatives of) Gaussian superpositions (see, e.g., Section C - "LCU for $U_{NL}$," below).

**B. The pseudopotential Hamiltonian**

By including the ionic pseudopotentials described in the previous section, the all-electron problem defined by the Hamiltonian in Eq. (2) transforms into a valence-only electron problem where now $\eta_{\mathrm{val}} = \sum_{I=1}^{L} Z_{\mathrm{ion}_I}$. As mentioned before, this results in a substantial reduction of the total number of electrons, plane waves $N$, and the overall norm of the Hamiltonian describing the valence electrons.

In this approach, the expressions for the operators $T$ and $V$ (Eqs. (6) and (8)) remain formally identical. The operator $U$ accounting for the electron-nuclei interactions in the all-electron case, however, needs to be defined using the effective pseudopotentials describing the ionic cores:

$$U = \sum_{i=1}^{\eta}\sum_{I=1}^{L}\frac{-Z_I}{|\boldsymbol{r}_i - \boldsymbol{R}_I|} \to U = \sum_{i=1}^{\eta_{\mathrm{val}}}\sum_{I=1}^{L} u^{\mathrm{PP}}(\boldsymbol{r}_i, \boldsymbol{R}_I)$$

$$(30)$$

Using Eq. (12), the plane-wave representation of the operator $U$ becomes

$$U = U_{\mathrm{loc}} + U_{\mathrm{NL}} \qquad\qquad (31)$$

$$U_{\mathrm{loc}} := \sum_{i=1}^{\eta_{\mathrm{val}}}\sum_{p,q=1}^{N}\sum_{I=1}^{L} u_{pq}^{\mathrm{loc}}(\boldsymbol{R}_I)\,|\boldsymbol{p}\rangle\langle\boldsymbol{q}|_i \qquad\qquad (32)$$

$$U_{\text{NL}} := \sum_{i=1}^{\eta_{\text{val}}} \sum_{p,q=1}^{N} \sum_{l=1}^{L} u_{pq}^{\text{NL}}(\boldsymbol{R}_I) \, |\boldsymbol{p}\rangle\langle\boldsymbol{q}|_i$$

$$(33)$$

where $u_{pq}^{loc}(\boldsymbol{R}_I)$ and $u_{pq}^{NL}(\boldsymbol{R}_I)$ are the matrix elements of the HGH pseudopotenials given, respectively, by Eqs. (27) and (28). This yields the *pseudopotential* Hamiltonian.

$$H = T + U_{\text{loc}} + U_{\text{NL}} + V$$

$$(34)$$

## C. Linear Combination of Unitaries

When deriving the LCU for H as in Eq. (34), the structure of the matrix entries of each of the four operators is studied. At least two differences can be observed, relative to the setting in Su et al.: (1) consider the case where the lattice is not orthonormal, hence the reciprocal lattice vector $\boldsymbol{G}_p = \Sigma_{\omega=1}^{3} p_\omega \boldsymbol{b}_\omega$ can no longer be substituted by $\boldsymbol{G}_p = 2\pi\Omega^{-1/3}\boldsymbol{p}$, and (2) while the local term $U_{\text{loc}}$ has some resemblance to the previous operator $U$ in the all-electron setting, the nonlocal term $U_{\text{NL}}$ has a radically different structure. Dealing with the complexity of this nonlocal term is therefore a significant challenge in deriving an efficient decomposition.

The LCUs can be derived for $T$, $V$, and $U_{\text{loc}}$ as follows. The case of $U_{\text{NL}}$ is explained at a high level, with details appearing in Section C - "LCU for $U_{\text{NL}}$," below. Hereafter, the following conventions are used: $\eta$ is used instead of $\eta_{\text{val}}$ for the number of electrons for the pseudopotential Hamiltonian. Also, the nuclei index $I$ is expressed with two coordinates: the atomic type and the nuclei of that type in the cell. This is denoted by $I = (t, t_j)$, where $t$ is the atomic type of $I$ and $t_j$ enumerates the nuclei of that type (reading for example as the 'third oxygen atom'). To make the reference to nuclei $I$ more explicit, $t_I$ and $t_{Ij}$ are occasionally used.

*LCU for T.* Recall that $T$ is a diagonal operator with entries $\dfrac{G_p^2}{2}$. One may rewrite:

$$G_p^2 = \boldsymbol{G}_p \cdot \boldsymbol{G}_p = \sum_{\omega,\omega'} \langle \boldsymbol{b}_\omega, \boldsymbol{b}_{\omega'} \rangle \boldsymbol{p}_\omega \boldsymbol{p}_{\omega'}$$

$$(35)$$

and take the binary expansion:

$$\boldsymbol{p}_\omega = (-1)^{p_{\omega,n_p-1}} \sum_{r} 2^r \boldsymbol{p}_{\omega,r}$$

$$\boldsymbol{p}_{\omega'} = (-1)^{p_{\omega',n_p-1}} \sum_{s} 2^s \boldsymbol{p}_{\omega',s}$$

$$(36)$$

Note the signed integer representation, where the $(n_p - 1)$-th bit determines the sign of the coordinate. One can apply a similar procedure as in the orthonormal lattice case (see, e.g., Su et al.), rewriting $\boldsymbol{p}_{\omega,r}\boldsymbol{p}_{\omega',s} = (1 + (-1)^{p_{\omega,r} \oplus p_{\omega',s}+1})/2$. By doing so, the following decomposition is obtained:

$$T = \sum_{j=1}^{\eta} \sum_{p \in \mathcal{G}} \frac{G_p^2}{2} |p\rangle_j \langle p|_j = \frac{1}{4} \sum_{j=1}^{\eta} \sum_{1 \le \omega, \omega' \le 3} |\langle b_\omega, b_{\omega'} \rangle| \sum_{1 \le r, s \le n_p - 2} 2^{r+s}$$

$$(37)$$

Notice the appearance of the inner product $\langle b_\omega, b_{\omega'} \rangle$, which is otherwise zero for an orthogonal lattice. The unitaries are in the last line of the equation. The LCU in Eq. (37) is also used for the kinetic term of the all-electron calculations as the lattices in case studies of the present disclosure are no longer orthonormal.

*Remark* III.1. When the lattice is orthogonal, the sum corresponding to $b = 0$ is a multiple of identity, which can be omitted in the qubitization of $H$. This shifting is used in case studies of the present disclosure with orthogonal lattices, giving an improvement over the LCU proposed in Su et al., as it decreases the value of $\lambda$ and thus the simulation cost.

*LCU for V.* The unitaries used in this LCU are signed translations of the lattice by the momentum vector v. This strategy applies, given that the matrix entry $V_{(p_i', q_j'),(p_i, q_j)}$ of $V$ is nonzero only when $p_i' - p_i = v = q_j - q_j' \in \mathcal{G}_0$, and its value depends only on $v$ (see, e.g., Delgado et al.). This term identically appears in the all-electron setting. Furthermore, in that case, as the term $\frac{1}{G_v^2}$ is shared by $U$ and $V$ selection probabilities, the LCU for $U$ is similarly derived. See Section D - "Inequality Test," below, for more details. The LCU is given by

$$V = \sum_{v \in \mathcal{G}_0} \frac{\pi}{\Omega G_v^2} \sum_{i \ne j=1}^{\eta} \sum_{b \in \{0,1\}} \sum_{p,q \in \mathcal{G}} \left( (-1)^{b([p+v \notin \mathcal{G}] \vee [q-v \notin \mathcal{G}])} |p+v\rangle_i \langle p|_i |q-v\rangle_j \langle q|_j \right)$$

$$(38)$$

where, as before, the unitaries are denoted in the last line of the equation.

*LCU for $U_{\text{loc}}$.* The LCU for the local term is derived similarly to $V$, given its symmetry with respect to any translation of the lattice by $v \in \mathcal{G}_0$. The selection probabilities are different, however, as $U_{\text{loc}}$ entries include an additional exponentially decaying term in the numerator denoted by $\gamma_l(G_v)$. The resulting LCU, with unitaries corresponding to the last line of the equation, is given by

$$U_{\text{loc}} = \sum_{j=1}^{\eta} \sum_{v \in \mathcal{G}_0} \sum_{l=1}^{L} \frac{2\pi |\gamma_l(G_v)|}{\Omega G_v^2} \sum_{b \in \{0,1\}} \sum_{q \in \mathcal{G}} \left( (-1)^{\text{sgn}(\gamma_l(G_v))} e^{i G_v \cdot R_I} (-1)^{b[(q-v) \notin \mathcal{G}]+1} |q-v\rangle \langle q|_j \right)$$

$$(39)$$

where

$$\gamma_l(G_v) := \left( e^{-(G_v^2 r_{\text{loc}}^2)/2} \left( -Z_{\text{ion}} + (C_1 + 3C_2) \frac{\sqrt{\pi} r_{\text{loc}}^3 G_v^2}{2} - C_2 \frac{\sqrt{\pi} r_{\text{loc}}^5 G_v^4}{2} \right) \right)$$

$$(40), 41$$

The parameters $r_{\text{loc}}$, $C_1$, $C_2$ were previously introduced in Eq. (27). They depend on the atomic type $t_l$, so the function $\gamma_l$ is determined by $t_l$. This fact can be used to change the notation to $\gamma_t$ when the context is clear.

*LCU for $U_{\text{NL}}$.* The main insight in deriving an LCU for the nonlocal term is to exploit the projector representation

**EP 4 414 899 A1**

of the operator as in Eq. (16). Each projection $e$ can then be broken down into the sum of unitaries $\frac{1}{2}\mathbb{I} - \frac{1}{2}(\mathbb{I} - 2P)$. This leads to a smaller $\lambda$ and more efficient strategies for the qubitization of $U_{\text{NL}}$. This decomposition also gives rise to the identity terms that lead to a shifted Hamiltonian. For convenience, $U_{\text{NL}}$ and $H$ are referred to by the same name after the shifting. A full derivation can be found in Section C - "LCU for $U_{\text{NL}}$," below, and the resulting LCU is given by:

$$U_{\text{NL}} = \sum_{j=1}^{\eta} \sum_{I,\sigma} |c_{I,\sigma}| (-1)^{\text{sgn}(c_{I,\sigma})} R(\boldsymbol{R}_I)^{\dagger} \left(\mathbb{I} - 2|\Psi_{I,\sigma}\rangle\langle\Psi_{I,\sigma}|\right) R(\boldsymbol{R}_I) \tag{42}$$

where

$$R(\boldsymbol{R}_I)|\boldsymbol{p}\rangle = e^{i\boldsymbol{G}_p \cdot \boldsymbol{R}_I}|\boldsymbol{p}\rangle \tag{43}$$

As before, the second line in the equation for the LCU are the unitaries in the decomposition. The parameter $c_{I,\sigma}$ is a complicated expression involving discrete Gaussian integrals. It depends on the atomic type $t_I$ and the Gaussian superposition type $\sigma$ that define $|\psi_{I,\sigma}\rangle$. There are eleven different choices for $\sigma \in \{0, \ldots ,10\}$. All corresponding Gaussian states are derived in Section C - "LCU for $U_{\text{NL}}$," below, with $|\psi_{I,\sigma}\rangle$ for $\sigma = 0$ shown in Eq. (29). Finally, $\text{sgn}(x) = 0$ if $x \geq 0$ and is equal to 1 otherwise, since the selection probabilities must be positive.

In some embodiments of the present disclosure, the LCUs may be generalizable. In some implementations, in Eq. (40), only $C_1$, $C_2$, are included and not the higher order terms in Eq. (27), e.g., since $C_3 = C_4 = 0$ for all case studies described herein. Nevertheless, the algorithm subroutines that are relevant to $\gamma_l(G_v)$ apply without changes to any material for which $C_3$, $C_4 \neq 0$.

In fact, the LCUs above are applicable to any pseudopotential as defined in Eqs. (A12) and (A19). Indeed, for the local term, the LCU is identical to Eq. (39). For the non-local term, if one includes more than one projector, then the LCU will involve more Gaussian superpositions $|\psi_{I,\sigma}\rangle$, some of which do not appear in the explicit derivation in Section C - "LCU for $U_{\text{NL}}$," below,. The generalization of subroutines can be straightforward as well, especially given the fact that QROM is used for the preparation of superpositions, where the functional defining the amplitudes could change according to the specific parameters of the pseudopotential.

**D. Breakdown of the qubitization subroutines**

The qubitization of $H = T + U_{\text{loc}} + U_{\text{NL}} + V$ is roughly broken down into that of each term. This means defining prepare and select subroutines for each of the four operators, for example, $\text{PREP}_T$ and $\text{SEL}_T$ for the kinetic energy term. This notation is used below to provide context. The PREP state of the qubitization Eq. (19) is introduced first, and the preparation and function of each register of the state are explained. An overview of how the registers interact with the $\text{SEL}_\chi$ operators is then presented.

Henceforth, 'AE' refers to the all-electron setting, with Hamiltonian $H = T + U + V$ given by Eqs. (6) to (8) and no assumption on the lattice. In the discussion of PREP and SEL, adjustments to the AE algorithm when the lattice is not orthonormal are discussed. The orthonormal lattice AE setting, hereafter referred to by 'OAE', has been qubitized in Delgado et al. and Su et al.

*1. Prepare operator (PREP)*

Below, the approximate PREP state for the pseudopotential Hamiltonian is shown, as implied by their LCUs in Eqs. (37) to (39) and (42). The error analysis is done in future sections. An example of a similar equation in the OAE setting is discussed in Su et al.

$$\text{PREP}_H |0\rangle = \tag{44}$$

14

$$\left( \sum_{\chi \in \{0,1\}^2} \sqrt{\frac{\lambda_\chi}{\lambda}} \, |\chi\rangle \right)_{\mathcal{X}}$$

$$(45)$$

$$\otimes \left( \sum_{\omega,\omega' \in \{1,2,3\}} \frac{\sqrt{|\langle \boldsymbol{b}_\omega, \boldsymbol{b}_{\omega'}\rangle|}}{\left\| \sum_{\omega,\omega' \in \{1,2,3\}} |\langle \boldsymbol{b}_\omega, \boldsymbol{b}_{\omega'}\rangle| \right\|} \, |\omega, \omega', \mathrm{sgn}(\langle \boldsymbol{b}_\omega, \boldsymbol{b}_{\omega'}\rangle)\rangle \right)_f$$

$$(46)$$

$$\otimes \left( \frac{1}{2^{n_p-1}-1} \sum_{r,s=0}^{n_p-2} 2^{(r+s)/2} |r\rangle_g |s\rangle_h \right)$$

$$(47)$$

$$\otimes |+\rangle_b \otimes \frac{1}{\sqrt{\eta}} \left( \sqrt{\eta-1} |0\rangle_c \sum_{i \neq j=1}^{\eta} |i\rangle_d |j\rangle_e + |1\rangle_c \sum_{j=1}^{\eta} |j\rangle_d |j\rangle_e \right)$$

$$(48)$$

$$\otimes \left( \sqrt{\frac{P_{v,V}}{\lambda_{v,V}}} |0\rangle_{j_V} \sum_{\boldsymbol{v} \in \mathcal{G}_0} \frac{1}{G_v} |\boldsymbol{v}\rangle_{k_V} + \sqrt{1-P_{v,V}} |1\rangle_{j_V} |\boldsymbol{v}^\perp\rangle_{k_V} \right)$$

$$(49)$$

$$\otimes \left( \frac{1}{\sqrt{\lambda_{v,\mathrm{loc}}}} \sum_{I,\boldsymbol{v} \in \mathcal{G}_0} \frac{|\gamma_I(G_v)|^{1/2}}{G_v} |\boldsymbol{v}\rangle_{k_{\mathrm{loc}}} |I\rangle_{k'_{\mathrm{loc}}} |\mathrm{sgn}(\gamma_I(G_v))\rangle_{s_{\mathrm{loc}}} \right)$$

$$(50)$$

$$\otimes \frac{1}{\sqrt{\sum |c_{I,\sigma}|^2}} \left( \sum_{I,\sigma} \sqrt{|c_{I,\sigma}|} |I\rangle_{k'_{\mathrm{NL}}} |\sigma\rangle_{k_{\mathrm{NL}}} |\mathrm{sgn}(c_{I,\sigma})\rangle_{s_{\mathrm{NL}}} \right)$$

$$(51)$$

Each register is denoted by a subscript, such as $X$ which labels the first register. While some known techniques (such as those in Su et al.) are leveraged to prepare some registers, there are also various adjustments and new registers, including the following:

- Four operators are qubitized instead of three.
- As the lattice is no longer orthonormal, the selection probabilities are more general, and in cases like $T$, they include the inner product of the reciprocal lattice vectors.
- When using pseudopotentials, the selection probabilities of the local term and $V$ are not proportional to each other, hence their corresponding momentum state superposition cannot be shared. This is in contrast to the AE case, where the momentum state superposition of $U$ and $V$ is shared.
- Finally, the preparation of the state in Eq. (50) for the local term is via QROM, instead of the usual inequality test involving quantum arithmetic as discussed in Su et al. The same holds for the register storing the amplitudes

$$\sqrt{|c_{I,\sigma}|}$$ for $U_{\text{NL}}$.

The following is a sketch of the preparation of the state of each register, with more details provided in Section E - "The Details of PREP and SEL," below.

1. The state of register $X$ is made of two qubits, and is a superposition prepared by QROM with amplitudes $\sqrt{\lambda_\chi/\lambda}$, where $\lambda_\chi$ is the sum of the selection probabilities of the LCU for $\chi$. $T$, $V$ are enumerated, with $\chi = 00,01$ and the pseudopotential terms $U_{\text{loc}}$, $U_{\text{NL}}$ with $\chi = 10,11$, respectively. This state enables control of the operator getting qubitized, and adjustment of the qubitization normalization factor. This means the desired $\frac{H}{\lambda} = \frac{T+U_{\text{loc}}+U_{\text{NL}}+V}{\lambda}$ is obtained instead of $\frac{T}{\lambda_T} + \frac{U_{\text{loc}}}{\lambda_{\text{loc}}} + \frac{U_{\text{NL}}}{\lambda_{\text{NL}}} + \frac{V}{\lambda_V}$.

2. The state f is made of 5 qubits, 2 for each of $\omega$, $\omega'$, and one storing sgn($\langle \boldsymbol{b}_\omega, \boldsymbol{b}_{\omega'}\rangle$). This is prepared using QROM and is a part of the PREP state of $T$.

3. The superposition in registers g, $h$ is the same one from OAE. It is prepared by implementing a unary state using controlled-Hadamards and bit flips. These two registers along with $f$, $b$, $e$ form the PREP state of $T$.

4. The state of register $b$ is given by the |+) eigenstate of Pauli $X$. It is used in the PREP state of $T$, $U_{\text{loc}}$, $V$, where the unitaries in the LCUs are signed permutations. Note that $b$ is not part of the PREP state of $T$ when the lattice is orthogonal (Remark III.1).

5. The states of registers $c$, $d$, $e$ also appear in the OAE setting, and form the necessary superposition over the electrons, which is needed as part of the PREP state of all four operators. The technique to prepare the uniform superpositions is followed by checking whether $i = j$, with the result stored in the additional qubit of register c. This breaks the state into a diagonal and nondiagonal superposition.

6. The superposition over the momentum $\boldsymbol{v}$ corresponding to $V$ is given in registers $j_V$, $k_V$. This is prepared via inequality test (Section D - "Inequality Test," below) followed by amplitude amplification to increase the probability of success flagged by $|0\rangle_{jv}$. The procedure is very similar to the OAE setting (as described in Su et al.), except that the more efficient method of QROM is used instead of quantum arithmetic to compute one side of the inequality test.

7. The superposition with registers $k_{\text{loc}}$, $k'_{\text{loc}}$, $s_{\text{loc}}$ corresponds to the momentum state of $U_{\text{loc}}$. The register $k'_{\text{loc}}$ enumerates all nuclei $I = (t, t_j)$. While for $V$ the similar superposition is created using an inequality test, according to simulations of some embodiments of the present disclosure, the exponentially small term $\gamma_I(G_v)$ makes the rejection of the inequality test happen too often. This leaves a probability of success that is too small, leading to excessive rounds of amplitude amplifications that increase the Toffoli cost. Therefore QROM is used to prepare almost the entire superposition. Note that $k_I$ only depends on the atomic type, so QROM prepares the superposition over register $k_{\text{loc}}$, $s_{\text{loc}}$ and the atomic type coordinate $t$ in the register $k'_{\text{loc}}$. What remains to be done is a uniform super-position over all nuclei $t_j$ of each type $t$, which can be created, for example, using a technique discussed in "Even More Efficient Quantum Computations of Chemistry Through Tensor Hypercontraction," J. Lee, et al., PRX Quantum 2, 030305 (2021), hereinafter "Lee et al.," the entire contents of which are incorporated by reference herein for all purposes.

8. The registers $k_{\text{NL}}$, $k'_{\text{NL}}$, $s_{\text{NL}}$ give a superposition for the PREP state of $U_{\text{NL}}$. The coordinate $I$ in register $k'_{\text{NL}}$ enumerates all nuclei, with the same splitting mentioned above for $k'_{\text{loc}}$. The index $\sigma$ denotes the type of the Gaussian superposition $|\Psi_{I,\sigma}\rangle$ that needs to be implemented by SEL$_{\text{NL}}$. To prepare Eq. (51), recall that $c_{I,\sigma}$ only depends on the atomic type $t_I$ and the Gaussian superposition type $\sigma$. Therefore, a QROM produces the superposition over

$$|t\rangle_{k'_{\text{NL}}}|\sigma\rangle_{k_{\text{NL}}}|\text{sgn}(c_{t,\sigma})\rangle$$ . Then a uniform superposition over the $t_j$ nuclei of type $t$ is implemented, giving the desired Eq. (51).

*Remark* III.2. When using QROM to prepare a superposition, one should be aware that due to error, the state prepared will involve basis states that may be 'inadmissible.' This depends on the context, and can be easily noticed and dealt with; for example, in register $f$ a basis state of the form 14, 1, 0$\rangle$ is inadmissible as $\omega \in \{1, 2, 3\}$. This basis state, however, may appear (with some small amplitude) as a result of using QROM for register f. These states may be flagged as inadmissible, to ensure a trivial (identity) action by SEL.

*2. Select operator (SEL)*

For some implementations of SEL (optionally excepting $\text{SEL}_{\text{NL}}$), adjustments are applied for non-orthonormal lattices and the different registers holding the momentum state for $U_{\text{loc}}$ and $V$ (as contrasted with known methods). Detailed explanation of $\text{SEL}_{\text{NL}}$ is set forth herein, as it is the operator with no similar precedent in the all-electron setting. Additional details on $\text{SEL}_{\text{NL}}$ are presented in Section E - "The Details of PREP and SEL," below.

There are some commonalities among all select operators, which are discussed below. The action of each operator is controlled on a register that flags the success of the state preparation for the corresponding operator. For instance, the state $|0\rangle_V$ means that the basis state that $\text{SEL}_V$ is about to act on is a part of the PREP state of $V$. Thus, $\text{SEL}_V$ must act by the corresponding unitary. Given $|1\rangle_V$, however, the operator must act by identity.

The second design shared by all select operators is a common CSWAP circuit and its inverse. This circuit first copies $|\boldsymbol{p}\rangle_i$ (controlled on $|i\rangle_d$) into an auxiliary register, swaps it back into its place after the relevant SEL operations are carried out, and then does the same for $|\boldsymbol{p}\rangle_j$ controlled on $|j\rangle_e$. This is to ensure that the SEL operations are all done on this one auxiliary register, obviating the need for the far more costly controlled operations directly on the system register. Notice that in the AE case, this is the costliest part of $\text{SEL}_H$.

The following describes how to implement each select operator, the sum of which is $\text{SEL}_H$, according to some embodiments.

1. $\text{SEL}_T$: The transformation is given by

$$\text{SEL}_T : |0\rangle_T|+\rangle_b|j\rangle_e|\omega, \omega', \text{sgn}(\langle \boldsymbol{b}_\omega, \boldsymbol{b}_{\omega'}\rangle)\rangle_f|r\rangle_g|s\rangle_h|\boldsymbol{p}\rangle_j \rightarrow$$

$$(-1)^{b(\boldsymbol{p}_{\omega,r}\boldsymbol{p}_{\omega',s}+1)+\text{sgn}(\langle \boldsymbol{b}_\omega, \boldsymbol{b}_{\omega'}\rangle)\boldsymbol{p}_\omega\boldsymbol{p}_{\omega'})}|0\rangle_T|+\rangle_b|j\rangle_e \otimes |\omega, \omega', \text{sgn}(\langle \boldsymbol{b}_\omega, \boldsymbol{b}_{\omega'}\rangle)\rangle_f|r\rangle_g|s\rangle_h|\boldsymbol{p}\rangle_j \ (52)$$

The action above is essentially a phase, which is a combination of multi-controlled Z gates. Notice that the sign of the inner products appearing in the phase is the term making the distinction from the OAE case.

2. $\text{SEL}_V$: The implementation follows the OAE setting:

$$\text{SEL}_V : |0\rangle_V|b\rangle_b|i\rangle_d|j\rangle_e|0\rangle_c|0\rangle_{j_V}|\boldsymbol{v}\rangle_{k_V}|\boldsymbol{p}\rangle_i|\boldsymbol{q}\rangle_j \rightarrow$$

$$(-1)^{b([(\boldsymbol{p}+\boldsymbol{v})\notin \mathcal{G}]\vee[(\boldsymbol{q}-\boldsymbol{v})\notin \mathcal{G}])}|0\rangle_V|b\rangle_b|i\rangle_d|j\rangle_e|0\rangle_c \otimes |0\rangle_{j_V}|\boldsymbol{v}\rangle_{k_V}|\boldsymbol{p}+\boldsymbol{v}\rangle_i|\boldsymbol{q}-\boldsymbol{v}\rangle_j$$

$$(53)$$

The addition and subtraction along with the phase implementation are all controlled on $|0\rangle_V$. The non-diagonal superposition $|i\rangle_d|j\rangle_e$ over the electrons, flagged by $|0\rangle_c$, is acted upon by $\text{SEL}_V$, while the rest of the SEL operators only act on the register.

3. $\text{SEL}_{\text{loc}}$: The operator acts in two main steps:

$$|0\rangle_{\text{loc}}|b\rangle_b|j\rangle_e|v\rangle_{k_{\text{loc}}}|I\rangle_{k'_{\text{loc}}}\left|\text{sgn}(\gamma_I(G_v))\right\rangle_{S_{\text{loc}}}|0\rangle_R|p\rangle_j \rightarrow$$

$$(-1)^{b[(p-v)\notin\mathcal{G}]}|0\rangle_{\text{loc}}|b\rangle_b|j\rangle_e|v\rangle_{k_{\text{loc}}}|I\rangle_{k'_{\text{loc}}}\left|\text{sgn}(\gamma_I(G_v))\right\rangle_{S_{\text{loc}}} \otimes |R_I\rangle_R|p-v\rangle_j$$

$$(54)$$

The first step illustrates a controlled sign, along with a controlled subtraction. It also shows a QROM that reads $|x\rangle_{\text{loc}}|I\rangle_{k'_{\text{loc}}}$ and outputs $R_I$ into the register $|\cdot\rangle_R$ only if $x = 0$. This is then used to implement the phase $e^{iG_v \cdot R_I}$.

$$\rightarrow e^{iG_v + R_I}(-1)^{b[(p-v)\notin\mathcal{G}]+\text{sgn}(\gamma_I(G_v))}|0\rangle_{\text{loc}}|b\rangle_b \otimes |j\rangle_e|v\rangle_{k_{\text{loc}}}|I\rangle_{k'_{\text{loc}}}\left|\text{sgn}(\gamma_I(G_v))\right\rangle_{S_{\text{loc}}}|0\rangle_R|p-v\rangle_j$$

$$(55)$$

Then, the register $R$ is erased by taking the inverse of the QROM, and the procedure is finished by applying $Z_{S_{\text{loc}}}$ controlled on $|0\rangle_{\text{loc}}$.

4. $\text{SEL}_{\text{NL}}$: The unitary from the LCU in Eq. (42) is

$$(-1)^{\text{sgn}(c_{I,\sigma})}R(R_I)^{\dagger}\left(\mathbb{I} - 2|\Psi_{I,\sigma}\rangle\langle\Psi_{I,\sigma}|\right)R(R_I)$$

$$(56)$$

Thus, after the initial CSWAPs that are shared by all select operators, the action starts with a phase, followed by a reflection, and lastly a phase and a sign action. Each stage is discussed below. Only the registers involved in each stage are presented. The first phase is applied as follows:

$$|0\rangle_{\text{NL}}|q\rangle_j|I\rangle_{k'_{\text{NL}}}|0\rangle_R \rightarrow$$

$$|0\rangle_{\text{NL}}|q\rangle_j|I\rangle_{k'_{\text{NL}}}|R_I\rangle_R \rightarrow$$

$$e^{iG_q \cdot R_I}|0\rangle_{\text{NL}}|q\rangle_j|I\rangle_{k'_{\text{NL}}}|R_I\rangle_R \qquad (57)$$

First a QROM reads $|x\rangle_{\text{NL}}|I\rangle_{k'_{\text{NL}}}$ and outputs $R_I$ into $|\cdot\rangle_R$ only if $x = 0$. Then the phase $e^{iG_q \cdot R_I}$ is applied, similar to how $e^{iG_v \cdot R_I}$ was applied for $U_{\text{loc}}$.

The next stage is to apply the reflection onto a Gaussian state $|\Psi_{I,\sigma}\rangle$. To do so, the state is prepared and the reflection is applied:

$$U_{I,\sigma}(\mathbb{I} - 2|0\rangle_{\text{NL}}|\mathbf{0}\rangle\langle\mathbf{0}|\langle0|_{\text{NL}})U_{I,\sigma}^{\dagger} \qquad (58)$$

where $U_{I,\sigma}|\mathbf{0}\rangle = |\Psi_{I,\sigma}\rangle$ acts on the same register as $|q\rangle_j$. Note that the reflection also includes the flag qubit $|0\rangle_{\text{NL}}$, ensuring that $\text{SEL}_{\text{NL}}$ acts by identity if the basis state has not been successfully prepared for the nonlocal term.

As this reflection is the costliest part of $\text{SEL}_H$, the selection of QROM for $U_{I,\sigma}$ is explained herein. First, a review of known alternatives justifies the usage of QROM. While the preparation of a discrete Gaussian state such as $|\Psi_{I,0}\rangle = \sum_p e^{-G_p^2 r_0^2/2}|p\rangle$ has been specifically treated in earlier works, in some embodiments higher order derivatives of such states are prepared:

$$\left|\Psi_{I,10}\right\rangle = \sum_{\boldsymbol{p}}\left(G_{p,2}G_{p,3}\right)e^{-G_p^2 r_2^2/2}\left|\boldsymbol{p}\right\rangle \tag{59}$$

Even for a diagonal covariance matrix, corresponding to an orthogonal lattice, known preparation methods are inefficient compared to QROM as it assumes an arithmetic oracle.

Furthermore, the specific case of a discrete Gaussian state with a non-diagonal covariance matrix has not been properly investigated and optimized. While some known approaches provide ideas such as simple basis changes, such algorithms do not yield the actual state in a cost-efficient way. Simulations demonstrate that more recent methods like the inequality test coupled with quantum arithmetics fail at providing a good balance of the product of number of qubits and number of gates. A more sophisticated preparation method called state preparation without coherent arithmetics is promising, but is also more complicated and provides less parallelization and qubit/gate trade-off opportunities.

Case studies set forth herein have either orthogonal or partially orthogonal lattices. The latter is when a reciprocal lattice vector is orthogonal to the other two. This crystallographic feature is prevalent among many materials of interest, including those utilized as cathode materials. For example, about half of the crystal structures available in the Materials Project database have orthogonal or partially orthogonal lattices. Assuming this, the Gaussian state can always be decomposed into the tensor product of three one-dimensional (1D) Gaussian states, or a 1D+2D Gaussian state, respectively. Since QROM cost rises exponentially with the number of read qubits, it is important to exploit this decomposition. As a result, for orthogonal (and partially orthogonal) lattices, one has three (or two) QROMs acting in parallel and all reading $n_p$ (or $n_p$ and $2n_p$) qubits, instead of one QROM reading $3n_p$ qubits. As an example of the decomposition, consider the following for Eq. (59) when the lattice is orthogonal:

$$\left|\Psi_{I,10}\right\rangle = \sum_{\boldsymbol{p}_1} e^{-G_{p,1}^2 r_2^2/2}\left|\boldsymbol{p}_1\right\rangle \otimes \sum_{\boldsymbol{p}_2} G_{p,2}\, e^{-G_{p,2}^2 r_2^2/2}\left|\boldsymbol{p}_2\right\rangle \otimes \sum_{\boldsymbol{p}_3} G_{p,3}\, e^{-G_{p,3}^2 r_2^2/2}\left|\boldsymbol{p}_3\right\rangle \tag{60}$$

Once the reflection in Eq. (58) is implemented on $\left|\boldsymbol{q}\right\rangle_j\left|0\right\rangle_j$, it leads to a superposition of the form $\sum_{\boldsymbol{p}}\phi_{I,\sigma}(\boldsymbol{p})\left|\boldsymbol{p}\right\rangle$ for some amplitudes $\phi_{I,\sigma}(\boldsymbol{p})$.

The final steps are (1) the application of the phase $e^{-iG_p\cdot R_I}$, which is done similar to its inverse at the beginning, (2) the erasure of $\boldsymbol{R}_I$ from the register $\boldsymbol{R}$ by the inverse of the QROM that created it, and (3) the Z gate $Z_{s_{\mathrm{NL}}}$ on $s_{\mathrm{NL}}$ controlled on $\left|0\right\rangle_{\mathrm{NL}}$. Focusing on the notable registers, the final result is:

$$(-1)^{\mathrm{sgn}(c_{I,\sigma})}\left|0\right\rangle_{\mathrm{NL}}\left|\sigma\right\rangle_{k_{\mathrm{NL}}}\left|I\right\rangle_{k'_{\mathrm{NL}}}\left|\mathrm{sgn}\!\left(c_{I,\sigma}\right)\right\rangle_{s_{\mathrm{NL}}} \otimes \left(\sum_{\boldsymbol{p}\in\mathcal{G}} e^{i(\boldsymbol{G}_q-\boldsymbol{G}_p)\cdot\boldsymbol{R}_I}\phi_{I,\sigma}(\boldsymbol{p})\left|\boldsymbol{p}\right\rangle_j\right) \tag{61}$$

### III. Error analysis and the effective value of $\lambda$

The quantum phase estimation algorithm targets a maximum total error $\varepsilon$. To achieve this, all sources of error may be identified, denoted by $\varepsilon_X$, in the algorithm. These errors are related to finite precision $n_X$-bit operations. The choice $n_X$ further determines the number of qubits and non-Clifford gates used in the algorithm, and is involved in identifying the *effective* value of the normalization factor $\lambda$ after qubitization.

Below, the different sources of error are discussed, and a discussion of how to compute $\lambda$ is provided. Detailed derivations are presented in Section H - "Derivation of $\lambda$" and Section I - "Error Analysis," below.

### A. Overview of errors and finite size approximations

Many errors are related to the precision of the rotation angles $\theta$ in Eq. (23) when building a superposition using QROM. Below, a complete list of all qubitization errors is presented:

1. $\varepsilon_\chi$ is the error due to using $n_\chi$ bits for the precision of the rotation angles necessary to build the superposition of register $X$ (Eq. (45)) using QROM.
2. $\varepsilon_B$ is a similar error, due to using $n_B$ bits, for preparing the superposition of register $f$ in Eq. (46).
3. $\varepsilon_k$ is the error, due to using $n_k$ bits in the QROM for building the PREP state for $U_{\mathrm{NL}}$ in Eq. (51).

4. $\varepsilon_{M_V}$ is the error, due to using $n_{M_V}$ bits in the QROM computing the inequality test for preparing the PREP state for $V$ in Eq. (49).

5. $\varepsilon_{M_{loc}}$ is the error, due to using $n_{M_{loc}}$ bits, for preparing the local PREP state Eq. (50) with QROM.

6. $\varepsilon_{NL}$ is the error, due to using $n_{NL}$ bits, for building the superpositions $|\Psi_{l,\sigma}\rangle$ using QROM.

7. $\varepsilon_R \leq \varepsilon_{R,loc} + \varepsilon_{R,NL}$ is the error due to the finite size register $n_R$ used to represent $R_l$ in register $R$ for the implementation of $SEL_{loc}$ and $SEL_{NL}$.

Finally, let $\varepsilon_{pha}$ be the error from quantum phase estimation. To achieve an approximation $\varepsilon$ of the ground state energy, it is necessary and sufficient that:

$$\varepsilon^2 \geq \varepsilon_{pha}^2 + \left(\varepsilon_\chi + \varepsilon_B + \varepsilon_k + \varepsilon_R + \varepsilon_{M_V} + \varepsilon_{M_{loc}} + \varepsilon_{NL}\right)^2$$

$$(62)$$

The proof follows a similar argument to the OAE setting.

Each $\varepsilon_\chi$ is upper bounded by an expression depending on $n_\chi$. This, in turn, shows the value desired to select for $n_\chi$ to obtain an error $\varepsilon_\chi$. Estimations of all errors are presented in Section I - "Error Analysis," below, with results summarized in Table VI. As an example, following the error estimation Lemma 1.1 for QROM, it can be shown that:

$$\varepsilon_\chi \leq \frac{4\pi}{2^{n_\chi}}\lambda$$

$$(63)$$

which implies that

$$n_\chi = \left\lceil \log\left(\frac{4\pi\lambda}{\varepsilon_\chi}\right) \right\rceil$$

$$(64)$$

gives an error less than or equal to $\varepsilon_\chi$

**B. The effective value of $\lambda$**

The value of $\lambda$ determines the scaling in the block-encoding of $H$ and is a significant factor in the cost that is highly dependent on the chosen LCU and compilation strategy. Therefore, its accurate computation is highly desired. Given that the algorithm only achieves an approximation of the PREP state, the resulting $\lambda$ is closely related, but different, from the theoretical one implied by the LCUs.

Computing the effective $\lambda$ requires finding the effective one for each of the four operators $T$, $U_{loc}$, $U_{NL}$, $V$. To do so, one may identify any failure/success probability embedded in a PREP implementation. Here, failure refers to a basis state itself being inadmissible. This appears in multiple instances such as when preparing a uniform superposition over a basis that is not a power of two, or when an inequality test is rejected.

Even upon success, the obtained amplitudes are usually different from the desired ones. For example, an inequality test can be used to prepare amplitudes $G_V^{-1}$ for Eq. (49), and after success, one obtains a complicated expression approximating $G_V^{-1}$ (see Eq. (110)).

Overall, the $\lambda$ for each operator will roughly look like a sum of effective selection probabilities divided by a product of success probabilities, i.e. $\Sigma \; \tilde{\alpha}_\ell / \Pi \; P_{success}$. Then the effective total value $\lambda = \lambda_T + \lambda_{loc} + \lambda_{NL} + \lambda_V$ can be derived. This is performed as shown in Section H - "Derivation of $\lambda$," below, and the values of $\lambda_\chi$ are summarized in Table V. As an example, $\lambda_T$ is shown below. This is computed after the compilation of the LCU of $T$ in Eq. (37). In the numerator of the expression below, the explicit value for $\Sigma \; \tilde{\alpha}_\ell$ is provided, and in the denominator, the success probability related to the preparation of the uniform superposition over pairs of electrons in Eq. (48) is given by:

$$\lambda_T = \frac{\eta 2^{2n_p - 3} \Sigma_{\omega,\omega' \in \{1,2,3\}} |\langle b_\omega, b_{\omega'}\rangle|}{Ps(\eta, b_r)^2}$$

$$(65)$$

**IV. Gate and qubit costings**

Having described the main steps of the algorithm and identified the sources of error, the number of Toffoli gates is now quantified, as well as the number of qubits desired to run the full procedure. Toffoli gates are used since, in some embodiments of the present disclosure, they constitute the bulk of non-Clifford gates used in the algorithm.

**A. Gate costings**

As the compilation involves numerous different strategies, and each require a separate cost estimate, all Toffoli costings calculations have been gathered in Table VII, and the derivation of each is demonstrated in Section J - "Gate Costings." Below, the rough estimate for the cost of a qubitization-based QPE algorithm is recalled:

$$\left\lceil \frac{\pi\lambda}{\varepsilon} \right\rceil (2\mathrm{PREP}_{\mathrm{cost}} + \mathrm{SEL}_{\mathrm{cost}}) \qquad (66)$$

where the qubitization costs of PREP and SEL have been added. The multiplicative factor $\lambda/\varepsilon$ is the largest contributor to the total cost. For example, for a system with $N = 10^5$ plane waves and a hundred electrons (Table VIII), this fraction gives a factor of $10^9$ while the qubitization cost contributes orders of magnitude fewer gates ($\sim 10^5$).

While there are big-$O$ estimates for the cost of the AE algorithm, it is hard to derive such expressions for the pseudopotential-based algorithm. The QROMs cost (Table I) involve scalars and parameters like $\beta$, determined by constraints on space-time trade-off, which can dramatically alter the costs. In some embodiments of the present disclosure, the two most costly subroutines in the PREP and SEL part of the algorithm (and thus, candidates for further refinement / optimization) are:

- Preparing $\sum_{I,\nu} \frac{|\gamma_I(G_\nu)|^{1/2}}{G_\nu} |\nu, I, \mathrm{sgn}(\gamma_I(G_\nu))\rangle$, part of the PREP of the local term,
- the reflection on the Gaussian superpositions $|\Psi_{I,\sigma}\rangle$, part of the SEL of the nonlocal term.

In simulations of the present disclosure, each of these constitutes the largest share of $\mathrm{PREP}_{\mathrm{cost}}$ and $\mathrm{SEL}_{\mathrm{cost}}$. While $\mathrm{SEL}_{\mathrm{cost}}$ is slightly cost-dominant for a smaller number of plane waves, the trend is reversed as $N$ grows to $10^5$. Therefore, one significant obstacle in optimizing the qubitization algorithm is the preparation of Eq. (50) where $\gamma_I(G_\nu)$ is the arithmetically involved term in Eq. (40).

**B. Qubit costings**

The list of qubit costings is rather long, and while an estimate equation was given in Delgado, et al. for the orthogonal AE case, a more accurate listing and analysis are presented in Section K - "Qubit Costings," below, by reusing any un-computed and clean qubit whenever possible. A distinction is made between clean and dirty qubits as the latter are implicated in QROMs. This is done for both the AE and the pseudopotential-based algorithm.

As can be observed from the results in Section VI, the overwhelming contribution, in the context of counting, is the size of the system register $3\eta n_p$. As an example, the total clean qubit cost for simulating a system of 408 electrons with $N = 10^5$ plane waves is about 9808, while the system register requires $3\eta n_p = 3 \cdot 408 \cdot 6 = 7344$ clean qubits (Table XI).

**V. Application: lithium-excess cathode materials**

In this section, the simulation of Li-excess cathode materials is discussed, since they offer one of the most promising avenues to significantly increase the capacity of current batteries. They, however, show a quick capacity loss upon cycling which prevents their practical application. Furthermore, the computational simulations of these materials possess formidable challenges to classical electronic structure methods defining an area where the application of quantum computing can be impactful to advance current battery technologies.

A strategy to achieve higher-capacity cathodes consists of replacing a fraction of the transition metals in traditional oxide cathodes with lithium (Li) atoms. This results in the so-called lithium-excess (Li-excess) materials. Typical layered Li-excess materials have general formulae $Li_{1+x}M_{1-x}O_2$, (M denotes a mixture of $3d$ transition metals) and $Li_2MO_3$ (M = $Mn^{4+}$, $Ru^{4+}$) [10, 17, 52, 53]. More recently, disordered rocksalt materials such as the oxyfluoride $Li_2MnO_2F$ have also been proposed to design higher-capacity cathodes.

Li-excess materials can potentially double the specific capacity, i.e., the total amount of charge stored per unit mass, of traditional cathodes. For example, $Li_2MnO_3$ has a theoretical capacity of 460 mAh g$^{-1}$ responsible for the high voltage of ~4 V. This yields a specific energy of (460 mAh g$^{-1}$ × 4 V) = 1840 Wh kg$^{-1}$ which is well above the required specific energy (800 Wh kg$^{-1}$ at the cathode material level) to enable full driving performance and significant cost reduction of electric vehicles. The experimental results for this material, however, reveal average voltages of ~ 3.8 V and a much smaller capacity of about 180 mAh g$^{-1}$ after the first charging cycle. This voltage decay and abrupt capacity loss, which is common to other Li-excess materials, is an important obstacle to designing higher-capacity batteries.

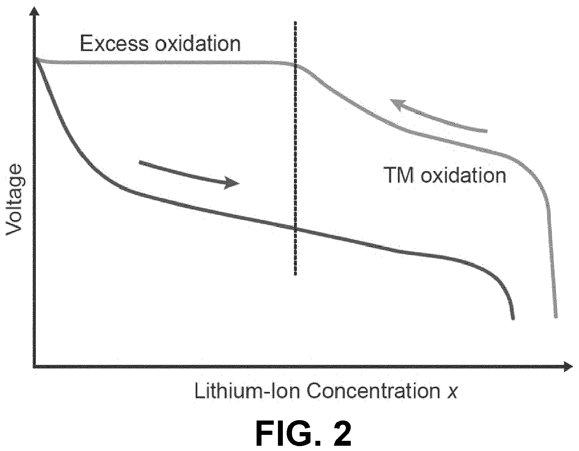

The voltage profile of a cathode material, i.e., the voltage $V(x)$ measured as a function of the concentration of the Li ions $x$, provides relevant information about the Li insertion process. A typical voltage profile of Li-excess materials is sketched in FIG. 2. A distinguishing feature of this profile is a long plateau region following the initial sloping curve during charge. This is indicative of the cathode material transitioning from a solid solution phase to a region where two phases of the material coexist. Moreover, the hysteresis loop reveals that removal of Li ions is accompanied by irreversible structural transformations causing the capacity loss experimentally observed in Li-excess cathodes.

During charge, Li ions are extracted from the cathode material and charge-compensating electrons, typically provided by transition metals, flow to the external circuit. The capacity gain of Li-excess materials has been mainly attributed to the oxidation of oxygen anions ($O^{2-} \rightarrow O^{n-}$, $n < 2$) (anion redox) in the local Li-O-Li configurations appearing in the structure of the enriched cathode. This particular atomic coordination leads to higher-energy bands made of unhybridized oxygen $p$-type orbitals from which electrons are preferentially extracted in the plateau region (see the voltage profile for Li-excess materials in FIG. 2).

Different redox mechanisms as well as their relation with structural transformations degrading the performance of Li-excess materials have been extensively studied. Despite the fact that important questions in this area remain open, there seems to be consensus that the increase of oxygen hole states and lithium vacancies destabilizes the metal-oxide chemical bond leading to the formation of oxygen dimers. Furthermore, oxygen dimerization cooperatively favors the migration of transition metals to Li-vacancy sites in the structure, which is the main process driving the structural transformations in Li-excess materials.

It follows that identifying the most stable phases of the cathode material in the excess region during charge is crucial to elucidate the dominant redox mechanisms and, more importantly, to envisage potential strategies (e.g., doping) to retain a higher reversible capacity. The relevant quantity to rank the stability of possible phases of the delithiated material is the formation energy computed for a given Li-ion concentration. For example, in the case of $Li_2MnO_3$, this is given by:

$$E_f(x) = E(\mathrm{Li}_x\mathrm{MnO}_3) - \frac{x}{2}E(\mathrm{Li}_2\mathrm{MnO}_3) - \left(1 - \frac{x}{2}\right)E(\mathrm{Li}_0\mathrm{MnO}_3), \tag{67}$$

where $E(\mathrm{Li}_x\mathrm{MnO}_3)$ is the ground-state energy of the material in a given phase, and $E(\mathrm{Li}_2\mathrm{MnO}_3)$ and $E(\mathrm{MnO}_3)$ are respectively the total energies of the stable reference materials at the end points of the charging curve ($x = 2$ and $x = 0$). The difference between the formation energies of different phases is typically on the order of milli-electronvolts (1 meV $\approx$ 0.04 mHa), which sets the required accuracy for computing the energies entering Eq. (67).

The release of molecular oxygen $O_2$ upon Li extraction has been observed in experiments and also theoretically predicted. Quite recently, the stability of the delithiated phases of the disordered rocksalt $Li_2MnO_2F$ material have been studies, and it was found that formation of $O_2$, following transition metal migration, is the dominant redox mechanism. The thermodynamic driving force towards this reaction is the oxygen-vacancy formation energy, defined as:

$$E_{O_2}(x) = E(\mathrm{Li}_x\mathrm{MnO}_{2-\delta}\mathrm{F}) - E(\mathrm{Li}_x\mathrm{MnO}_{2-\delta}\mathrm{F}) + \frac{\delta}{2}E(O_2), \tag{68}$$

where $\delta$ denotes the number of oxygen atoms removed per formula unit and $E(O_2)$ is the ground-state energy of the oxygen molecule.

Different strategies have been proposed to mitigate the capacity loss of Li-excess materials. Many of them rely on modifying the composition or/and the atomic structure of the material to suppress the transition-metal (TM) migrations in the delithiated cathode. To that aim, computing accurate site energies, i.e., the ground-state energy of the material as the transition-metal occupies different lattice sites, has proven to be useful. Furthermore, from the ground-state energy of the transition state (TS) of the material along the TM migration path, it is possible to compute the activation energy $E_{TS} - E_0$ to describe the kinetic pathways and, crucially, determine the reversibility of the structural transformations of the material.

The accuracy of the electronic structure method to simulate Li-excess materials is important, as it impacts the entire computational methodology used to investigate these materials. The total energies entering Eqs. (67-68) are computed using approximate density functional methods. The stable phases of Li-excess materials are predicted using a cluster expansion method combined with density functional theory (DFT), typically, at the level of the generalized gradient approximation (GGA) to the exchange-correlation density functional. These calculations can be further corrected using a DFT+$U$ method to mitigate the self-interaction error introduced by GGA functionals. The optimal value for the $U$ parameter, however, is not known *a-priori* and is strongly system-dependent. More accurate simulations can be performed using a Heyd-Scuseria-Ernzerhof (HSE) hybrid functional (see, e.g., "Efficient Hybrid Density Functional Calculations in Solids: Assessment of the Heyd-Scuseria-Emzerhof Screened Coulomb Hybrid Functional," J. Heyd, et al., J. Chem. Phys. 121, 1187

(2004), hereinafter "Heyd et al.," the entire contents of which are incorporated by reference herein for all purposes). Hybrid functionals, however, have two notable disadvantages. First, they are significantly more expensive from a computational point of view since the two-electron exchange integrals have to be evaluated. This prevents its use to screen the most stable phases of the material where a large number of cation configurations needs to be explored. Second, finding the optimal value of the parameter mixing the parametrized and exact exchange contributions is not straightforward in the absence of experimental references. State-of-the-art simulations adjust this parameter to reproduce the band gap of the material obtained from higher-order yet approximated calculations, and tiny variations of the mixing parameters may translate into significant errors of the benchmarked quantity.

More generally, simulating the redox mechanisms in Li-excess materials poses additional challenges to current DFT methods since they are expected to describe accurately the interplay between the cation and anion redox processes. DFT approximations must remain very accurate to compute the formation energies of different phases of the cathode material containing O-O dimers in highly oxidized transition-metal environments. For example, it has been noted that while the recently proposed SCAN functional can predict properly the chemical stability of O-O bonding environments, it is less reliable than the DFT+$U$ approach to simulate transition metal compounds. This reveals that having access to full first-principles methods to simulate Li-excess materials is imperative to advance the use of these promising materials.

### VI. Resource estimation

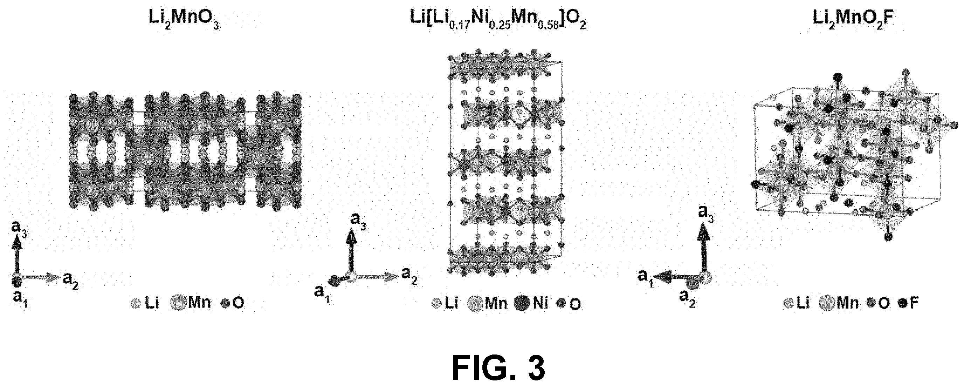

The number of qubits and Toffoli gates desired to implement a pseudopotential-based algorithm, in accordance with some embodiments of the present disclosure, is estimated for three different Li-excess materials: lithium manganese oxide ($Li_2MnO_3$), lithium nickel-manganese oxide ($Li[Li_{0.17}Ni_{0.25}Mn_{0.58}]O_2$), denoted as LLNMO, and lithium manganese oxyfluoride ($Li_2MnO_2F$). The atomic models representing their structures are shown in FIG. 3. In all cases, expansions of the conventional unit cell have been used to generate the supercells used in actual simulations. The details about the generated structural models are described in Section B - "Description of Li-Excess Materials Structure," below.

Table II summarizes the main parameters for the chosen delithiated phases of the materials. For $Li_{0.5}MnO_3$, the position of the Mn atoms in the pristine structure was first modified to generate the spinel-like phase, and then the material is delithiated. The structural model for the LLNMO material corresponds to the most stable structure of the $Li_{0.75}[Li_{0.17}Ni_{0.25}Mn_{0.58}]O_2$ material. Similarly, one Li layer was removed from the structural model to estimate the resources to compute the site energies. Finally, the structural model for the delithiated $Li_{0.75}MnO_2F$ material was obtained by randomly taking Li ions off the pristine material until the Li-ion concentration $x = 0.75$ was matched.

To determine the number of plane waves necessary to perform calculations using the HGH pseudopotential, convergence of absolute energies was performed with respect to cutoff kinetic energies within the Quantum Espresso package. The cutoff energy tells us about the number of plane wave functions being utilized as basis functions. For the cases presented here, the convergence energy was calculated without applying structure relaxation as this would not greatly affect the total number of plane waves needed to achieve convergence. For the all-electron case, the number of plane waves was obtained within the (L)APW+lo method as implemented in the WIEN2k code. Within this method, the most important parameters that have to be considered are the muffin-tin radii ($R_{MT}$) and the plane-wave cutoff for the expansion of the wave function in the interstitial region. Since the muffin-tin spheres are not allowed to overlap within this framework, the smallest possible nearest neighbor distance has to be estimated to obtain an upper limit for $R_{MT}$. With respect to this upper limit, the muffin-tin radii should always be chosen as large as possible to minimize the interstitial region, which reduces the number of required plane waves and thus the computational cost.

After obtaining Table II, the Toffoli depth and logical qubit cost of algorithms of the present disclosure (in accordance with some embodiments) can be measured. These estimates are benchmarked against the all-electron setting for the materials shown in Table II. Same results were also shown by Delgado et al. for the dilithium iron silicate $Li_2FeSiO_4$. The cost of performing one round of quantum phase estimation is reported, however the total cost may also include the overhead due to a limited overlap of the initial state and the cost of initial state preparation. The T-gate cost can also be considered, however this cost is expected to be at least an order of magnitude lower than that of the qubitization-based QPE (see, e.g., Delgado et al.).

## A. Criteria for resource estimation

Some of the parameters and criteria involved in resource estimation are explained in Section N - "Resource Estimation Configuration and Detailed Results," below.

Table II dictates the number of plane waves. Using pseudopotentials, convergence of energies can be achieved with roughly $6 \times 10^4$ plane waves. For the all-electron calculations, approximately $7 \times 10^8$ plane waves are desired to achieve convergence.

Depth is also computed for the following reasons. First, compared to other state preparation methods, QROM offers far more space-depth trade-off flexibility which can be leveraged. Second, given the high costs of the algorithms, it is not unreasonable to assume simultaneous Toffoli applications for a capable hardware running these algorithms in reasonable time. Third, depth is the first step in measuring the more practically relevant but harder-to-compute total runtime.

To estimate the Toffoli depth, one has to specify certain allowances: the maximum number $n_{dirty}$ of dirty qubits available for QROM, and the maximum allowed number $n_{parallel}$ of simultaneous Toffoli applications. These choices then determine subroutine-dependent parameters such as $\beta$, $\kappa$, the latter a parallelization factor, to compute the QROM costs. For the sake of simplicity, $\kappa = 1$ is presented for all subroutines, as minimal change in the cost for other values of $\kappa$ is observed. $n_{dirty}$ is set equal to the number of clean qubits that the all-electron algorithm needs for the same number of plane waves, allowing for a fair comparison, and $n_{parallel}$ is set to 500, ensuring that the pseudopotential algorithm with optimized depth uses as much as possible the available dirty qubits. The success probability threshold for preparing Eq. (49) is set to $p_{th} = 0.75$ for all pseudopotential experiments. For the AE setting, given that the algorithm has slight variations depending on the initial probability of success, a $p_{th}$ is selected that gives the lowest Toffoli depth. Lastly, the algorithm must target chemical accuracy $\varepsilon = 0.043eV$. As all errors except $\varepsilon_{pha}$ contribute polylogarithmically to the cost, 99.5% of the total allowed error $\varepsilon$ is allocated to $\varepsilon_{pha}$, and the rest is distributed equally among other errors while satisfying Eq. (62).

FIG. 3 shows a representation of the atomic structures of the Li-excess materials selected to perform the resource estimation of the quantum algorithm. These structural models correspond to the supercells described in Table II. These figures were generated using the VESTA 3D visualization program.

TABLE II. Crystal lattice parameters for the materials selected to perform the resources estimations. $\eta$ denotes the number of electrons in the supercell structural models and $N$ is the number of plane waves required to converge the ground-state energy of the material at the level of density functional theory. The superscripts PP and AE are used to differentiate between the pseudopotential and all-electron cases, respectively.

| Material | $Li_{0.5}MnO_3$ | $Li_{0.75}[Li_{0.17}Ni_{0.25}Mn_{0.58}]O_2$ | $Li_{0.75}MnO_2F$ |
|---|---|---|---|
| Crystal system / space group | Monoclinic / [C 2/m] | Hexagonal / [P6$_3$mc] | Cubic / [Fm3m] |
| Supercell size | $2 \times 2 \times 1$ | $2 \times 3 \times 2$ | $3 \times 2 \times 2$ |
| Lattice vectors (Å) | $\vec{a}_1 = (10.02, 0, 0)$ $\vec{a}_2 = (0, 17.32, 0)$ $\vec{a}_3 = (-1.6949, 0, 4.7995)$ | $\vec{a}_1 = (5.7081, 0, 0)$ $\vec{a}_2 = (-4.2811, 7.4151, 0)$ $\vec{a}_3 = (0, 0, 19.6317)$ | $\vec{a}_1 = (12.48, 0, 0)$ $\vec{a}_2 = (0, 8.32, 0)$ $\vec{a}_3 = (0, 0, 8.32)$ |
| Supercell volume (Å$^3$) | 832.9405 | 830.9604 | 863.8955 |
| $N_{atoms}$ | 72 (8 Li, 16 Mn, 48 O) | 90 (22 Li, 14 Mn, 6 Ni, 48 O) | 76 (12 Li, 16 Mn, 16 F, 32 O) |
| $\eta^{PP}$ ($\eta^{AE}$) | 408 (808) | 468 (968) | 428 (836) |
| $N^{PP}$ ($N^{AE}$) | 55,473 (5.8 $\times$ 10$^8$) | 67,767 (8.7 $\times$ 10$^8$) | 57,655 (6.4 $\times$ 10$^8$) |

## B. Results

The resource estimation results are shown in Table III. In some embodiments of the present disclosure, code allows computation of the resources of both the PP-based and AE algorithms for any material, given the aforementioned parameters. In all cases, it can be seen that the pseudopotential-based algorithm is the better alternative. In fact, the algorithms compare even when using the same number of planewaves; For $Li_{0.5}MnO_3$ and $N = 10^5$, the Toffoli depth for PP is 1.01e15, and for AE is 1.63e15 (Table XI). There are multiple reasons behind this. First, the number of electrons

$\eta^{PP}$ is about half of the all-electron case. Second, $\lambda_{loc}$ involves the exponentially decaying factor $e^{-G_\nu^2 r_{loc}^2/2}$, while $\lambda_{NL}$ has similar factors, all leading to an even lower value of $\lambda$. Finally, as a result of LCU choices and subroutine selections like QROM, the cost of PREP and SEL can be controlled, making it about 2-4 times higher than those of AE for the same number of planewaves.

TABLE III. Resource estimation using $N^{PP}$ and $N^{AE}$ plane waves as specified in Table II for the PP and AE algorithms, respectively. For $Li_2FeSiO_4$, $N^{PP} = 19,549$ and $N^{AE} = 5.46e17$. Preferable numbers are indicated in bold.

| Material | Qubit cost PP / AE | Toffoli cost PP / AE |
|---|---|---|
| $Li_{0.5}MnO_3$ | **9808** / 24974 | **$5.00 \times 10^{15}$** / $2.16 \times 10^{19}$ |
| $Li_{0.75}[Li_{0.17}Ni_{0.25}Mn_{0.58}]O_2$ | **11130** / 29784 | **$4.84 \times 10^{15}$** / $3.67 \times 10^{19}$ |
| $Li_{0.75}MnO_2F$ | **10260** / 26629 | **$3.87 \times 10^{15}$** / $1.18 \times 10^{19}$ |
| $Li_2FeSiO_4$ | **2650** / 4859 | **$6.38 \times 10^{13}$** / $1.59 \times 10^{17}$ |

## VII. Summary Comments

The present disclosure, according to various embodiments, introduces the first example of a quantum algorithm that makes use of ionic pseudopotentials to simulate periodic materials. Important technical contributions include a collection of highly optimized compilation strategies for qubitization-based quantum phase estimation in first quantization, designed to reduce the cost of implementing the algorithm despite the mathematical complexity of pseudopotential operators. In some implementations, quantum read-only memories (QROMs) are used to avoid performing complicated arithmetic operations on a quantum computer. This can facilitate the navigation of tradeoffs between the number of qubits and number of gates in the algorithm, which can be exploited to reduce cost. Overall, the cost of the quantum algorithm is reduced by about four orders of magnitude compared to the all-electron approach when applied to simulating lithium-excess materials for a fixed target accuracy of the ground-state energy.

It is noted that using pseudopotentials can introduce an approximation. The work presented in the present disclosure leverages extensive benchmarking by the density functional theory community that identifies generalized separable pseudopotentials as being accurate and transferable. Nevertheless, given the intended high accuracy of quantum algorithms, efforts can be made to ensure that errors derived from such descriptions are well identified and mitigated. For instance, the use of only one projector (i.e., only one reference energy) in the construction of the pseudopotential can potentially cause errors in describing the partitioning of the electrons into core and valence due to the presence of semi-core states (e.g. partly-filled 3$d$ orbitals). Additionally, when extending the algorithm to other pseudopotentials, different challenges may arise and attention must be paid to make sure that the benefits of employing pseudopotentials are preserved. For example, the utilization of an ultrasoft pseudopotential could potentially reduce the number of plane waves needed in the basis set as well as transferability, as observed in classical algorithms. The results presented in this disclosure can be naturally extended to ultrasoft pseudopotentials.

Using these tailored quantum algorithms, the number of qubits and Toffoli gates needed to implement pseudopotential-based quantum phase estimation algorithms for relevant Li-excess materials proposed in the literature were estimated. In each of these cases, a large supercell is used to ensure the quality of the simulation, which increases the cost of the all-electron approach, making the use of pseudopotentials even more important. On the other hand, even though the algorithm is applicable to any lattice, it benefits from the orthogonality of the lattice vectors, as this reduces the cost of QROM techniques for preparing relevant Gaussian superposition states. It is desirable to study strategies where the cost of implementing the quantum algorithm is less dependent on the specific structure of the lattice.

The present disclosure demonstrates the usefulness and applicability of pseudopotentials in quantum algorithms. To compute properties of materials involving large unit cells, and thus a large number of electrons, a reduction in the total cost of the quantum algorithm is imperative. This can be achieved by introducing pseudopotentials, and the present disclosure shows that it is possible to tame their mathematical complexity, leading to more efficient quantum algorithms. This potentially unlocks a direction to further improve quantum algorithms to simulate the materials of the future.

## A. Plane wave matrix elements of the pseudopotential operator

In this section, expressions are derived for computing the matrix elements of the local and non-local components of the pseudopotential operator described in Section IIA - "Plane Wave Matrix Elements of the Hartwigsen-Goedecker-Hutter Pseudopotential" in the basis of plane wave functions defined in Eq. (3).

## 1. Matrix elements of the local potential

For an ion located at the coordinates $\boldsymbol{R}$, the matrix element of the local potential is defined by the integral

$$u_{pq}^{\mathrm{loc}}(\boldsymbol{R}) = \frac{1}{\Omega} \int d\boldsymbol{r}^3 u^{\mathrm{loc}}(\|\boldsymbol{r} - \boldsymbol{R}\|) e^{i\boldsymbol{G}_\nu \cdot \boldsymbol{r}}, \qquad (A1)$$

where $\boldsymbol{G}_v = \boldsymbol{G}_q - \boldsymbol{G}_p$. By changing the variable $\boldsymbol{r} \to \boldsymbol{r} + \boldsymbol{R}$ one obtains:

$$u_{pq}^{\mathrm{loc}}(\boldsymbol{R}) = \frac{1}{\Omega} e^{i\boldsymbol{G}_\nu \cdot \boldsymbol{R}} \int d\boldsymbol{r}^3 u^{\mathrm{loc}}(r) e^{i\boldsymbol{G}_\nu \cdot \boldsymbol{r}}. \qquad (A2)$$

In spherical coordinates, the integral above transforms as:

$$u_{pq}^{\mathrm{loc}}(\boldsymbol{R}) = \frac{2\pi}{\Omega} e^{i\boldsymbol{G}_\nu \cdot \boldsymbol{R}} \int_0^\infty dr \; u^{\mathrm{loc}}(r) \int_0^\pi d\theta \cos(G_\nu r \cos(\theta)) \; r^2 \sin(\theta). \qquad (A3)$$

For integrating the angular variable, one can use:

$$\cos[G_\nu r \cos(\theta)] r^2 \sin(\theta) = r \frac{d}{d\theta} \left[ -\frac{\sin(G_\nu r \cos(\theta))}{G_\nu} \right], \qquad (A4)$$

which simplifies Eq. (A3) to the integral over the radial variable:

$$u_{pq}^{\mathrm{loc}}(\boldsymbol{R}) = \frac{4\pi}{\Omega} e^{i\boldsymbol{G}_\nu \cdot \boldsymbol{R}} \left[ \frac{1}{G_\nu} \int_0^\infty dr \; r \; u^{\mathrm{loc}}(r) \sin(G_\nu r) \right]. \qquad (A5)$$

Note that Eq. (A5) is general and it can be used to compute the matrix element of any given parametrized local potential. For the case of the Hartwigsen-Goedecker-Hutter (HGH) pseudopotential, Eq. (24) may be inserted into Eq. (A5) to obtain the following expression:

$$u_{pq}^{\mathrm{loc}}(\boldsymbol{R}) = \frac{4\pi}{\Omega} e^{i\boldsymbol{G}_\nu \cdot \boldsymbol{R}} \left[ \frac{-Z_{\mathrm{ion}}}{G_\nu} \int_0^\infty dr \; \mathrm{erf}(\alpha r) \sin(G_\nu r) + \sum_{i=1}^4 \frac{C_i}{G_\nu} \int_0^\infty dr \; r \; (\sqrt{2}\alpha r)^{2i-2} e^{-(\alpha r)^2} \sin(G_\nu r) \right].$$

$$(A6)$$

The first integral is computed as follows:

$$-\frac{Z_{\mathrm{ion}}}{G_\nu} \int_0^\infty dr \; \mathrm{erf}(\alpha r) \sin(G_\nu r) = -\frac{Z_{\mathrm{ion}} e^{-G_\nu^2 \alpha^{-2}/4}}{G_\nu^2}. \qquad (A7)$$

To evaluate the second term, the following integrals are computed:

$$\frac{C_1}{G_\nu} \int_0^\infty dr \; r \; e^{-(\alpha r)^2} \sin(G_\nu r) = C_1 \frac{\sqrt{\pi}}{2} r_{\mathrm{loc}}^3 e^{-(G_\nu r_{\mathrm{loc}})^2/2}$$

$$\text{(A8)}$$

$$\frac{2C_2}{G_\nu} \int_0^\infty dr \; r \; (\alpha r)^2 \; e^{-(\alpha r)^2} \sin(G_\nu r) = C_2 \frac{\sqrt{\pi}}{2} \left[ 3r_{\mathrm{loc}}^3 - r_{\mathrm{loc}}^5 G_\nu^2 \right] e^{-(G_\nu r_{\mathrm{loc}})^2/2}$$

$$\text{(A9)}$$

$$\frac{4C_3}{G_\nu} \int_0^\infty dr \; r \; (\alpha r)^4 \; e^{-(\alpha r)^2} \sin(G_\nu r) = C_3 \frac{\sqrt{\pi}}{2} \left[ 15r_{\mathrm{loc}}^3 - 10r_{\mathrm{loc}}^5 G_\nu^2 + r_{\mathrm{loc}}^7 G_\nu^4 \right] e^{-(G_\nu r_{\mathrm{loc}})^2/2}$$

$$\text{(A10)}$$

$$\frac{8C_4}{G_\nu} \int_0^\infty dr \; r \; (\alpha r)^6 \; e^{-(\alpha r)^2} \sin(G_\nu r) = C_4 \frac{\sqrt{\pi}}{2} \left[ 105r_{\mathrm{loc}}^3 - 105r_{\mathrm{loc}}^5 G_\nu^2 + 21r_{\mathrm{loc}}^7 G_\nu^4 - r_{\mathrm{loc}}^9 G_\nu^6 \right] e^{-(G_\nu r_{\mathrm{loc}})^2/2}.$$

$$\text{(A11)}$$

Using Eq. (A7) and Eqs. (A8) to (A11) one obtains a final expression for the matrix elements of the local potential:

$$u_{pq}^{\mathrm{loc}}(\boldsymbol{R}) = \frac{4\pi}{\Omega} e^{i\boldsymbol{G}_\nu \cdot \boldsymbol{R}} \; e^{-(G_\nu r_{\mathrm{loc}})^2/2} \left\{ -\frac{Z_{\mathrm{ion}}}{G_\nu^2} + \frac{\sqrt{\pi}}{2} \left[ C_1 r_{\mathrm{loc}}^3 + C_2(3r_{\mathrm{loc}}^3 - 5r_{\mathrm{loc}}^5 G_\nu^2) + C_3(15r_{\mathrm{loc}}^3 - 10r_{\mathrm{loc}}^5 G_\nu^2 + r_{\mathrm{loc}}^7 G_\nu^4) \right. \right.$$

$$\left. \left. + C_4(105r_{\mathrm{loc}}^3 - 105r_{\mathrm{loc}}^5 G_\nu^2 + 21r_{\mathrm{loc}}^7 G_\nu^4 - r_{\mathrm{loc}}^9 G_\nu^6) \right] \right\}.$$

$$\text{(A12)}$$

### 2. Matrix elements of the non-local potential

The matrix elements of the non-local potential $u^{\mathrm{NL}}$ defined in Eq. (16) are given by

$$u_{pq}^{\mathrm{NL}} = \sum_{lm} \left[ \sum_{i,j} \langle \varphi_p | \beta_i \rangle \; B_{ij} \; \langle \beta_j | \varphi_q \rangle \right]_{lm} ,$$

$$\text{(A13)}$$

where $\langle \boldsymbol{r} | \beta_i \rangle = \beta_i^{(lm)}(\boldsymbol{r} - \boldsymbol{R}) = \beta_i^{(l)}(\|\boldsymbol{r} - \boldsymbol{R}\|) Y_{lm}(\phi, \theta)$ and $\boldsymbol{R}$ denotes the coordinates of an ion in the material. By changing the variable $\boldsymbol{r} \rightarrow \boldsymbol{r} + \boldsymbol{R}$ the overlap integral $\langle \varphi_p | \beta_i \rangle$ writes as

$$\langle \varphi_p | \beta_i \rangle = e^{-i\boldsymbol{G}_p \cdot \boldsymbol{R}} \int d\boldsymbol{r} \, \varphi_p(\boldsymbol{r}) \beta_i^{(lm)}(\boldsymbol{r}).$$

$$\text{(A14)}$$

The plane wave function $\varphi_p(\boldsymbol{r})$ can be expanded in terms of spherical harmonics $Y_{lm}(\phi, \theta)$ and Bessel functions $j_l(G_p r)$:

$$\varphi_p(\boldsymbol{r}) = \frac{4\pi}{\sqrt{\Omega}} \sum_{lm} i^l j_l(G_p r) Y_{lm}^*(\hat{\boldsymbol{G}}_p) Y_{lm}(\hat{\boldsymbol{r}}),$$

$$(A15)$$

where $\hat{\boldsymbol{r}}$ and $\hat{\boldsymbol{G}}_p$ denote the polar and azimuthal angles defining the directions of the vectors $\boldsymbol{r}$ and $\boldsymbol{G}_p$, respectively. Using this expansion one can compute the overlap in Eq. (A14) as follows:

$$\langle\varphi_p|\beta_i\rangle = \frac{4\pi}{\sqrt{\Omega}} e^{-i\boldsymbol{G}_p\cdot\boldsymbol{R}} \sum_{l'm'} (-i)^{l'} Y_{l'm'}(\hat{\boldsymbol{G}}_p) \int_0^\infty dr\ r^2 j_{l'}(G_p r)\beta_i^{(l)}(r) \int_0^{2\pi} d\phi \int_0^\pi d\theta\ \sin(\theta) Y_{l'm'}^*(\phi,\theta) Y_{lm}(\phi,\theta)$$

$$(A16)$$

$$\langle\varphi_p|\beta_i\rangle = \frac{4\pi}{\sqrt{\Omega}} e^{-i\boldsymbol{G}_p\cdot\boldsymbol{R}} (-i)^l Y_{lm}(\hat{\boldsymbol{G}}_p) \int dr\ r^2 j_l(G_p r)\beta_i^{(l)}(r).$$

$$(A17)$$

Similarly, the projection $\langle\beta_j|\varphi_q\rangle$ is given by

$$\langle\beta_j|\varphi_q\rangle = \frac{4\pi}{\sqrt{\Omega}} e^{i\boldsymbol{G}_q\cdot\boldsymbol{R}} i^l Y_{lm}^*(\hat{\boldsymbol{G}}_q) \int dr\ r^2 j_l(G_q r)\beta_j^{(l)}(r).$$

$$(A18)$$

Plugging Eqs. (A17)-(A18) into Eq. (A13) one obtains an expression for computing the matrix elements in Eq. (A13) for a given set of projectors $\beta_i^l(r)$:

$$u_{pq}^{\mathrm{NL}}(\boldsymbol{R}) = \frac{4\pi}{\Omega} e^{i\boldsymbol{G}_v\cdot\boldsymbol{R}} \sum_{l=0}^{l_{\max}} (2l+1) P_l(\hat{\boldsymbol{G}}_p\cdot\hat{\boldsymbol{G}}_q) \sum_{i,j} \langle p|i\rangle_l\ B_{ij}^{(l)}\ \langle j|q\rangle_l,$$

$$(A19)$$

where $\boldsymbol{G}_v = \boldsymbol{G}_q - \boldsymbol{G}_p$ and $\langle p|i\rangle_l$ denotes the overlap integral over the radial coordinates

$$\langle p|i\rangle_l = \int dr\ r^2 j_l(G_p r)\beta_i^{(l)}(r).$$

$$(A20)$$

To compute the matrix elements of the non-local component of the Hartwigsen-Goedecker-Hutter (HGH) pseudopotenial, the HGH projectors can be used, which are defined as:

$$\beta_i^{(l)}(r) = A_l^i r^{l+2i-2} \exp\left[-\frac{1}{2}\left(\frac{r}{r_l}\right)^2\right],$$

$$(A21)$$

where

$$A_l^i = \frac{\sqrt{2}}{r_l^{l+(4i-1)/2}\Gamma(l+\frac{4i-1}{2})}.$$

(A22)

For the case of one projector ($i = 1$) and $l_{max} \leq 2$, the overlap integrals defined by Eq. (A20) are calculated as:

$$\langle p|1\rangle_0 = \int_0^\infty dr\ r^2 \frac{\sin(G_p r)}{(G_p r)}\ \beta_1^{(0)}(r) = 2r_0^{3/2}\ e^{-(G_p r_0)^2/2},$$

(A23)

$$\langle p|1\rangle_1 = \int_0^\infty dr\ r^2 \left[\frac{\sin(G_p r)}{(G_p r)^2} - \frac{\cos(G_p r)}{(G_p r)}\right]\ \beta_1^{(1)}(r) = \frac{4}{3}r_1^{5/2}\ G_p\ e^{-(G_p r_1)^2/2},$$

(A24)

$$\langle p|1\rangle_2 = \int_0^\infty dr\ r^2 \left[\frac{3\sin(G_p r)}{(G_p r)^3} - \frac{\sin(G_p r)}{(G_p r)} - \frac{3\cos(G_p r)}{(G_p r)^2}\right]\ \beta_1^{(2)}(r) = \frac{8}{15}r_2^{7/2}\ G_p^2\ e^{-(G_p r_2)^2/2}.$$

(A25)

Using (A23)-(A25), the product of the projections $\langle p|i\rangle_l\langle i|q\rangle_l$ can be computed by entering Eq. (A19) to obtain the final expression for the matrix elements:

$$u_{pq}^{\mathrm{NL}}(\boldsymbol{R}) = \frac{4\pi}{\Omega}e^{i\boldsymbol{G}_\nu\cdot\boldsymbol{R}}\left\{4B_1 r_0^3\ e^{-(G_p^2+G_q^2)r_0^2/2} + \frac{16B_1 r_1^5}{3}\ (\boldsymbol{G}_p\cdot\boldsymbol{G}_q)\ e^{-(G_p^2+G_q^2)r_1^2/2}+\right.$$
$$\left.\left[\frac{32B_2 r_2^7}{15}\ (\boldsymbol{G}_p\cdot\boldsymbol{G}_q)^2 + \frac{32B_2 r_2^7}{45}\ (G_p G_q)^2\right]e^{-(G_p^2+G_q^2)r_2^2/2}\right\},$$

(A26)

where the coefficient $B_l := B_{11}^{(l)}$.

## B. Structural models of lithium-excess materials

In this section, details on how structural models were built for the lithium-excess materials studied in this work are provided. These models are used for determining the number of plane waves needed for convergence of the total energy, computed using density functional theory, and for resource estimation of the quantum algorithm.

For $Li_{0.5}MnO_3$, the position of the Mn atoms is first modified in the pristine structure to generate the spinel-like phase. The material is then delithiated. The structural model for the LLNMO material corresponds to the most stable structure of the $Li_{0.75}[Li_{0.17}Ni_{0.25}Mn_{0.58}]O_2$ material. Similarly, one lithium layer is removed from the supercell to estimate the resources to compute the site energies. Finally, the structural model for the delithiated $Li_{0.75}MnO_2F$ material was obtained by randomly taking Li ions off the pristine material until the Li-ion concentration of $x = 0.75$ was matched.

## C. LCU for $U_{\mathrm{NL}}$

The LCU for the nonlocal term exploits the projector representation of the operator, and breaks down each projection $P$ to the sum of unitaries $\frac{1}{2}\mathbb{I} - \frac{1}{2}(\mathbb{I} - 2P)$. A detailed demonstration of how this is done is presented below. Recall:

$$U_{NL} = \sum_{j=1}^{\eta} \sum_{I=1}^{L} f_I(\boldsymbol{p}, \boldsymbol{q}) \, |\boldsymbol{p}\rangle_j \, \langle\boldsymbol{q}|_j \,,$$

$$(C1)$$

$$f_I(\boldsymbol{p}, \boldsymbol{q}) = \frac{4\pi}{\Omega} e^{i\boldsymbol{G_\nu} \cdot \boldsymbol{R}_I} \left\{ \frac{4r_0^3}{B_0} \, e^{-(G_p^2+G_q^2)r_0^2/2} + \frac{16r_1^5}{3B_1} \, (\boldsymbol{G_p} \cdot \boldsymbol{G_q}) \, e^{-(G_p^2+G_q^2)r_1^2/2} \right.$$

$$\left. + \left[ \frac{32r_2^7}{15B_2} \, (\boldsymbol{G_P} \cdot \boldsymbol{G_q})^2 + \frac{32r_2^7}{45B_2} \, (G_P G_q)^2 \right] e^{-(G_p^2+G_q^2)r_2^2/2} \right\}.$$

$$(C2)$$

This is the same equation as Eq. (A26) where the new convention of using $B_i^{-1}$ instead of $B_i$ is used.

One can decompose $U_{NL}$ by focusing on each individual term in $f_I$. Define:

$$|\Psi_{I,0}\rangle := \frac{1}{\sqrt{\sum_{\boldsymbol{p}} e^{-G_p^2 r_0^2}}} \sum_{\boldsymbol{p}} e^{-G_p^2 r_0^2/2} \, |\boldsymbol{p}\rangle \,.$$

$$(C3)$$

Now for the term in Eq. (C2) including $r_0$, define:

$$U_{NL,0} := \frac{4\pi}{\Omega} \sum_{j=1}^{\eta} \sum_{I=1}^{L} \left( \sum_{\boldsymbol{p}} e^{-G_p^2 r_0^2} \right) \frac{4r_0^3}{B_0} R(\boldsymbol{R}_I)^\dagger \, |\Psi_{I,0}\rangle \, \langle\Psi_{I,0}| \, R(\boldsymbol{R}_I)$$

$$= \sum_{I=1}^{L} \frac{8\pi r_0^3 \eta (\sum_{\boldsymbol{p}} e^{-G_p^2 r_0^2})}{\Omega B_0} \mathbb{I} + \sum_{j=1}^{\eta} \sum_{I=1}^{L} \frac{-8\pi r_0^3 (\sum_{\boldsymbol{p}} e^{-G_p^2 r_0^2})}{\Omega B_0} R(\boldsymbol{R}_I)^\dagger (\mathbb{I} - 2\,|\Psi_{I,0}\rangle\,\langle\Psi_{I,0}|) R(\boldsymbol{R}_I)$$

$$(C4)$$

where $R(\boldsymbol{R}_I)|\boldsymbol{p}\rangle = e^{i\boldsymbol{G_p} \cdot \boldsymbol{R}_I}|\boldsymbol{p}\rangle$ is a phase action and the electron index $j$ for the phase and $\Psi_{I,0}$'s register is suppressed. Thus, in the formula above, using the same notations of Eq. (42), for $\sigma = 0$, one obtains:

$$c_{I,0} := \frac{-8\pi r_0^3 (\sum_{\boldsymbol{p}} e^{-G_p^2 r_0^2})}{\Omega B_0}$$

$$(C5)$$

The sign of $c_{I,0}$ only depends on $B_0$, meaning on the atomic type of $I$. For the next term in $U_{NL}$ involving $r_1$, adopt the notation $\sigma = (1, \omega)$. For $\omega \in \{x, y\, z\}$, define:

$$|\Psi_{I,1,\omega}\rangle := \frac{1}{\sqrt{\sum_{\boldsymbol{p}} (\boldsymbol{G_p})_\omega^2 e^{-G_p^2 r_1^2}}} \sum_{\boldsymbol{p}} (\boldsymbol{G_p})_\omega e^{-G_p^2 r_1^2/2} \, |\boldsymbol{p}\rangle$$

$$(C6)$$

and one obtains the following decomposition depending on the coordinate $\omega$:

$$U_{NL,1,\omega} := \frac{4\pi}{\Omega} \sum_{j=1}^{\eta} \sum_{I=1}^{L} (\sum_{p} (G_p)^2_{\omega} e^{-G_p^2 r_1^2}) \frac{16r_1^5}{3B_1} R(R_I)^{\dagger} |\Psi_{I,1,\omega}\rangle \langle \Psi_{I,1,\omega}| R(R_I)$$

$$= \sum_{I=1}^{L} \frac{32\pi r_1^5 \eta (\sum_{p} (G_p)^2_{\omega} e^{-G_p^2 r_1^2})}{3\Omega B_1} \mathbb{I} + \sum_{j=1}^{\eta} \sum_{I=1}^{L} \frac{-32\pi r_1^5 (\sum_{p} (G_p)^2_{\omega} e^{-G_p^2 r_1^2})}{3\Omega B_1} R(R_I)^{\dagger} (\mathbb{I} - 2|\Psi_{I,1,\omega}\rangle \langle \Psi_{I,1,\omega}|) R(R_I)$$

(C7)

implying

$$c_{I,2,\omega} = \frac{-32\pi r_1^5 (\sum_{p} (G_p)^2_{\omega} e^{-G_p^2 r_1^2})}{3\Omega B_1}$$

(C8)

For the term including the scalar $\frac{32r_2^7}{45B_2}$, corresponding to the index $\sigma = (2,0)$, define:

$$|\Psi_{I,2,0}\rangle := \frac{1}{\sqrt{\sum_{p} G_p^4 e^{-G_p^2 r_2^2}}} \sum_{p} G_p^2 e^{-G_p^2 r_2^2/2} |p\rangle$$

(C9)

and note the following decomposition:

$$U_{NL,2,0} := \frac{4\pi}{\Omega} \sum_{j=1}^{\eta} \sum_{I=1}^{L} (\sum_{p} G_p^4 e^{-G_p^2 r_2^2}) \frac{32r_2^7}{45B_2} R(R_I)^{\dagger} |\Psi_{I,2,0}\rangle \langle \Psi_{I,2,0}| R(R_I)$$

$$= \sum_{I=1}^{L} \frac{64\pi r_2^7 \eta (\sum_{p} G_p^4 e^{-G_p^2 r_2^2})}{45\Omega B_2} \mathbb{I} + \sum_{j=1}^{\eta} \sum_{I=1}^{L} \frac{-64\pi r_2^7 (\sum_{p} G_p^4 e^{-G_p^2 r_2^2})}{45\Omega B_2} R(R_I)^{\dagger} (\mathbb{I} - 2|\Psi_{I,2,0}\rangle \langle \Psi_{I,2,0}|) R(R_I)$$

(C10)

implying

$$c_{I,2,0} = \frac{-64\pi r_2^7 (\sum_{p} G_p^4 e^{-G_p^2 r_2^2})}{45\Omega B_2}$$

(C11)

Finally, for the term including the scalar $\frac{32r_2^7}{15B_2}$, corresponding to the index $\sigma = (2, \omega\omega')$, with $\omega \neq \omega' \in \{x, y, z\}$, define:

$$|\Psi_{I,2,\omega\omega'}\rangle := \frac{1}{\sqrt{\sum_{p} ((G_p)_{\omega} (G_p)_{\omega'})^2 e^{-G_p^2 r_2^2}}} \sum_{p} ((G_p)_{\omega} (G_p)_{\omega'}) e^{-G_p^2 r_2^2/2} |p\rangle$$

(C12)

and derive the following decomposition:

$$U_{NL,2,\omega\omega'} := \frac{4\pi}{\Omega} \sum_{j=1}^{\eta} \sum_{I=1}^{L} \left( \sum_{p} ((G_p)_\omega (G_p)_{\omega'})^2 e^{-G_p^2 r_2^2} \right) \frac{32 r_2^7}{15 B_2} |\Psi_{I,2,\omega\omega'}\rangle \langle \Psi_{I,2,\omega\omega'}|$$

$$= \sum_{I=1}^{L} \frac{64 \pi r_2^7 \eta (\sum_p ((G_p)_\omega (G_p)_{\omega'})^2 e^{-G_p^2 r_2^2})}{15 \Omega B_2} \mathbb{I} +$$

$$\sum_{j=1}^{\eta} \sum_{I=1}^{L} \frac{-64 \pi r_2^7 (\sum_p ((G_p)_\omega (G_p)_{\omega'})^2 e^{-G_p^2 r_2^2})}{15 \Omega B_2} R(R_I)^\dagger (\mathbb{I} - 2 |\Psi_{I,2,\omega\omega'}\rangle \langle \Psi_{I,2,\omega\omega'}|) R(R_I)$$

(C13)

implying:

$$c_{I,2,\omega\omega'} = \frac{-64 \pi r_2^7 (\sum_p ((G_p)_\omega (G_p)_{\omega'})^2 e^{-G_p^2 r_2^2})}{15 \Omega B_2}.$$

(C14)

This finishes the LCU for $U_{NL}$:

$$U_{NL} = U_{NL,0} + \sum_\omega U_{NL,1,\omega} + U_{NL,2,0} + \sum_{\omega \neq \omega'} U_{NL,2,\omega\omega'}.$$

(C15)

In each of the above decompositions, there is a multiple of identity, which are not considered in the qubitization as one can shift the Hamiltonian by the appropriate scalar. The alternative indexing $0 \leq \sigma \leq 10$ is used herein to index the operators above in the order they were derived.

D. **Inequality test**

The following is a brief overview of the inequality test technique used to prepare the momentum state superposition in the AE setting, which is shared by the PREP state for $U$ and $V$. The task is to prepare the state:

$$\frac{1}{\sqrt{\lambda_\nu}} \sum_{\nu \in \mathcal{G}_0} \frac{1}{\|\nu\|} |\nu_x\rangle |\nu_y\rangle |\nu_z\rangle ,$$

(D1)

where $\lambda_\nu$ is the normalization factor. There are two main steps, where the first one is independent of the lattice structure. Additional implementation details can be found, by way of example only, in "Quantum Simluation of Chemistry with Sublinear Scaling in Basis Size," R. Babbush, et al., npj Quantum Information 5, 92 (2019), hereinafter "Babbush et al.," the entire contents of which are incorporated by reference herein for all purposes.

1. First prepare a unary-encoded register on $\mu = 2$ to $n_p + 1$, i.e. $\frac{1}{\sqrt{2^{n_p+2}}} \sum_{\mu=2}^{n_p+1} \sqrt{2^\mu} |\mu\rangle$. Then using controlled Hadamards over registers $|v_x\rangle$, $|v_y\rangle$, and $|v_z\rangle$, prepare a uniform superposition taking values from $-2^{\mu-1} + 1$ to $2^{\mu-1} -$ 1 as signed integers. These superpositions are over a series of nested cubes $\mathcal{C}_\mu = \{v \mid \|v\|_\infty < 2^{\mu-1}\}$ which differences are denoted by $B_\mu = \mathcal{C}_\mu \backslash \mathcal{C}_{\mu-1}$. In the previous preparation, $|+0\rangle$ and $|-0\rangle$ both appear, and the latter is flagged as failure. Furthermore, to avoid double-counting, for a $v$ prepared for $\mu$, if $v \notin B_\mu$, it is flagged for failure.

Finally, a uniform superposition can be prepared over a register $|m\rangle$ of size $n_M$, from 0 to $2^{n_M} = M$ where $n_M$ is to be determined later by error analysis. Overall, the following state is obtained:

$$\frac{1}{\sqrt{M2^{n_p+2}}} \sum_{\mu=2}^{n_p+1} \sum_{\nu \in B_\mu} \sum_{m=0}^{M} \frac{1}{2^\mu} |\mu\rangle |\nu_x\rangle |\nu_y\rangle |\nu_z\rangle |m\rangle |00\rangle_{flag} + |\Phi^\perp\rangle$$

$$(D2)$$

where $|\Phi^\perp\rangle$ includes the basis states flagged as failure by any of the two qubits in register *flag*.

2. An inequality test is applied on the register $|m\rangle$ as follows:

$$mG_\nu^2 < (2^{\mu-2}b_{min})^2 M.$$

$$(D3)$$

where $b_{min} = \sigma_3(B)$ is the smallest singular value of the lattice matrix $B := (b_1, b_2, b_3)$ where $b_i$ are given as column vectors. Notice $b_{min}$ coincides with $\min\|b_i\|$ for an orthogonal lattice.

One must show that this is the right inequality to test. The soundness of the inequality follows from

$$\frac{M(2^{\mu-2}b_{min})2}{G_\nu^2} < M$$

. Indeed, for $v \in B_\mu = \{v \mid 2^{\mu-2} \leq \|v\|_\infty \leq 2^{\mu-1} - 1\}$, one obtains

$$G_\nu^2 = \langle v, B^T B v \rangle \geq \sigma_3(B)^2 \|v\|^2 \geq \sigma_3(B)^2 2^{2(\mu-2)}$$

. Hence the inequality is sound as $m$ is always smaller than M. To implement the inequality test, a QROM is used to compute:

$$O |\nu\rangle |0\rangle = |\nu\rangle |a_\nu\rangle,$$

$$(D4)$$

where $a_\nu = (2^{\mu-2}b_{min})^2 M/G_\nu^2$ is computed up to $n_M$ bits. This is followed by an $n_M$-bit comparator to compare the result to $m$. This test yields

$$\frac{1}{\sqrt{M2^{n_p+2}}} \sum_{\mu=2}^{n_p+1} \sum_{\nu \in B_\mu} \sum_{m=0}^{\lceil M(2^{\mu-2}b_{min}/G_\nu)^2 \rceil - 1} \frac{1}{2^\mu} |\mu\rangle |\nu_x\rangle |\nu_y\rangle |\nu_z\rangle |m\rangle |000\rangle_{flag} + |\Psi^\perp\rangle$$

$$(D5)$$

Upon success, the amplitude for each v is as desired, up to a uniform scalar:

$$\sqrt{\frac{\lceil M(2^{\mu-2}b_{min}/G_\nu)^2 \rceil}{M2^{2\mu}2^{n_p+2}}} \approx \frac{b_{min}}{4\sqrt{2^{n_p+2}}} \frac{1}{G_\nu}, \text{ as } M \to \infty$$

$$(D6)$$

Amplitude amplification is the last step, in order to amplify the probability of success of $|000\rangle_{flag}$. This finishes the implementation of Eq. (D1).

**E. The details of PREP and SEL**

Additional details of the PREP and SEL implementations are presented below, in accordance with some embodiments.

Regarding some implementations of the present disclosure, recall the following notations:

- Let $\mathcal{T}$ be the number of atomic species in the cell, and $\tau = \lceil \log(\mathcal{T}) \rceil$. Let $N_t$ be the number of nuclei with atomic type $t$ in the cell and $n_t = \lceil \log(N_t) \rceil$. Note $\sum_{t=0}^{\mathcal{T}-1} N_t = L$. Then to express the nuclei $I = (t, t_j)$ in register

$k'_{loc}$ or $k'_{NL}$, a bitstring of length $\tau + \max_t n_t$ is used.

## 1. PREP Implementation

There is a set of superpositions among those in Eq. (44) that can be generated. These are states of the registers $b, g, h, c, d, e$, which preparation is exactly similar to the OAE setting (see, e.g., Su et al.).

Furthermore, the states of $X$ and $f$ are prepared using a simple application of QROM as described in Eq. (23). The only small subtlety is in the case of $I$ (Eq. (46)), where the superposition is first prepared over $|co, \omega'\rangle_f$, and the fifth qubit $|sgn((\boldsymbol{b}_\omega, \boldsymbol{b}_{\omega'}))\rangle_f$ is computed directly by reading $|\omega, \omega'\rangle_f$ using a QROM of the SELECT variant.

The remaining states, i.e. the momentum state superposition for $V$ and the pseudopotential terms, is described below.

### a. Momentum state superposition for V

For the superposition in Eq. (49) on $j_V$, $k_V$, the exact same algorithm in Section D - "Inequality Test," below, applies. Here, the notations can be changed for the inequality test:

$$mG_\nu^2 < M_V \left(2^{\mu-2} b_{min}\right)^2 \tag{E1}$$

where $M_V = 2^{n_{M_V}}$. Then a QROM $O$ can be used, reading the $3n_p$ qubits of $|v\rangle$, and computing:

$$O |\nu\rangle |0\rangle = |\nu\rangle |a_\nu\rangle \tag{E2}$$

where $a_\nu = M_V (2^{\mu-2} b_{min})^2 / G_\nu^2$ is computed up to $n_{MV}$ bits. As a result, the inequality to be checked becomes $m < a_\nu$.

### b. Momentum state superposition for $U_{loc}$

One may rewrite the superposition in Eq. (50) on $k_{loc}$, $k'_{loc}$, $s_{loc}$:

$$\frac{1}{\sqrt{\lambda_{\nu,loc}}} \sum_{I,\nu \in \mathcal{G}_0} \frac{|\gamma_I(G_\nu)|^{1/2}}{G_\nu} |\nu\rangle_{k_{loc}} |I\rangle_{k'_{loc}} |sgn(\gamma_I(G_\nu))\rangle_{s_{loc}} \tag{E3}$$

The preparation of the above state is done almost entirely using QROM. Recall that the function $\gamma_I()$ is solely determined by the atomic type of $I$, denoted by $a \in \{1, ..., \mathcal{T}\}$ with $\tau = \lceil \log(\mathcal{T}) \rceil$. The unnormalized state is prepared below using QROM:

$$\sum_{t,\boldsymbol{\nu} \in \mathcal{G}_0} \left(\frac{n_t}{Ps(n_t, b_r)}\right)^{1/2} \frac{|\gamma_t(G_\nu)|^{1/2}}{G_\nu} |\nu\rangle_{k_{loc}} |t\rangle_{k'_{loc}} |sgn(\gamma_t(G_\nu))\rangle_{s_{loc}} \tag{E4}$$

Where Ps($n$, b) is the probability of success for the preparation of uniform superposition over $n$ basis states using $b$ bits of precision for the involved rotation. In some implementations, $b_r$ is set to 8, which gives a very high success probability for all different values of $n$ in some simulations of the present disclosure.

One subtlety in preparing the above involves the last QROM oracle used in the iterative process in Eq. (23). Each QROM in the sequence of $O_w$ for w $\in \{1, \dots, 3n_p + \tau\}$ uses $n_{Mloc}$ qubits for its output register, except for the last one which also outputs $|\text{sgn}(\gamma_I(G_\nu))\rangle_{Sloc}$. Further, one may ensure that the erasure of the last QROM output leaves $|\text{sgn}(\gamma_I(G_\nu))\rangle_{Sloc}$ untouched.

Regarding the presence of $(n_t/\text{Ps}(n_t, b_r))^{1/2}$ in the amplitudes, this ratio gets canceled as their reciprocal appears in the implementation of the uniform superposition over the $n_t$ nuclei of type $t$, meaning

$$\sum_{t,\boldsymbol{\nu}\in\mathcal{G}_0} \left(\frac{n_t}{\text{Ps}(n_t, b_r)}\right)^{1/2} \frac{|\gamma_t(G_\nu)|^{1/2}}{G_\nu} |\boldsymbol{\nu}\rangle_{k_{loc}} |t\rangle_{k'_{loc}} |\text{sgn}(\gamma_I(G_\nu))\rangle_{S_{loc}} \otimes$$

$$\left( \left(\frac{\text{Ps}(n_t, b_r)}{n_t}\right)^{1/2} |0\rangle_{I,loc} \sum_{t_j=0}^{n_t-1} |t_j\rangle_{k'_{loc}} + (1 - \text{Ps}(n_t, b_r))^{1/2} |1\rangle_{I,loc} |\psi_t^\perp\rangle_{k'_{loc}} \right)$$

$$(\text{E5})$$

where $|\psi_t^\perp\rangle_{k'_{loc}}$ is some inadmissible state and $|\cdot\rangle_{I,loc}$ flags the desired uniform superposition. This finishes the preparation of Eq. (E3).

Notice that while the inadmissible basis states need to be flagged for $V$, in this case, this need not be done, since the inadmissible states are either $|\nu\rangle = |\pm 0\rangle$ or $|a = \mathcal{T} + 1\rangle$. Both can only be an issue when computing $R_I$ or the phase action $e^{G_\nu \cdot R_I}$. When $\boldsymbol{v} = |\pm 0\rangle$, however, $G_\nu$ is the origin vector, thus the phase action is trivial, and when $t > \mathcal{T}$, the QROM computing $R_I$ is programmed to output the allzero state. Thus the action of $\text{SEL}_{loc}$ will always be identity on the inadmissible states without the help of any additional flag qubit or control in the PREP state.

*c. PREP state for $U_{\text{NL}}$*

Consider the preparation of the state of registers $k_{NL}$, $s_{NL}$ in Eq. (51), rewritten below:

$$\frac{1}{\sqrt{\sum |c_{I,\sigma}|^2}} \sum_{I,\sigma} \sqrt{|c_{I,\sigma}|} |I,\sigma\rangle_{k_{NL}} |\text{sgn}(c_{I,\sigma})\rangle_{s_{NL}}$$

$$(\text{E6})$$

First, the state

$$\sum_{t=0}^{\mathcal{T}-1} \sum_{\sigma=0}^{10} \left(\frac{n_t |c_{t,\sigma}|}{\text{Ps}(n_t, b_r)}\right)^{1/2} |\sigma\rangle_{k_{NL}} |t\rangle_{k'_{NL}}$$

$$(\text{E7})$$

is prepared using QROM which has to read $\tau + 4$ qubits, where the four qubits encode $0 \le \sigma \le 10$. This is followed by a uniform superposition over $n_t$ basis states with success probability Ps($n_t$, $b_r$):

$$\sum_{t,\sigma}\left(\frac{n_t|c_{t,\sigma}|}{\mathrm{Ps}(n_t,b_r)}\right)^{1/2}|\sigma\rangle_{k_{NL}}|t\rangle_{k'_{NL}}\left(\left(\frac{\mathrm{Ps}(n_t,b_r)}{n_t}\right)^{1/2}|0\rangle_{I,NL}\sum_{t_j=0}^{n_t-1}|t_j\rangle_{k'_{NL}}+(1-\mathrm{Ps}(n_t,b_r))^{1/2}|1\rangle_{I,NL}|\psi_t^{\perp}\rangle_{k'_{NL}}\right)$$

$$(\text{E8})$$

Finally, for the value in register $s_{NL}$, one desires to know the atomic type $t$ and which of the three subgroups of the 11 types $\sigma$ refers to (i.e. $\sigma = 0$, or $\sigma = (1, \omega)$, or $\sigma = (2, x)$ where $x$ is either 0 or $\omega\omega'$). This identification requires one to compute two bits of information, which can be done by inequality tests as the three subgroups correspond to the alternative indexing $\sigma = 0$, $1 \le \sigma \le 3$, and $4 \le \sigma \le 10$. Thus a QROM of the variant SELECT reading $\tau + 2$ qubits can be used to finish the preparation of Eq. (E6).

**2. SEL Implementation**

Below, additional details of $\text{SEL}_T$, $\text{SEL}_V$, $\text{SEL}_{loc}$, and $\text{SEL}_{NL}$ are described.

*a.* $\text{SEL}_T$

Recall the transformation implemented by this operator:

$$\text{SEL}_T : |0\rangle_T |+\rangle_b |j\rangle_e |\omega, \omega', \mathrm{sgn}(\langle b_\omega, b_{\omega'}\rangle)\rangle_f |r\rangle_g |s\rangle_h |p\rangle_j \to$$
$$(-1)^{b(p_{\omega,r}p_{\omega',s}+1)+\mathrm{sgn}(\langle b_\omega,b_{\omega'}\rangle p_\omega p_{\omega'})}|0\rangle_T |+\rangle_b |j\rangle_e |\omega, \omega', \mathrm{sgn}(\langle b_\omega, b_{\omega'}\rangle)\rangle_f |r\rangle_g |s\rangle_h |p\rangle_j .$$

$$(\text{E9})$$

In addition to CSWAP that sends back and forth the $(j, \omega, r)$, $(j, \omega', s)$ coordinates to an auxiliary register, there is also a phase that is controlled on the following:

- The state $|\chi\rangle$ is equal to $|00\rangle$,
- The register c flags the success of $i = j$ in registers $d$, $e$ (i.e., $|1\rangle_c$),
- The ancilla attached to register $f$ flags the admissible states $((\omega \neq 4)\wedge(\omega' \neq 4))$ in the approximate superposition prepared by QROM. This uses three Toffolis and two additional qubits.

With the help of three additional Toffolis and a single auxiliary register, the success of all three above can be recorded in terms of the state $|0\rangle_T$. This would indicate the success of the state preparation of $T$. The phase action of $\text{SEL}_T$ is therefore only controlled on a single auxiliary state $|\cdot\rangle_T$ when the lattice is orthogonal (Remark III.1), and otherwise, it is controlled on an additional register $|\cdot\rangle_b$. Note this additional control is only for implementing $(-1)^{b(p_{\omega,r}p_{\omega',s})}$, where one needs two Toffolis.

*b.* $\text{SEL}_V$

Recall the phase and controlled arithmetics carried out by this operator:

$$\text{SEL}_V : |0\rangle_V |b\rangle_b |i\rangle_d |j\rangle_e |0\rangle_c |0\rangle_{j_V} |\nu\rangle_{k_V} |p\rangle_i |q\rangle_j \to$$
$$(-1)^{b([(p+\nu)\notin\mathcal{G}]\vee[(q-\nu)\notin\mathcal{G}])}|0\rangle_V |b\rangle_b |i\rangle_d |j\rangle_e |0\rangle_c |0\rangle_{j_V} |\nu\rangle_{k_V} |p+\nu\rangle_i |q-\nu\rangle_j .$$

$$(\text{E10})$$

The addition and subtraction along with the phase implementation must be controlled on the success of state preparation for $V$, which occurs when the state $(|\chi\rangle_\chi$ is equal to $|01\rangle_\chi)$ and the $j_V$, $c$ registers are in state $|0\rangle_{j_V}|0\rangle_c$. This can be computed via three Toffolis into one single register $|0\rangle_V$. Thus, addition and subtraction along with the phase implementation are controlled on a single auxiliary register.

## c. SEL$_{loc}$

Recall the overall action:

$$\text{SEL}_{loc} : |0\rangle_{loc} |b\rangle_b |j\rangle_e |\nu\rangle_{k_{loc}} |I\rangle_{k'_{loc}} |\text{sgn}(\gamma_I(G_\nu))\rangle_{s_{loc}} |0\rangle_R |p\rangle_j \rightarrow$$
$$(-1)^{b[(\boldsymbol{p}-\boldsymbol{\nu})\notin\mathcal{G}]} |0\rangle_{loc} |b\rangle_b |j\rangle_e |\nu\rangle_{k_{loc}} |I\rangle_{k'_{loc}} |\text{sgn}(\gamma_I(G_\nu))\rangle_{s_{loc}} |R_I\rangle_R |p-\nu\rangle_j \rightarrow$$
$$e^{iG_\nu \cdot R_I} (-1)^{b[(\boldsymbol{p}-\boldsymbol{\nu})\notin\mathcal{G}]+\text{sgn}(\gamma_I(G_\nu))} |0\rangle_{loc} |b\rangle_b |j\rangle_e |\nu\rangle_{k_{loc}} |I\rangle_{k'_{loc}} |\text{sgn}(\gamma_I(G_\nu))\rangle_{s_{loc}} |0\rangle_R |p-\nu\rangle_j .$$

$$(E11)$$

The subtraction of **v** from **p** is controlled on ($|\chi\rangle_X$ is equal to $|10\rangle_X$), and registers c and *I, loc* being in state $|1\rangle_c|0\rangle_{I,loc}$. This is computed via three Toffolis and recorded as $|0\rangle_{loc}$, indicating the success of the state preparation for $U_{loc}$. Recall that $|\cdot\rangle_{I,loc}$ was computed as part of the preparation algorithm in Eq. (E5).

To implement $e^{iG_\nu \cdot R_I}$, employ a SELECT QROM that outputs $R_I$ into a register denoted by **R** and of size $n_R$.
This QROM reads $|x\rangle_{loc}|I\rangle_{k'_{loc}}|0\rangle_R$ and outputs $R_I$ in register **R** if $x = 0$ and leaves $|0\rangle_R$ unchanged otherwise. Note that in case *I*'s type is inadmissible (as discussed in Section E1b), one may simply leave **R** = **0**. The implementation of the phase $e^{iG_\nu \cdot R_I}$ does not need to be controlled as, for any case other than the local and non-local operators being qubitized, the register **R** is all-zero. Once the phase is implemented, the register **R** is erased (by applying the inverse of the QROM) and $Z_{s_{loc}}$ controlled on $|0\rangle_{loc}$ is applied.

## d. SEL$_{NL}$

The complicated subroutine of SEL$_{NL}$ is the preparation of $|\Psi_{I,\sigma}\rangle$. All other parts of the operator, including the phase actions or CSWAPs, are repetitions of subroutines in the previous OAE setting.

For the sake of illustration, it is first assumed that the lattice of the model is orthogonal, as is the case for $Li_2FeSiO_4$ and $Li_{0.75}MnO_2F$. It is then shown how the general algorithm works.

The states $|\Psi_{I,\sigma}\rangle$ are all (derivatives of) 3D Gaussian superposition. Thus, assuming an orthogonal lattice, they decompose to three (derivatives of) 1D Gaussian superpositions. Given that the cost of QROM scales exponentially with the number of qubits read, three QROMs with inputs one third the size deliver smaller depth, especially if they can be parallelized on a circuit.

Below, this decomposition is shown for all the different types o of states $|\Psi_{I,\sigma}\rangle$: *(a)*$|\Psi_{I,0}\rangle$, *(b)*$|\Psi_{I,1,\omega}\rangle$, *(c)*$|\Psi_{I,2,0}\rangle$, *(d)*$|\Psi_{I,2,\omega\omega}\rangle$ where $1 \leq \omega \neq \omega' \leq 3$. Due to orthogonality, $G_p = \Sigma_\omega p_\omega b_\omega = (G_{p1},G_{p2},G_{p3})$ where $G_{pi} = p_i(b_i)_i$. Drop the normalization factors to avoid cluttering:

$$(a) \quad \sum_p e^{-G_p^2 r_0^2/2} |p\rangle = \bigotimes_{i=1,2,3} \left( \sum_{p_i} e^{-(G_{p,i})^2 r_0^2/2} |p_i\rangle \right) \tag{E12}$$

$$(b) \quad \sum_p G_{p,\omega} e^{-G_p^2 r_1^2/2} |p\rangle = \bigotimes_{i\neq\omega} \left( \sum_{p_i} e^{-(G_{p,i})^2 r_1^2/2} |p_i\rangle \right) \otimes \left( \sum_{p_\omega} G_{p,\omega} e^{-(G_{p,\omega})^2 r_1^2/2} |p_\omega\rangle \right) \tag{E13}$$

$$(c) \quad \sum_p G_p^2 e^{-G_p^2 r_2^2/2} |p\rangle = \sum_\omega G_{p,\omega}^2 e^{-G_p^2 r_2^2/2} |p\rangle = \sum_\omega \bigotimes_{i\neq\omega} \left( \sum_{p_i} e^{-(G_{p,i})^2 r_2^2/2} |p_i\rangle \right) \otimes \left( \sum_{p_\omega} G_{p,\omega}^2 e^{-(G_{p,\omega})^2 r_2^2/2} |p_\omega\rangle \right) \tag{E14}$$

$$(d) \quad \sum_p (G_{p,\omega}G_{p,\omega'}) e^{-G_p^2 r_2^2/2} |p\rangle = \left( \sum_{p_{\omega''}} e^{-(G_{p,\omega''})^2 r_2^2/2} |p_{\omega''}\rangle \right) \otimes \left( \sum_{p_\omega} G_{p,\omega} e^{-(G_{p,\omega})^2 r_2^2/2} |p_\omega\rangle \right) \otimes$$
$$\left( \sum_{p_{\omega'}} G_{p,\omega'} e^{-(G_{p,\omega'})^2 r_2^2/2} |p_{\omega'}\rangle \right) \tag{E15}$$

The QROM oracle O breaks down to three QROMs, applied in parallel and each reading $n_p + (\tau + 4)$ qubits,

compared to a single QROM reading $3n_p + (\tau + 4)$. Resource estimates show that this decomposition brings down significantly the cost of the QROM by about an order of magnitude for $N{\sim}1e5$ ($n_p = 6$).

*Remark* E.1. Given this decomposition, there are 13 different types of states to be prepared as the state (*c*) breaks down into three different states. For the purpose of error analysis, due to the above decomposition, there will still be three errors incurred to implement reflection onto states of type (*c*), meaning a total of 13 different error terms.

While the orthogonal decomposition works as intended to implement the reflection on states of type (*a, b, d*),

$$\sum_p G_p^2 e^{-G_p^2 r_2^2/2} |\boldsymbol{p}\rangle$$

the decomposition for (*c*) does not lead to the reflection onto but rather the sum of the reflection on the three states in its decomposition (referred to herein as a "sum of reflections"), meaning $\sum_\omega (\mathbb{I} - 2|\psi_\omega\rangle\langle\psi_\omega|)$ instead of $I - 2|\psi\rangle\langle\psi|$ where $\psi = \sum_\omega \psi_\omega$. For this reason, the treatment of states of type (*c*) is separated from others and the indexing of $\sigma$ still references the 11 types of states.

*Implementation of the reflection onto* $|\psi_{l,(2,0)}\rangle$. The preparation $U_{l,\sigma}$ must act by identity if $\sigma$ is of type (*c*), and is followed by another operator $V_{l,\sigma}$. This operator specifically takes care of preparing a state of type (*c*), and is nonidentity only if $\sigma = (2, 0)$. $V_{l,\sigma}$ acts as follows:

1. The preparation of the state $\sum_{i=1}^3 \sqrt{\dfrac{(b_i)_i^4}{\Sigma(b_i)_i^4}} |i\rangle$ where $|i\rangle$ is one-hot-encoded in three qubits. This preparation can be done using QROM.

2. The parallel preparation of three states using three QROMS, each reading $|\boldsymbol{p}_\omega\rangle |t\rangle_{k'_{NL}} |\cdot\rangle_{NL,c} |i\rangle_\omega$, a total of $n_p + \tau + 1 + 1$ qubits. A check can be performed to ensure that the state to be prepared is indeed of type (*c*) by looking at $|\cdot\rangle_{NL,c}$. This register is prepared using one Toffoli taking the AND of $|\cdot\rangle_{NL}$ and $|\sigma == (2, 0))$ where the latter is also computed using three Toffolis and three qubits by checking the condition $\sigma == (2, 0)$ (recall $0 \le \sigma \le 10$ is given in a register of size 4).

3. Following the previous QROM, the state $\Sigma|\psi_{i,l,\sigma}\rangle|i\rangle$ was prepared where $\Sigma|\psi_{i,l,\sigma}\rangle = |\psi\rangle_{l,\sigma}$ is what is desired to prepare. Therefore, the $|i\rangle$ register should be disentangled from the system register:

- Apply the Hadamard gate on each of the three qubits of $|i\rangle$. This leads to the state $\Sigma|\psi_{i,l,\sigma}\rangle|000\rangle + \cdots$. Two Toffolis may be used to flag success by one qubit as $\Sigma|\psi_{i,l,\sigma}\rangle|0\rangle + \cdots$.

- The probability of success for $|0\rangle$ is $\dfrac{1}{8}$ which is larger than $\sin(\dfrac{\pi}{2(2\cdot2+1)})^2 \sim 0.095$. Therefore, using the procedure in Section F - "Amplitude Amplification with Fewer Steps," below, one can ensure that after $l = 2$ steps of amplitude amplification, one obtains a success probability very close to one, so that the error (due to this probability) in some implementations of the reflection is negligible.

*The case of non-orthogonal lattices.* Two materials in Table II have a non-orthogonal lattice. As one of the lattice vectors is orthogonal to the other two, however, the states $|\Psi_{l,\sigma}\rangle$ admit a decomposition into states of size $n_p$ and $2n_p$ qubits. The QROM cost, therefore, will need to change accordingly for all states of type (*a, b, d*). For type (*c*), after a suitable change of axis, one obtains $\boldsymbol{b}_1 = (x_1, 0, 0)$, $\boldsymbol{b}_2 = (0, x_2, 0)$, $\boldsymbol{b}_3 = (0, x_4, x_3)$ for some $x_i > 0$. Hence, the preparation

of $|\Psi_{l,(2,0)}\rangle$ can be adapted as follows: prepare a superposition $\sqrt{\dfrac{x}{x+y}} |01\rangle + \sqrt{\dfrac{y}{x+y}} |10\rangle$ where

$$x = \left(\sum_{p_1} G_{p_1}^4 e^{-G_{p_1}^2 r_2^2}\right) \left(\sum_{p_2,p_3} e^{-(G_{p_2}^2 + G_{p_3}^2)r_2^2}\right)$$

and $y =$

$$\left(\sum_{p_1} e^{-G_{p_1}^2 r_2^2}\right) \left(\sum_{p_2,p_3} (G_{p_2}^2 + G_{p_3}^2)^2 e^{-(G_{p_2}^2 + G_{p_3}^2)r_2^2}\right)$$

. This also means that the amplitude amplification will need to be done on a qubit with success probability $\dfrac{1}{4}$. Thus only one amplification step is necessary to get exact success probability 1, and there is no need to use the technique in Section F - "Amplitude Amplification with Fewer Steps," below.

### F. Amplitude amplification with fewer steps

A technique is described below that allows one to ensure that amplitude amplification does not 'overheat,' with the caveat of entangling the original register with a new register composed of a rotated ancilla and an additional qubit. *Remark* F.1. This is of no concern if used as part of subroutines that only aim to produce some amplitudes, such as PREP which is later followed by PREP†. Indeed, in qubitization, instead of $\mathrm{PREP}|0\rangle = \sum_\ell \sqrt{\frac{a_\ell}{\lambda}} |\ell\rangle$ , one can apply

any PREP of the form PREP $|0\rangle = \sum_\ell \sqrt{\frac{a_\ell}{\lambda}} |\ell\rangle |f(\ell)\rangle$ , where $|f(\ell)\rangle$ is some unit state and function of $\ell$. If this is used as part of an SEL subroutine, however, one needs to ensure that the block-encoding identity of qubitization and SEL being self-inverse still holds.

Assume the state to be amplified is $|\Phi\rangle = p^{1/2}|0\rangle + (1 - p)^{1/2}|1\rangle$, where probability $p$ is known. Here, $p = P_{V,V}$ can be precomputed using Eq. (H7).

In some cases, one may see an overshooting of amplitude amplification after a few steps before reaching the success threshold $p_{th}$ (set by the user). This happens if after a few steps increasing the success probability, there is a decrease of that probability. One can avoid this overheating by performing the procedure discussed below.

Assume $p > \sin\left(\frac{\pi}{2(2l+1)}\right)^2$ for some $l$. Then choose $0 < a < 1$ such that $a^2 p = q$ is at a more favorable spot according to the graph of $\sin^2\left((2l + 1)\arcsin(\sqrt{q})\right)$ where one hopes to surpass $p_{th}$ after $l$ many amplitude amplifications. Indeed, by using more bits for the accuracy of $a$, one can obtain $\sqrt{q}$ as close as possible to

$\sin\left(\frac{\pi}{2(2l+1)}\right)$ and therefore $\sin^2\left((2l + 1)\arcsin(\sqrt{q})\right)$ as close as possible to 1.

Prepare a rotated ancilla $|r\rangle = a|0\rangle + (1 - a^2)^{1/2}|1\rangle$ (with a sufficient precision). Then apply a Toffoli with X gates to $|\Phi, r\rangle|0\rangle$ to make the following state:

$$ap^{1/2} |00\rangle |0\rangle + (1 - a^2 p)^{1/2} |\psi\rangle |1\rangle \qquad (F1)$$

where $|\psi\rangle$ is some unit state in $|00\rangle^\perp$ subspace. $l$ steps of amplitude amplification with the last qubit as the flag would give a success probability $\sin^2((2l + 1)\arcsin(ap^{1/2}))$ which could already be $\geq p_{th}$.

*Remark* F.2. The total added cost in this case, assuming a priori access to a gradient state, is the one mentioned Toffoli to prepare Eq. (F1), plus $n_{AA}$ - 3 Toffolis to make the rotated ancilla with $n_{AA}$ bits of precision. The qubit cost is 2 plus the $n_{AA}$ qubits to be used in the gradient state to achieve the required precision. In generating estimates set forth herein, a default value of $n_{AA}$ = 35 was selected, which is more than enough to ensure high precision. Notice this cost is to be added to the cost of preparing $\Phi$, and then multiplied by $(2l + 1)$ to give the full amplitude amplification cost.

*Remark* F.3. The exact probability of success is included in the effective total value of $\lambda$, through the calculation of effective $\lambda_{NL}$ or $\lambda_V$. $n_{AA}$ does not impact the error of ground state energy estimation, but it determines the exact probability of success.

### G. QROM: application, parallelization and costs

#### 1. Using QROM to prepare superpositions

Recall the QROM state preparation method in Section ID - "Interdisciplinary Considerations - Quantum Read-Only Memory (QROM)," above. The error of the preparation method is estimated below.

**Lemma G.1.** The error in the QROM state preparation method in Section ID is $2^{-b}\pi n$. *Proof.* Assuming an error state $|\varepsilon_w\rangle$ with norm $\varepsilon_w$ for the inductive step up to $w \in \{1, ..., n\}$ and an error state $|\varepsilon_b\rangle$ with norm $\varepsilon_b$ for each rotation, the next step gives

$$\left( \sum_{y\in\{0,1\}^w} \sqrt{p_y}|y\rangle + |\varepsilon_w\rangle \right)|0\rangle|0\rangle \underset{O_w}{\mapsto} \sum_{y\in\{0,1\}^w} \sqrt{p_y}|y\rangle|0\rangle|\theta_y\rangle + O_w|\varepsilon_w\rangle|0\rangle|0\rangle \underset{R}{\mapsto} \tag{G2}$$

$$\sum_{y\in\{0,1\}^w} \sqrt{p_y}|y\rangle \left( \sqrt{\frac{p_{y0}}{p_y}}|0\rangle + \sqrt{\frac{p_{y1}}{p_y}}|1\rangle + |\varepsilon_b\rangle \right)|\theta_y\rangle + RO_w|\varepsilon_w\rangle|0\rangle|0\rangle \underset{O_w^\dagger}{\mapsto} \tag{G3}$$

$$\sum_{y\in\{0,1\}^{w+1}} \sqrt{p_y}|y\rangle|0\rangle + |\psi_w\rangle|\varepsilon_b\rangle|0\rangle + O_w^\dagger RO_w|\varepsilon_w\rangle|0\rangle|0\rangle \tag{G4}$$

Observe that $|\varepsilon_{w+1}\rangle = |\psi_w\rangle|\varepsilon_b\rangle|\mathbf{0}\rangle + O_w^\dagger RO_w|\varepsilon_w\rangle$ with norm $\varepsilon_{w+1} \leq \varepsilon_b + \varepsilon_w$. Therefore, one obtains $\varepsilon_n \leq n\varepsilon_b$. The latter is upper bounded by $2^{-b}\pi$.

*Remark* G.1. The last statement in the proof assumes an exact preparation for the rotation synthesis, while generally an error of $\delta$ needs to be considered. The cost added due to this error is polylogarithmic and is not considered in the resource estimations set forth herein. The synthesis of an exact rotation, however, has cost $b$ - 3 Toffolis once one has access to a gradient state. Finally, note that the gradient state used in all single qubit rotations synthesis in the algorithm can be precomputed.

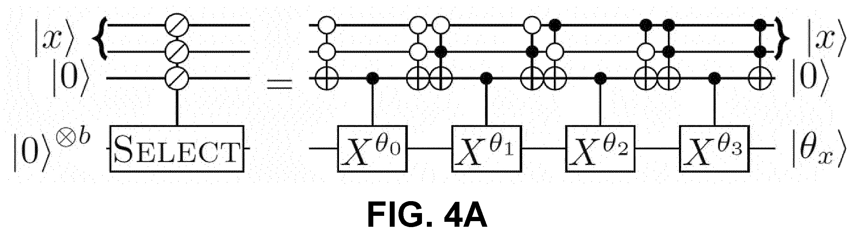

There are at least three different types of QROMs that can be used in various embodiments of the present disclosure, two of which are SELECT and SELSWAPDIRTY. Additional details compatible with QROM implementations set forth herein can be found, by way of example, in "Trading T-Gates for Dirty Qubits in State Preparation and Unitary Synthesis," G.H. Low, et al., arXiv: 1812.00954 (2018), hereinafter 'Low et al,' the entire contents of which are incorporated by reference herein for all purposes. An overview of the circuit implementation and cost are presented in FIGs. 4A-4B and Table IV.

FIG. 4A shows SELECT $\sum_{x=0}^{N-1}|x\rangle\langle x| \otimes X^{\theta_x}$ with $N = 4$. The symbol $\oslash$ indicates control by a number state. This QROM variant is the most simple and useful for reading a small number of qubits, and it has no garbage. Its cost becomes prohibitive when reading a large number of qubits log $N$. FIG. 4B shows the SELSWAPDIRTY QROM, which is a cost-friendly alternative when reading a large number of qubits. It uses an additional $\lceil \log N \rceil + b$ clean qubits and $b\beta$ dirty qubits to implement the data-lookup oracle without garbage with $\beta \in [1, N]$ being the programmer's choice to trade-off gate-qubit cost.

**2. QROM gate and qubit costings**

Below, the cost of a single QROM using Table IV is discussed:

$$\text{SELECT} : 2^n \tag{G5}$$

$$\text{SELSWAPDIRTY} : 3b\beta + 2\left\lceil \frac{2^{\log(N)}}{\beta} \right\rceil \tag{G6}$$

Estimate the Toffoli cost of Eq. (G1) for $N = 2^n$ assuming the SELSWAPDIRTY variant:

$$2(3b\beta n + 2\sum_{w=0}^{n} \lceil \frac{2^w}{\beta} \rceil) + (b-3)n \qquad \text{(G7)}$$

which is upper bounded by:

$$2(3b\beta n + 2\lceil \frac{2^{n+1} - 1}{\beta} \rceil + 2n) + (b-3)n \qquad \text{(G8)}$$

TABLE IV. Gate and qubit cost of SELECT and SELSWAPDIRTY QROMs. The space-depth trade-off is determined by $\beta \in [1, N]$. Note that $b\beta$ qubits of the FIG. 4B implementation may be dirty.

| Operation | Additional qubits | Toffoli Depth | Toffoli count $\leq \cdot + \mathcal{O}$ (log $\cdot$) |
|---|---|---|---|
| SELECT SELSWAPDIRTY | $b + \lceil \log N \rceil$ | $N$ | $N$ |
| | $b(\beta + 1) + \lceil \log N \rceil$ | $2\lceil \frac{N}{\beta} \rceil + 3\lceil \log \beta \rceil$ | $2\lceil \frac{N}{\beta} \rceil + 3b\beta$ |

Notice the leading two factor cost is due to the application of $O_w$ and its inverse in the iterative process. Similarly, the cost for preparing a state using the SELECT variant of QROM can be derived as follows:

$$2(2^{n+1} - 1) + (b-3)n \qquad \text{(G9)}$$

The qubit costings are described in Table IV.

## 3. QROM parallelization

SELSWAPDIRTY has considerable parallelization potential. More specifically, the implementation of the operator SWAP in SELSWAPDIRTY involves controlled swap operations on two registers of $b$ qubits. Such an operation can be massively parallelized to logarithmic depth. The parameters involved in this parallelization, that may be considered for purposes of resource estimation, are:

- $\kappa$: the parallelization factor used for parallelizing each controlled swap operation in SWAP,
- $n_{parallel}$: the maximum number of simultaneous Toffoli applications,
- $n_{dirty}$: the maximum number of dirty qubits that can be used at any given time which, assuming the QROM is not implemented in parallel with another procedure, is equal to the total number of qubits on the circuit, minus the ones used in the QROM itself.

The depth of one QROM application on $n$ qubits using the parameters above is:

$$3\lceil \frac{b}{\kappa} \rceil \lceil \log \beta \rceil + 2\lceil \frac{2^n}{\beta} \rceil \qquad \text{(G10)}$$

with constraints $\beta\kappa \leq n_{parallel}$, $\beta b \leq n_{dirty}$. The choice of $\kappa = b$ gives Table IV, assuming the constraints would still be satisfied. Finally, the depth of the preparation of a superposition is

$$2(3\lceil\frac{b}{\kappa}\rceil\lceil\log(\beta)\rceil + 2\lceil\frac{2^{n+1}-1}{\beta}\rceil + 2n) + (b-3)n. \tag{G11}$$

### H. Derivation of $\lambda$

In this section, the Section IVB guideline for computing the effective value of $\lambda_\chi$ is followed. This includes finding the relevant success probabilities in state preparation, which flag the admissible states in the superposition. One then needs to find the approximated amplitudes implemented by the algorithm for the admissible states,

$$\lambda_T = \eta 2^{2n_p-3} \mathrm{Ps}(\eta, b_r)^{-2} \sum_{\omega,\omega' \in \{1,2,3\}} \left| \langle \boldsymbol{b}_\omega, \boldsymbol{b}_{\omega'} \rangle \right|$$

$$\lambda_{NL} = \eta \mathrm{Ps}(\eta, b_r)^{-2} \sum_{I,\sigma} |c_{I,\sigma}|$$

$$\lambda_V = \frac{2\pi\eta(\eta-1)\lambda_{\nu,V}}{\Omega P_{\nu,V}^{amp} \mathrm{Ps}(\eta,b_r)^2}, \qquad \text{where} \qquad \lambda_{\nu,V} = \sum_{\mu=2}^{n_p+1} \sum_{\boldsymbol{\nu} \in \mathcal{B}_\mu} \frac{\left[ M_V (2^{\mu-2} b_{min}/G_\nu)^2 \right]}{M_V (2^{\mu-2} b_{min})^2}$$

$$\lambda_{loc} = \frac{4\pi\eta\lambda_{\nu,loc}}{\Omega \mathrm{Ps}(\eta,b_r)^2}, \qquad \text{where} \qquad \lambda_{\nu,loc} = \sum_{I,\boldsymbol{\nu} \in \mathcal{G}_0} \frac{|\gamma_I(G_\nu)|}{G_\nu^2}$$

$$\lambda = \lambda_T + \lambda_{loc} + \lambda_{NL} + \lambda_V$$

TABLE V. Values of $\lambda_\chi$ and $\lambda$ according to calculations in Section H - "Derivation of $\lambda$." The probability $P^{amp}_{v,V}$ is the amplification of the one in Eq. (H7) that has a formula similar to $\lambda_{v,V}$. All $\lambda_\chi$s include the success probability $Ps(\eta, b_r)^2$ for preparing the superposition over electron pairs in registers *d, e* (Eq. (48)).

**1. $\lambda_T$**

For the kinetic term *T*, there are at least two success probabilities to consider. One is for preparing the states of registers *g, h* and the other is $Ps(n, b_r)^2$, which is for the superposition over electron pairs in Eq. (48). Therefore, one may desire to adjust the theoretical value of $\lambda_T = \eta(\Sigma_{\omega,\omega' \in \{1,2,3\}}|\langle \boldsymbol{b}_\omega, \boldsymbol{b}_{\omega'}\rangle|) (2^{n_p-1} - 1)^2/2$ by

$$\lambda_T = \frac{\eta 2^{2n_p-2} \sum\limits_{\omega,\omega' \in \{1,2,3\}} |\langle \boldsymbol{b}_\omega, \boldsymbol{b}_{\omega'}\rangle|}{2Ps(\eta, b_r)^2}.$$

$$(H1)$$

**2. $\lambda_{NL}$**

Given the implementation in Section E1c - "The Details of PREP and SEL - PREP Implementation - PREP State for $U_{NL}$," the amplitudes are correctly scaled such that the success probabilities $Ps(n_t, b_r)$ are cancelled out. However, the success probability $Ps(\eta, b_r)^2$ for the superposition over electrons must be considered. Therefore the theoretical value of $\lambda_{NL} = \eta\Sigma_{t,\sigma}n_t|c_{t,\sigma}|$ is adjusted as follows:

$$\lambda_{NL} = Ps(\eta, b_r)^{-2}\eta \sum_{I,\sigma} |c_{I,\sigma}|.$$

$$(H2)$$

**3. $\lambda_V$**

Section E1a - "The Details of PREP and SEL - PREP Implementation - Momentum State Superposition for *V*" discussed the implementation of the PREP state for *V*. Recall the momentum state superposition:

$$\sqrt{\frac{P_{v,V}}{\lambda_{v,V}}} |0\rangle_{jV} \sum_{\nu \in \mathcal{G}_0} \frac{1}{G_\nu} |\nu\rangle_{k_V} + \sqrt{1 - P_{v,V}} |1\rangle_{jV} |\nu^\perp\rangle_{k_V}$$

$$(H3)$$

Here, consider multiple adjustments to the theoretical value of $\lambda_V$. The first one is the probability of success $P_{v,V}$, flagged by $|0\rangle_{jV}$. Unlike previous such probabilities that are initially very close to one, such as $1 - \dfrac{4\pi}{2^{n_B}}$ as a result of using QROM, in this case, one may desire to amplify it. Furthermore, similar to *U, V* in the OAE case, the amplitudes implemented by the inequality test in Section E1a are not exactly $\dfrac{1}{G_\nu}$. Indeed, while theoretically $\lambda_{v,V} = \sum_{\nu \in \mathcal{G}_0} 1/G_\nu^2$, one obtains the following adjustment for the normalization of the success state flagged by $|0\rangle_{jV}$:

$$\lambda_{v,V} = \sum_{\mu=2}^{n_p+1} \sum_{\nu \in B_\mu} \frac{\lceil M_V(2^{\mu-2}b_{min}/G_\nu)^2 \rceil}{M_V(2^{\mu-2}b_{min})^2}.$$

$$(H4)$$

This is then used to adjust the value of $\lambda_V$, along with the amplified probability and the usual $Ps(\eta, b_r)^2$ for the electrons pair superposition:

$$\lambda_V = \frac{2\pi\eta(\eta - 1)\lambda_{\nu,V}}{\Omega P_{\nu,V}^{amp} Ps(\eta, b_r)^2}. \tag{H5}$$

To complete the derivation, recall the expression for the amplified probability $P_{\nu,V}^{amp}$, where

$$P_{\nu,V}^{amp} = \sin^2((2a_V + 1)\arcsin(\sqrt{P_{\nu,V}})) \tag{H6}$$

given $a_V$ many amplitude amplifications to reach a certain success probability threshold $p_{\nu,V}^{th}$ chosen by the programmer. Finally, following the amplitude equation given by Eq. (D6), $P_{\nu,V}$ can be easily shown to be given by

$$P_{\nu,V} = \frac{\lambda_{\nu,V} b_{min}^2}{2^{n_p + 6}}. \tag{H7}$$

### 4. $\lambda_{loc}$

Recall the implementation of the momentum state for $U_{loc}$ in Section E1b, where the QROM scaled the amplitudes by $Ps(n_t, b_r)^{-1}$. Taking into account the electron pairs success probability leads to the following effective value:

$$\lambda_{loc} = \frac{4\pi\eta\lambda_{\nu,loc}}{\Omega Ps(\eta, b_r)^2}, \tag{H8}$$

where

$$\lambda_{\nu,loc} = \sum_{I,\nu} \frac{|\gamma_I(G_\nu)|}{G_\nu^2}. \tag{H9}$$

### 5. The effective value of $\lambda$

Gathering the previous results in Eqs. (H1), (H2), (H5) and (H8), the effective value of $\lambda$ is

$$\lambda = \lambda_T + \lambda_{loc} + \lambda_{NL} + \lambda_V. \tag{H10}$$

TABLE VI. Equations derived in Section I - "Error Analysis," below, linking the target errors $\varepsilon_X$ and their associated finite size registers $n_X$. By replacing the inequality with equality, one obtains the value of $n_X$ that must be chosen in order to achieve a target error $\varepsilon_X$. The notation is defined as follows: (1) Ps($n$, $b$) is the success probability of preparing a uniform superposition over $n$ basis states, using $b$ bits for the precision of the rotations involved, (2) $b_{min} := \sigma_3(B)$, where $\sigma_3(B)$ is the smallest singular value of the reciprocal lattice matrix $B = (\boldsymbol{b_1}, \boldsymbol{b_2}, \boldsymbol{b_3})$, (3) $F_{NL,I,\boldsymbol{v}}$ is some expression depending on $I$, $\boldsymbol{v}$ bounding the entries of the nonlocal term.

| Eq. (K6) | $\varepsilon_\chi \leq 2 \cdot \frac{2\pi}{2^{n_\chi}}\lambda$ |
|---|---|
| Eq. (K7) | $\varepsilon_B \leq 2 \frac{4\pi\eta 2^{2n_p-2}}{4 \cdot 2^{n_B}} \sum_{\omega,\omega'} |\langle \boldsymbol{b_\omega}, \boldsymbol{b_{\omega'}} \rangle|$ |
| Eq. (K8) | $\varepsilon_k \leq 2 \frac{(\tau+4)\pi}{2^{n_k}} \eta \sum_{t,\sigma} \left| \frac{c_{t,\sigma} n_t}{\text{Ps}(n_t, b_r)} \right|$ |
| Eq. (K10) | $\varepsilon_{M_V} \leq \frac{8\pi\eta(\eta-1)}{\Omega 2^{n_{M_V}} b_{min}^2} \left(7 \times 2^{n_p+1} - 9n_p - 11 - 3 \times 2^{-n_p}\right)$ |
| Eq. (K14) | $\varepsilon_{M_{loc}} \leq \frac{8\pi^2 \eta \max_t\left(\frac{n_t}{\text{Ps}(n_t, b_r)}\right)(3n_p+\tau)}{2^{n_{M_{loc}}} \Omega}$ |
| Eq. (K27) | $\varepsilon_R \leq \frac{2\eta\pi \max\|\boldsymbol{a_i}\|}{2^{n_R}\Omega} \sum_I \left(\sum_{\boldsymbol{\nu}\in\mathcal{G}_0} \frac{|\gamma_I(G_\nu)|}{G_\nu} + \sum_{\boldsymbol{\nu}\in\mathcal{G}} G_\nu \overline{F_{NL,I,\boldsymbol{\nu}}}\right)$ |
| Eq. (K29) | $\varepsilon_{NL} \leq \frac{18(n_p+4+\tau)\pi\eta}{2^{n_{NL}}} \sum_{I,\sigma} |c_{I,\sigma}|$ |

## I. Error Analysis

An estimate of the errors listed in Section IVA is now presented. To calculate the errors, assume that an LCU $\Sigma_a \alpha_a U_a$ is approximated by $\Sigma_a \beta_a V_a$ where $\beta_a$ is obtained after a series of approximations due to finite size register choices $S_\alpha = (n_{s_1}, ..., n_{s_k})$ and similarly for $V_a$, where one obtains a series of approximations using finite size registers $S_U = (m_{s_1}, ..., m_{s_l})$. Estimate $\|\Sigma_a \alpha_a U_a - \Sigma_a \beta_a V_a\|$ using triangle inequality by building the following LCU series:

- $\Sigma_a \alpha_a U_{a,t}$ where $0 \leq t \leq l$ means that only the finite size registers up to $m_{s_t}$ are used (and 'infinite' size for the rest). Note that $U_{a,l} = V_a$ and $U_{a,0} := U_\alpha$
- $\Sigma_a \alpha_{a,i} V_a$ where $0 \leq i \leq k$ means only the finite size registers up to $n_{s_i}$ are used. Note that $\alpha_{a,k} = \beta_a$ and $\alpha_{a,0} = \alpha_a$, and rewrite:

$$\|\sum_a \alpha_a U_a - \sum_a \beta_a V_a\| \leq \sum_{t=0}^{l} \sum_a \alpha_a \|U_{a,t} - U_{a,t+1}\| + \sum_{i=0}^{k} \sum_a |\alpha_{a,i} - \alpha_{a,i+1}|.$$

$$(I1)$$

Notice in the above triangle inequality that the finite size register choices of the unitaries were introduced first, followed by the selection probabilities.

For each of the four operators, one may identify the order in which the approximations must be introduced. For the selection probabilities, in addition to the choice $n_\chi$ which is the first to be made for all of the four operators, there is only one other approximation. For example, for T the order of approximation is ($n_\chi$, $n_B$), while for $U_{NL}$ it is ($n_\chi$, $n_k$). There is also at most one choice for the unitaries for all four operators, with the exception of the non-local term; there, the order of approximations is ($n_R$, $n_{NL}$).

This discussion concludes with a lemma that is essential in getting an accurate estimate of the errors made by QROM when scaling the qubitized operator by the normalizing factor.

**Lemma I.1.** Assume the normalized state $|\psi\rangle = \frac{1}{\sqrt{\lambda}} \Sigma_a \alpha_a |a\rangle$ with $\alpha_a \in \mathbb{C}$, is approximated by the unit

state $|\widetilde{\psi}\rangle = \Sigma_a \beta_a |a\rangle$, i.e. $\beta_a$ approximates $\frac{\alpha_a}{\sqrt{\lambda}}$ up to error:

$$\| |\psi\rangle - \widetilde{|\psi\rangle} \| = \sqrt{\sum_a |\beta_a - \frac{\alpha_a}{\sqrt{\lambda}}|^2} \le \epsilon.$$

Then

$$\sum_a ||\beta_a|^2 \lambda - |\alpha_a|^2| \le 2\epsilon\lambda.$$

(I2)

*Proof.* Use the Cauchy-Schwarz and triangle inequality:

$$\Sigma_a ||\beta_a|^2 \lambda - |\alpha_a|^2| =$$

$$\sum_a ||\beta_a|\sqrt{\lambda} - |\alpha_a|| \cdot ||\beta_a|\sqrt{\lambda} + |\alpha_a|| \le (\sum_a (|\beta_a|\sqrt{\lambda} - |\alpha_a|)^2)^{1/2} \cdot (\sum_a (|\beta_a|\sqrt{\lambda} + |\alpha_a|)^2)^{1/2} \le \quad (\text{I3})$$

$$(\sum_a |\beta_a\sqrt{\lambda} - \alpha_a|^2)^{1/2} \cdot (\sum_a |\beta_a|^2 \lambda + \sum_a |\alpha_a|^2 + 2\sum_a |\beta_a\alpha_a|\sqrt{\lambda})^{1/2} \le \epsilon\sqrt{\lambda} \cdot (2\lambda + 2\sum_a |\beta_a||\alpha_a|\sqrt{\lambda})^{1/2} \le \quad (\text{I4})$$

$$\epsilon\sqrt{\lambda} \cdot (2\lambda + 2(\sum_a |\beta_a|^2)^{1/2}(\sum_a |\alpha_a|^2)^{1/2}\sqrt{\lambda})^{1/2} = \epsilon\sqrt{\lambda} \cdot (2\lambda + 2\sqrt{\lambda}\sqrt{\lambda})^{1/2} = 2\epsilon\lambda. \quad (\text{I5})$$

The first equality is the conjugate identity, the inequality after is Cauchy-Schwartz. It is followed by a triangle

inequality for $\left(|\beta_a|\sqrt{\lambda} - |\alpha_a|\right)^2 \le \left(|\beta_a\sqrt{\lambda} - \alpha_a|\right)^2$ and the expansion of the term $\left(|\beta_a|\sqrt{\lambda} - |\alpha_a|\right)^2$. Then use directly the assumption to bound the first term, while the second term expansion simplifies since $\Sigma_a|\beta_a|^2 = 1$, $\Sigma_a|\alpha_a|^2 = \lambda$. The rest is another application of Cauchy-Schwartz.

**1. Errors in PREP**

*a.* $\varepsilon_\chi$

The register $X$ is a superposition made by QROM with target amplitudes $\frac{\lambda_x}{\lambda}$. As shown in Lemma G.1, the error in estimating the normalized state is $\epsilon = \frac{n\pi}{2^{n_\chi}}$ where $n$ is the number of qubits in register X. Since there are four operators, $n = 2$. Thus the equation determining $\varepsilon_\chi$ after taking into account the normalization $\lambda$ and using Lemma I.1 is:

$$\varepsilon_\chi \le 2 \cdot \frac{2\pi}{2^{n_\chi}}\lambda \implies n_\chi = \lceil \log(\frac{4\pi\lambda}{\varepsilon_\chi}) \rceil.$$

(I6)

Note that in the OAE setting, $\varepsilon_T$ is the closest analog to $\varepsilon_\chi$ as used herein.

*b. $\varepsilon_B$*

This error is derived similarly to the previous one. It approximates the normalized state in register *f*(Eq. (46))

up to error $\epsilon = \dfrac{4\pi}{2^{n_B}}$ as 4 qubits are used to denote the two coordinates $\omega, \omega'$. The normalization factor $\lambda$ (in the context

of Lemma 1.1) is $\dfrac{\eta 2^{2n_p-2}}{2}\sum_{\omega,\omega'}|\langle \boldsymbol{b}_\omega, \boldsymbol{b}_{\omega'}\rangle|$ , and thus the error induced is

$$\varepsilon_B \le 2\frac{4\pi}{2^{n_B}}\frac{\eta 2^{2n_p-2}}{2}\sum_{\omega,\omega'}|\langle \boldsymbol{b}_\omega, \boldsymbol{b}_{\omega'}\rangle| \implies n_B = \lceil \log(\frac{4\pi\eta 2^{2n_p-2}}{\varepsilon_B}\sum_{\omega,\omega'}|\langle \boldsymbol{b}_\omega, \boldsymbol{b}_{\omega'}\rangle|)\rceil.$$

$$(17)$$

*c. $\varepsilon_k$*

The state of register $k_{NL}$, $s_{NL}$ in Eq. (51) is made using a QROM reading $\tau$ qubits denoting the types of nuclei and 4 qubits denoting the 11 different Gaussian superpositions indexed by $\sigma$. According to Lemma G.1, this leads to an

error $\epsilon = \dfrac{\pi(\tau+4)}{2^{n_k}}$ in preparing the normalized state. By Lemma 1.1, the error induced on the selection probabilities is

$$\varepsilon_k \le 2\frac{(\tau+4)\pi}{2^{n_k}}\eta\sum_{t,\sigma}|\frac{c_{t,\sigma}n_t}{\mathrm{Ps}(n_t, b_r)}| \implies$$

$$(18)$$

$$n_k = \lceil \log(\frac{2(\tau+4)\pi\eta\sum_{t,\sigma}|\frac{c_{t,\sigma}n_t}{\mathrm{Ps}(n_t,b_r)}|}{\varepsilon_k})\rceil$$

$$(19)$$

The factor $\eta\sum_{t,\sigma}\left|\dfrac{c_{t,\sigma}n_t}{\mathrm{Ps}(n_t,b_r)}\right|$ , which is supposed to be the factor $\lambda$ in Lemma 1.1, is described in the following. Recall that the QROM used in the preparation of the superposition on $k_{NL}$, $s_{NL}$ gives amplitudes $\beta_a$ approximating

$\alpha_a = \left(\dfrac{n_t|c_{t,\sigma}|}{\mathrm{Ps}(n_t,b_r)}\right)^{1/2}$ (in Lemma 1.1 notation). When computing the error, because of the later preparation of the uniform superposition over $n_t$ basis states, an estimation more relaxed than the one in Lemma 1.1. appears: instead of $\Sigma_a\||\beta_a|^2\lambda - |\alpha_a|^2| \le 2\in\lambda$, an estimate of $\Sigma_a p_a\||\beta_a|^2\lambda - |\alpha_a|^2|$ is required where $p_a = \mathrm{Ps}(n_t, b_r) \le 1$, and thus the same bound still applies, where a substitution is made for $\lambda = \sum_a \dfrac{n_t|c_{t,\sigma}|}{\mathrm{Ps}(n_t,b_r)}$ and $\epsilon = \dfrac{(\tau+4)\pi}{2^{n_k}}$ . The factor $\eta$ corresponds to the superposition over the $\eta$ electrons.

*d. $\varepsilon_{M_V}$*

$\varepsilon_{M_V}$ has a similar profile to $\varepsilon_M$ in the OAE case, and similar estimations are obtained:

$$\varepsilon_{M_V} = \|V - \widetilde{V}\| \leq \frac{2\pi\eta(\eta-1)}{\Omega} \sum_{\mu=2}^{n_p+1} \sum_{\nu \in B_\mu} \left| \frac{1}{\|G_\nu\|^2} - \frac{1}{\|G'_\nu\|^2} \right| \leq \tag{I10}$$

$$\frac{2\pi\eta(\eta-1)}{\Omega} \sum_{\mu=2}^{n_p+1} \sum_{\nu \in B_\mu} \frac{16}{M_V 2^{2\mu} b_{min}^2} \leq \frac{2\pi\eta(\eta-1)}{\Omega} \frac{4}{M_V b_{min}^2} (7 \times 2^{n_p+1} - 9n_p - 11 - 3 \times 2^{-n_p}) \implies \tag{I11}$$

$$\varepsilon_{M_V} \leq \frac{8\pi\eta(\eta-1)}{\Omega M_V b_{min}^2} (7 \times 2^{n_p+1} - 9n_p - 11 - 3 \times 2^{-n_p}) \implies \tag{I12}$$

$$n_{M_V} = \left\lceil \log\left( \frac{8\pi\eta(\eta-1)}{\varepsilon_{M_V}\Omega b_{min}^2} (7 \times 2^{n_p+1} - 9n_p - 11 - 3 \times 2^{-n_p}) \right) \right\rceil \tag{I13}$$

Note the replacement of $\dfrac{1}{\|G'_\nu\|^2}$ by $\dfrac{16\left(M_V 2^{2\mu} b_{min}^2/(16G_\nu^2)+1\right)}{M_V 2^{2\mu} b_{min}^2}$. Also note that $b_{min} \leq 2\pi\Omega^{-1/3}$ with equality in the orthonormal case.

*e.* $\varepsilon_{M_{loc}}$

Unlike $V$, since QROM was used for the superposition, Lemma I.1 must be employed to bound $\varepsilon_{M_{loc}}$. First, note that the coefficients estimated by the QROM are $\alpha_\ell = \dfrac{\gamma_t(G_\nu)^{1/2} n_t^{1/2}}{G_\nu \mathrm{Ps}(n_t,b_r)^{1/2}}$, where $\ell = (t, \nu)$. After applying QROM, super-positions over $n_t$ nuclei of atomic species $a$ are created which introduce an amplitude of $\sqrt{\dfrac{\mathrm{Ps}(n_t,b_r)}{n_t}}$. Thus, it may be desired to first bound the error $\sum_a \dfrac{n_t}{\mathrm{Ps}(n_t,b_r)} \sum_{\ell=(t,\nu)} |\beta_\ell - \alpha_\ell|^2$. One may use the simple bound $\varepsilon = \max_t \left( \dfrac{n_t}{\mathrm{Ps}(n_t,b_r)} \right) \dfrac{\pi(3n_p+\tau)}{2^{n_{M_{loc}}}}$ where the latter term is the bound on $S_{\ell=(t,\nu)} |\beta_\ell - \alpha_\ell|^2$ given by the QROM approximation of the normalized state (Lemma G. 1). Therefore, by virtue of Lemma 1.1, where in that lemma's notation $\lambda$ must be set as $\dfrac{4\pi\eta}{\Omega} \sum_{t,\nu} \dfrac{|\gamma_t(G_\nu)|}{G_\nu^2}$ :

$$\varepsilon_{M_{loc}} = \frac{8\pi^2 \eta \max_t\left(\frac{n_t}{\mathrm{Ps}(n_t,b_r)}\right)(3n_p + \tau) \sum_{t,\nu} \frac{|\gamma_t(G_\nu)|}{G_\nu^2}}{2^{n_{M_{loc}}}\Omega} \implies \tag{I14}$$

$$n_{M_{loc}} = \left\lceil \log \left( \frac{8\pi^2 \eta \max_t \left(\frac{n_t}{\mathrm{Ps}(n_t, b_r)}\right)(3n_p + \tau) \sum_{t,\nu} \frac{|\gamma_t(G_\nu)|}{G_\nu^2}}{\varepsilon_{M_{loc}} \Omega} \right) \right\rceil. \tag{I15}$$

## 2. Errors in SEL

### a. $\varepsilon_R$

For $\varepsilon_{R,loc}$, $\varepsilon_{R,NL}$, estimations are applied to $U_{loc}$, $U_{NL}$. Let $\widetilde{U_{loc}}$ be the approximation of $U_{loc}$ as a result of using $n_R$ bits to compute the approximation $\widetilde{R_I}$ of $R_I$, and define $\delta_R = \max_I \|R_I - \widetilde{R_I}\|$. One obtains $\delta_R \leq \frac{\max\|a_i\|}{2^{n_R+1}}$ as $R_I = \Sigma_{i=1}^3 a_i r_{i,I}$, where $0 \leq r_{i,I} \leq 1$ are the given fractional coordinates of the nuclei in the cell. Given LCU of $U_{loc}$ (Eq. (39)), one obtains:

$$\varepsilon_{R,loc} = \|U_{loc} - \widetilde{U_{loc}}\| \leq \frac{4\eta\pi}{\Omega} \sum_{\nu \in \mathcal{G}_0, I} \frac{|\gamma_I(G_\nu)|}{G_\nu^2} |e^{-iG_\nu \cdot R_I} - e^{-i\nu \cdot \widetilde{R_I}}| \leq \tag{I16}$$

$$\frac{4\eta\pi}{\Omega} \sum_{\nu \in \mathcal{G}_0, I} \frac{|\gamma_I(G_\nu)|}{G_\nu^2} \|G_\nu\| \cdot \|(R_I - \widetilde{R_I})\| \leq \frac{2\eta\pi \max\|a_i\|}{2^{n_R}\Omega} \sum_{\nu \in \mathcal{G}_0, I} \frac{|\gamma_I(G_\nu)|}{G_\nu} \tag{I17}$$

A similar bound can be derived for $U_{NL}$. Here, a tight estimate is derived first, followed by an easier-to-compute pessimistic estimate for the purpose of resource estimation. Define:

$$f_{NL,I}(p,q) = \left\{ \frac{4r_0^3}{B_0} e^{-(G_p^2+G_q^2)r_0^2/2} + \frac{16r_1^5}{3B_1} (G_p \cdot G_q) e^{-(G_p^2+G_q^2)r_1^2/2} \right.$$

$$\left. + \left[ \frac{32r_2^7}{15B_2} (G_p \cdot G_q)^2 + \frac{32r_2^7}{45B_2} (G_p G_q)^2 \right] e^{-(G_p^2+G_q^2)r_2^2/2} \right\} \tag{I18}$$

Then,

$$U_{NL} = \frac{4\pi\eta}{\Omega} \sum_{p,q \in \mathcal{G}, I} e^{-i(G_q - G_p) \cdot R_I} f_{NL,I}(p,q) |p\rangle \langle q|$$

and one obtains:

$$\varepsilon_{R,NL} = \|U_{NL} - \widetilde{U_{NL}}\| \le \frac{4\eta\pi\delta_R}{\Omega} \sum_{\nu \in \mathcal{G}} G_\nu \sum_I \|\sum_{q \in \mathcal{G}} f_{NL,I}(q - \nu, q) |q - \nu\rangle\langle q|\|$$

$$(I19)$$

Notice the matrix $\sum_{q \in \mathcal{G}} f_{NL,I}(q - v, q)|a - v\rangle\langle q|$ is a shift of a diagonal matrix, thus its norm is the maximum entry $F_{NL,I,v} = \max_q |f_{NL,I}(q - v, q)|$. It follows:

$$\varepsilon_{R,NL} \le \frac{4\eta\pi\delta_R}{\Omega} \sum_{\nu \in \mathcal{G}, I} G_\nu F_{NL,I,\nu}$$

$$(I20)$$

Substituting for $\delta_R$, the total bound is

$$\varepsilon_R \le \varepsilon_{R,loc} + \varepsilon_{R,NL} \le \frac{2\eta\pi \max\|a_i\|}{2^{n_R}\Omega} \sum_I \left(\sum_{\nu \in \mathcal{G}_0} \frac{|\gamma_I(G_\nu)|}{G_\nu} + \sum_{\nu \in \mathcal{G}} G_\nu F_{NL,I,\nu}\right) \implies$$

$$(I21)$$

$$n_R = \left\lceil \log\left(\frac{2\eta\pi \max\|a_i\|}{\varepsilon_R \Omega} \sum_I \left(\sum_{\nu \in \mathcal{G}_0} \frac{|\gamma_I(G_\nu)|}{G_\nu} + \sum_{\nu \in \mathcal{G}} G_\nu F_{NL,I,\nu}\right)\right) \right\rceil$$

$$(I22)$$

Computing $\sum_{v \in \mathcal{G}} G_v F_{NL,I,v}$ may be time-consuming as the number of entries to compute scales with $N^2$. Thus, a more pessimistic bound may be selected by adding the absolute value of all entries instead of the above grouping:

$$\varepsilon_{R,NL} = \|U_{NL} - \widetilde{U_{NL}}\| \le \frac{4\eta\pi\delta_R}{\Omega} \sum_I \sum_{p,q \in \mathcal{G}} \|G_q - G_p\| |f_{NL,I}(p,q)| \le \frac{4\eta\pi\delta_R}{\Omega} \sum_I \sum_{p,q \in \mathcal{G}} (G_p + G_q)|f_{NL,I}(p,q)|$$

$$(I23)$$

followed by the approximation below, where all summations are over $\mathcal{G}$ :

$$\sum_{p,q} (G_p + G_q)|f_{NL,I}(p,q)| \le 2 \cdot |\frac{4r_0^3}{B_0}|((\sum e^{-G_p^2 r_0^2/2})(\sum G_p e^{-G_p^2 r_0^2/2}) - \sum G_p e^{-G_p^2 r_0^2}) + \quad (I24)$$

$$2 \cdot |\frac{16r_1^5}{3B_1}|((\sum G_p^2 e^{-G_p^2 r_1^2/2})(\sum G_p e^{-G_p^2 r_1^2/2}) - \sum G_p^3 e^{-G_p^2 r_1^2}) + \quad (I25)$$

$$2 \cdot |\frac{128r_2^7}{45B_2}|((\sum G_p^3 e^{-G_p^2 r_2^2/2})(\sum G_p^2 e^{-G_p^2 r_2^2/2}) - \sum G_p^5 e^{-G_p^2 r_2^2}) \quad (I26)$$

where the triangle inequality and Cauchy-Schwartz were used for all applicable expressions involved in $f_{NL,I}$ and the projector nature of the pseudopotential matrix entries was leveraged to write the estimation above in such a way that it would be easier to compute on a classical computer. Denoting the above estimation by $F_{NL,I}$ one may derive the pessimistic bound:

$$\varepsilon_R \le \frac{2\eta\pi \max\|a_i\|}{2^{n_R}\Omega} \sum_I \left(F_{NL,I} + \sum_{\nu \in \mathcal{G}_0} \frac{|\gamma_I(G_\nu)|}{G_\nu}\right) \implies$$

$$(I27)$$

$$n_R = \left\lceil \log \left( \frac{2\eta\pi \max \|a_i\|}{\varepsilon_R \Omega} \sum_I \left( F_{NL,I} + \sum_{\nu \in \mathcal{G}_0} \frac{|\gamma_I(G_\nu)|}{G_\nu} \right) \right) \right\rceil$$

(I28)

*b.* $\varepsilon_{NL}$

Note that $\||\psi\rangle - |\tilde{\psi}\rangle\| \leq \varepsilon \Rightarrow \|P_{|\psi\rangle} - P_{|\tilde{\psi}\rangle}\| \leq 2\varepsilon + \varepsilon^2 \leq 3\varepsilon$ where $P_v$ is the projection onto **v**. Given that in the implementation of $I - 2 |\Psi_{I,\sigma}\rangle\langle\Psi_{I,\sigma}|$, one may apply three QROMs for each coordinate, the error in approximating $|\Psi_{I,\sigma}\rangle$,

$$\epsilon' = \frac{n\pi}{2^{n_{NL}}}$$

up to first order, is $\varepsilon = 3\varepsilon'$ for (as shown in Section G1 - "QROM: Application, Parallelization and Costs - Using QROM to Prepare Superpositions") with $n = n_p + \tau + 4$ or $n = n_p + \tau + 2$ when states $|\Psi_{I,\sigma}\rangle$ of type (*c*) in Eq. (E11) are prepared. The second and higher order of errors were not considered in the approximation as their impact is too small, and a pessimistic estimate was already obtained above by taking $\varepsilon^2 \leq \varepsilon$. Thus, for the reflections, one obtains:

$$\|(-I + 2 |\psi\rangle \langle\psi|) - (-I + 2 |\tilde{\psi}\rangle \langle\tilde{\psi}|)\| \leq 18\epsilon'$$

The above can be applied to each of the 13 different types of errors (Remark E. 1) in the LCU (Eq. (42)) of $U_{NL}$ to get the following:

$$\varepsilon_{NL} = \|U_{NL} - \widetilde{U_{NL}}\| \leq \frac{18(n_p + 4 + \tau)\pi\eta}{2^{n_{NL}}} \sum_{I,\sigma} |c_{I,\sigma}| \implies$$

(I29)

$$n_{NL} = \left\lceil \log \left( \frac{18(n_p + 4 + \tau)\pi\eta}{\varepsilon_f} \sum_{I,\sigma} |c_{I,\sigma}| \right) \right\rceil$$

(I30)

*Remark* I.1. In the summation above over o, the index goes over 13 terms instead of 11 as in Eq. (H2). Specifically, it copies $|C_{I,(2,0)}|$ three times to adhere to the observation in Remark E.1.
*Remark* I.2. As explained in Section E2, the implementation of the reflection onto $|\Psi_{I,(2,0)}\rangle$ can include an additional QROM to prepare a one-hot-encoded superposition $\sum_{i=1}^{3} \sqrt{\frac{(b_i)_i^4}{\Sigma(b_i)_i^4}} |i\rangle$ . Since this is a superposition over a small number of qubits, the SELECT variant of QROM may be used. One may denote by $n'_{NL}$ the number of qubits used by the QROM's rotation to prepare the superposition. To be truly rigorous in the analysis above for $\varepsilon_{NL}$, one

would need to consider the impact of the error $\varepsilon_{NL'}$ caused by this QROM which satisfies $\varepsilon_{NL'} \leq 3\pi \cdot 2^{-n'_{NL}}$ .
To facilitate analysis for case-studies set forth herein, while also retaining accuracy later on in the resource estimations, $n'_{NL}$ was selected to be so large that it gives the superposition with an almost negligible error. By choosing

$$n'_{NL} = 50$$

, one can obtain an error of order 8e-15, which is small enough to be safely ignored in the analysis set forth herein. Even for larger materials than those in case studies of the present disclosure, with a much larger $\lambda_{NL}$, one can always increase $n'_{NL}$ enough to be able to apply this simplified analysis, and the impact of that on gate and qubit costs is simply $3n'_{NL}$ and $n'_{NL}$, respectively.

**J. Gate costings**

A few remarks regarding the expressions in Table VII:

1. The cost for the reflections on $|\Psi_{I,\sigma}\rangle$ for all $\sigma$ will need to change slightly for the materials with non-orthogonal lattices (see Section J2).

2. The parameters $\beta_x$ appearing in the QROM costs determine the space-depth tradeoff of the QROM (Table IV). Optimizing the expressions above in terms of $\beta_x$ generally leads to a much higher total number of qubits compared to the AE case. Thus $\beta_x$ may be determined in a way that satisfies constraints on the number of qubits that can be used, while leveraging the parallelization capacity of QROM to prevent an increase in the depth.

3. While the Toffoli cost is listed in Table VII, the resource estimations emphasize Toffoli depth, and calculating the latter mostly involves replacing the QROM costs expressions in Table VII by their depth formulae in Table IV. This is shown in detail below.

**1. PREP**

*a. Register X*

The superposition $\sum_{\chi \in \{0,1\}^2} \sqrt{\frac{\lambda_\chi}{\lambda}} |\chi\rangle_\chi$ on two qubits is prepared using the SELECT variant of QROM and its gate cost is directly derived from Eq. (G9). Notice that the inverse of the operation in PREP† is responsible for the doubling of the cost.

*b. Register f*

The SELECT variant of QROM can be used to prepare the superposition in register *f*. Additionally, the same variant can be used to output sgn($\langle \boldsymbol{b}_\omega, \boldsymbol{b}_\omega \rangle$) in the fifth qubit. According to Eq. (G9), the former has cost $2(2^{4+1} - 1) + (n_B - 3)4$ as 4 qubits are used, and the latter has cost $2^4$ according to Eq. (G5). The inverse of these operations for PREP† have the same cost.
*Remark* J.1. Notice that if the number of qubits to be read is small and the number of qubits used for storing the output is relatively much larger, then it is less costly to use the SELECT variant of QROM instead of the more sophisticated variants such as SELSWAPDIRTY.

*c. Register R*

Again, the SELECT variant of QROM is used to output the nuclei coordinates $\boldsymbol{R}_I$ into register $\boldsymbol{R}$. Notice two such QROMs are used (for the local and non-local terms) and each read the nuclei type and its enumeration, i.e. $\tau + \max_t n_t$ qubits. Further, they are controlled on an additional qubit (registers *loc* and *NL* for the local and non-local terms). The cost is directly derived from Eq. (G5) which is doubled due to the inverse of PREP.

| Procedure for PREP | Toffoli cost |
|---|---|
| Preparing the superposition for register $X$; see Section J1a. | $2 \cdot \left[ 2(2^{2+1} - 1) + \left( n_\chi - 3 \right) 2 \right]$ |
| The c, d, e registers are equal superpositions over $\eta$ values of $i$ and $j$ in unary | $14 n_\eta + 8 b_r - 36$ |
| The f, g, h registers used for $T$; see Su et al. at Eq. (70) for example g, h preparation costs and Section J1b for register f. | $2 \cdot \left[ 2(2^{4+1} - 1) + (n_B - 3)4 + 2^4 + \left( n_p - 2 \right) \right]$ |
| The two QROMs used for outputting $\boldsymbol{R_I}$ in register $\boldsymbol{R}$; see Section J1c. | $2 \cdot \left[ 2(2^{\tau + \max_t n_t + 1}) \right]$ |
| Making the uniform superposition on the nuclei of each type $t$ in $k'_{loc}$, $k_{NL}$ registers; see Section J1d. | $2 \cdot \left[ 2(3\max_t n_t - 3 v_2(\max_t n_t) + 2 b_r - 9 + 2 \cdot 2^\tau) \right]$ |
| The $(k_{NL}, s_{NL})$ register superposition prepared using QROM. $\beta_k$ defined in Eq. (J2). | $2 \cdot \left[ 2 \left( 2 \left\lceil \frac{2^{\tau + 4 + 1} - 1}{\beta_k} \right\rceil + 3 n_k (\tau + 4) \beta_k + 2(\tau + 4) \right) + (n_k - 3)(\tau + 4) + 2^{\tau + 2} \right] + 12$ |
| Preparing the superposition for the register $(j_v, k_v)$ with amplitudes $1/G_v$ using QROM in inequality test; $\beta_V$ defined in Eq. (J4). | $(2 a_V + 1) \cdot \left[ 2 \left( 2 \left\lceil \frac{2^{3 n_p}}{\beta_V} \right\rceil + 3 \beta_V \left( n_{M_V} + 1 \right) \right) + 8 \left( n_p - 1 \right) + 6 n_p + 2 + \left( n_{M_V} + 1 \right) \right]$ |
| Preparing the superposition for the register $(k_{loc}, s_{loc})$ using QROM; $\beta_{loc}$ defined in Eq. (J6). $k'_{loc}$ | $2 \cdot \left[ 2 \left( 2 \left\lceil \frac{2^{3 n_p + \tau + 1}}{\beta_{loc}} \right\rceil + 3 \beta_{loc} n_{M_{loc}} \left( 3 n_p \right) + 2 \left( 3 n_p \right) \right) + \left( n_{M_{loc}} - 3 \right) \left( 3 n_p + \tau + 1 \right) \right]$ |
| Toffolis used to compute the registers $\lvert \cdot \rangle_{NL,c}$; see Section E2. | 4 |

| Procedure for SEL | Toffoli cost |
|---|---|
| Controlled swaps of the $p$ and $q$ registers into and out of ancillae (which is used for all four operators) | $12 \eta n_p + 4 \eta - 8$ |
| The SEL cost for $T$ | $5(n_p - 1) + 2$ |
| Controlled additions and subtractions of $v$ into the momentum registers for $U_{loc}$, $V$ | $48 n_p$ |
| Phasing by $-e^{-iG_v \cdot R_I}$ for $U_{loc}$ | $6 n_p n_R$ |

(continued)

| Procedure for SEL | Toffoli cost |
|---|---|
| Phasing by $-e^{-i(G_q - G_p) \cdot R_l}$ for $U_{NL}$ | $12 n_p n_p$ |
| Cost of reflection on $|\Psi_{l,\sigma}\rangle$ for $U_{NL}$ where $n_{\text{qrom}} = n_p + \tau + 4$. $\beta_{NL}$ defined in Eq. (J12). | $6 \cdot \left[ 2 \left( 2 \left\lceil \dfrac{2^{n_{\text{qrom}}+1} - 2^{n_{\text{qrom}}-n_p}}{\beta_{NL}} \right\rceil + 3\beta_{NL} n_{NL} n_p + 2n_p \right) + (n_{NL} - 3)n_p \right] + \left( 3n_p - 1 \right)$ |
| Cost of reflection on $|\Psi_{l,(2,0)}\rangle$ where $n'_{\text{qrom}} = n_p + \tau + 2$, $\beta'_{NL}$ defined in Eq. (J14). | $5 \cdot 2 \cdot \left[ 2 \cdot (2^{3+1} - 1) + 3(n'_{NL} - 3) + 3 \cdot \left[ 2 \left( 2 \left\lceil \dfrac{2^{n'_{\text{qrom}}+1} - 2^{n'_{\text{qrom}}-n_p}}{\beta'_{NL}} \right\rceil + 3\beta'_{NL} n_{NL} n_p + 2n_p \right) + (n_{NL} - 3)n_p \right] + n_{AA} \right]$ |
| | |
| Reflection on state preparation qubits | Toffoli cost |
| Reflection on the qubits used in state preparation; see Section J3. | $2n_\eta + 9n_p + n_{M_V} + 35 + 2(\tau + \max_t n_t)$ |

TABLE VII. The costs involved in implementing the qubitization $Q = (2|\mathbf{0}\rangle\langle\mathbf{0}| - \mathbb{I})\text{PREP}_H^\dagger \cdot \text{SEL}_H \cdot \text{PREP}_H$, which involves the block-encoding of the Hamiltonian ($\text{PREP}_H$ with its uncomputation $\text{PREP}_H^\dagger$, and $\text{SEL}_H$), and the reflection $(2|\mathbf{0}\rangle\langle\mathbf{0}| - \mathbb{I})$ on state preparation qubits.

*d. Uniform superpositions in $k'_{loc}$, $k_{NL}$*

An algorithm and cost estimate are used for preparing a uniform superposition over $n_t$ basis states enumerating the nuclei of each type $t$ in register $k'_{loc}$ $k_{NL}$. Example implementation details can be found, by way of example only, in Lee et al. Given that the inverse PREP has the same cost, the Toffoli cost is given as $2[2(3 \max_t n_t - 3v_2(\max_t n_t) + 2b_r - 9)]$.

Two registers may be desired, however, that store the number of qubits needed for the superposition over $n_t$ many basis states, and the number $n_t$ itself, that has to be available for the algorithm (see, e.g., Lee et al., App. A.2). These two registers are computed using the SELECT variant of QROM that needs to read only the type of the nuclei, and thus have a cost of $2 \cdot 2^\tau$, which is further doubled due to the inverse of PREP.

*e. QROM superposition for $k_{NL}$, $s_{NL}$*

One may apply QROM to build the superposition over $(t, (\sigma))$, meaning $\tau + 4$ qubits are read. Thus, following Eq.

$$2\left(2\left\lceil\frac{2^{\tau+4+1}-1}{\beta_k}\right\rceil + 3n_k(\tau+4)\beta_k + 2(\tau+4)\right)+$$

(G8), the cost is $(n_k - 3)(\tau + 4)$, where $\beta_k$ is later defined.

In addition, one may desire the cost of computing $\text{sgn}(c_{t,\sigma})$, which itself can be done using a QROM oracle of SELECT variant, with cost $2^{\tau+2}$ as it needs to only read the type of nuclei along with two bits that determine to which of the three subgroup of the 13 types of Gaussian superposition $\sigma$ belongs to (i.e. $\sigma = 0$, or $1 \le \sigma \le 3$, $3 < \sigma < 11$). Those two bits are computed by inequality tests and require $4 \times 3 = 12$ Toffolis. While they can be un-computed without any Toffolis, the rest of the cost is doubled as the inverse of PREP is implemented, yielding the total cost

$$2 \cdot \left[2\left(2\left\lceil\frac{2^{\tau+4+1}-1}{\beta_k}\right\rceil + 3n_k(\tau+4)\beta_k + 2(\tau+4)\right)+\right.$$

$$\left. (n_k - 3)(\tau + 4) + 2^{\tau+2}\right] + 12.$$

**Parallelization.** Though QROM is not efficient in terms of the qubits read, its implementation can be substantially parallelized. The material and notation in the review of parallelization of QROM in Section G3 - "QROM: Application, Parallelization and Costs - QROM Parallelization" can be used to make the depth estimates for this and future parallelizations of QROMs.

The SELSWAPDIRTY implementation of QROM, which uses dirty ancillae, can be used for the purpose of parallelization. One may also take into account the maximum simultaneous Toffoli application (related to T-state insertion) of the quantum computer, denoted by $n_{\text{parallel}}$, along with the maximum number of dirty ancillae allowed, denoted by $n_{\text{dirty}}$, to maximally parallelize the computation.

Denote by $\kappa_k$ the parallelization factor desired for this computation (see Section G3 - "QROM: Application, Parallelization and Costs - QROM Parallelization" for the exact definition), for which $\beta_k \kappa_k \le n_{\text{parallel}}$. Additionally, one may desire $\beta_k n_k \le n_{\text{dirty}}$. Then the cost according to Eq. (G11) becomes:

$$2(2\lceil\frac{2^{\tau+4+1}-1}{\beta_k}\rceil + 3\lceil\frac{n_k}{\kappa_k}\rceil(\tau+4)\lceil\log(\beta_k)\rceil + 2(\tau+4)) + (n_k - 3)(\tau+4) \quad \text{(J1)}$$

A simple optimization on this, considering the two constraints above, yields

$$\beta_k = \lfloor\min(\frac{n_{dirty}}{n_k}, \frac{n_{parallel}}{\kappa_k}, \frac{2\cdot(2^{\tau+4+1}-1)}{3n_k(\tau+4)/\kappa_k}\log_e(2))\rfloor \quad \text{(J2)}$$

where $\log_e$ is the logarithm in the natural basis.

*f. QROM and inequality test cost for the momentum state superposition for V*

The subroutines used in the inequality test procedure include preparing the superposition over $|m, \mu\rangle$, checking the signs of $\boldsymbol{v}$ and testing $\boldsymbol{v} \neq 0$, and calculating the cost for computing both sides of the inequality test.

One may compute $\frac{M_V(2^{\mu-2}b_{min})^2}{G_v^2}$ up to $n_{M_V}$ bits, ensuring comparison with mis most accurate especially if

$\frac{M_V(2^{\mu-2}b_{min})^2}{G_v^2}$ has a nonzero decimal part. Then a QROM reading $\boldsymbol{v}$ in the two's complement representation outputs this precision with cost obtained as in (Eq. (G6)). The uncomputation of this QROM in PREP$^\dagger$ doubles this cost yielding a total of $2\left(2\left\lceil\frac{2^{3n_p}}{\beta_V}\right\rceil + 3\beta_V n_{M_V}\right)$, where $\beta_V$ is later defined. The rest of the cost is derived (e.g., according to Su et al.) and totals $8(n_p - 1) + 6n_p + 2 + n_{M_V}$. Finally, the $a_V$ amplitude amplification multiplies this cost by $2a_V + 1$.

*Remark* J.2. In case one desires to apply the technique in Section F - "Amplitude Amplification with Fewer Steps," above, one has to add $n_{AA}$ - 2 Toffoli cost before multiplying this total by $2a_V + 1$. $n_{AA}$ is defined in Section F - "Amplitude Amplification with Fewer Steps," above. In case studies set forth herein, it was found that it is more cost efficient to lower the threshold of success so that the exact amplitude amplification technique is no longer needed. Even though this implies a lower denominator in Eq. (H5), it is better than increasing the number of amplitude amplifications steps.

**Parallelization.** Using a similar notation to the previous part, one may denote by $\kappa_V$ the parallelization factor of QROM in this case, and the constraints are $\beta_V \kappa_V \leq n_{parallel}$, $\beta_V n_{M_V} \leq n_{\text{dirty}}$. Then, following Eq. (G10), the total depth formula for the circuit becomes:

$$(2a_V + 1)[2(2\lceil \frac{2^{3n_p}}{\beta_V} \rceil + 3\lceil \log(\beta_V) \rceil \lceil \frac{n_{M_V}}{\kappa_V} \rceil) + 8(n_p - 1) + 6n_p + 2 + n_{M_V}] \tag{J3}$$

where

$$\beta_V = \lfloor \min(\frac{n_{dirty}}{n_{M_V} + 1}, \frac{n_{parallel}}{\kappa_V}, \frac{2 \cdot 2^{3n_p}}{3(n_{M_V} + 1)/\kappa_V} \log_e(2)) \rfloor \tag{J4}$$

*g. QROM and inequality test cost for the momentum state superposition for $U_{loc}$*

Unlike the preparation state for $V$, here the QROM may be used to directly prepare the superposition over the momentum state, the type of the nuclei and the sign of the selection probability. One may desire a QROM that reads $3n_p + \tau$ qubits where $a$ is the type of the nuclei that identifies the function $\gamma_i(G_v)$. The precision of the QROM is $n_{M_{loc}}$ bits, thus given PRE†, the total cost of the QROM is $2 \cdot \left[ 2 \left( 2 \lceil \frac{2^{3n_p+\tau+1}}{\beta_{loc}} \rceil + 3\beta_{loc} n_{M_{loc}} (3n_p - 1) + 3\beta_{loc}(n_{M_{loc}} \right. \right.$ $+ 1) + 2(3n_p)) + (n_{M_{loc}} - 3)(3n_p + \tau + 1)]$ with $\beta_{loc}$ defined later. Notice that in the superposition preparation scheme, the QROM oracle is used $3n_p + \tau$ times, the very last of which outputs also the $\text{sgn}(\gamma_i(G_v))$ into $s_{loc}$ register, thus uses a register of size $n_{M_{loc}} + 1$ for its output. As a result the cost formula is slightly changed.

**Parallelization.** Following the same strategy in the previous case, one may opt to optimize the depth of the computation. Similarly define $\kappa_{loc}$, and consider the constraints $\beta_{loc}\kappa_{loc} \leq n_{parallel}$, $\beta_{loc}(n_{M_{loc}} + 1) \leq n_{\text{dirty}}$. $n_{M_{loc}} + 1$ can be used instead of $n_{M_{loc}}$ for the very last QROM to obtain an upper bound of the resource estimate, and one may use the former quantity in the inequalities for $\beta_{loc}$. The depth of the circuit becomes

$$2 \cdot [2(2\lceil \frac{2^{3n_p+\tau+1} - 1}{\beta_{loc}} \rceil + 3\lceil \log(\beta_{loc}) \rceil \lceil \frac{n_{M_{loc}}}{\kappa_{loc}} \rceil (3n_p - 1) + 3\lceil \log(\beta_{loc}) \rceil \lceil \frac{n_{M_{loc}} + 1}{\kappa_{loc}} \rceil + 2(3n_p)) + (n_{M_{loc}} - 3)(3n_p + \tau)] \tag{J5}$$

where

$$\beta_{loc} = \lfloor \min(\frac{n_{dirty}}{n_{M_{loc}} + 1}, \frac{n_{parallel}}{\kappa_{loc}}, \frac{2 \cdot (2^{3n_p+\tau+1} - 1)}{3(n_{M_{loc}} + 1)(3n_p)/\kappa_{loc}} \log_e(2)) \rfloor \tag{J6}$$

*h. Toffolis to compute the selection qubit registers*

A discussion was presented in Section IIID2 of how to compute the registers that denote the selection of an operator $X$, i.e. $|\cdot\rangle_T$, $|\cdot\rangle_V$, $|\cdot\rangle_{loc}$, $|\cdot\rangle_{NL}$. Their Toffoli costs are 6, 3, 3, $\tau + 9$, respectively. The inverse of PREP in this case can be done via measurements and Clifford gates.

## 2. SEL

The following presents cost estimates that are very similar to the AE setting.

**CSWAPs.** The algorithm and cost estimate, for example as used in Su et al. (e.g., Eqs. (72-73)), similarly applies to perform the CSWAPs on the plane wave vectors for all four operators and the bits $r$, $s$ of coordinates $\omega$, $\omega'$ for the operator $T$.

**Controlled addition/subtraction of the momentum state vector.** While the same cost in the AE setting was computed as $24n_p$, here one needs to take into account two separate applications of this operation for $U_{loc}$, $V$ yielding $48n_p$.

**Phasings by the nuclei coordinates.** There are two such phasings, one for the local part, which cost is computed, for example as in Su et al (e.g., Eq, (97)) and estimate $6n_p n_R$, and another for the non-local, which cost is twice, as the phase is applied once for $\boldsymbol{G_q}$ and then for $\boldsymbol{G_p}$ after the reflection on $|\Psi_{l,\sigma}\rangle$. Thus its cost is $2 \cdot 6n_p n_R = 12n_p n_R$.

### a. Reflection on $|\Psi_{l,\sigma}\rangle$

There are two costs to be estimated. One is the preparation of $|\Psi_{l,\sigma}\rangle$ by the operator $U_{l,\sigma}$ and the other is the reflection onto $|0\rangle_{NL}|0\rangle^{\otimes 3n_p}$. The latter's Toffoli cost is well-known: $(3n_p + 1) - 2$. Below the costs are computed for a material with an orthogonal lattice, and end with a remark on what changes for the non-orthogonal cases.

For the former, one may take into account the 3 QROMs used for each axis, along with their inverse that follows the reflection on $|0\rangle_{NL}|0\rangle^{\otimes 3n_p}$, Thus a factor of 6 comes in front of the QROM superposition cost. Furthermore, the QROM reads $n_{qrom} = n_p + \tau + 4$, i.e., the number of bits in one coordinate $\boldsymbol{p_\omega}$ of the plane wave vector $\boldsymbol{p}$, along with the type and enumeration of the nuclei $(l, \sigma)$, But since $\tau + 4$ of these qubits are already determined by the PREP state, the iterative process of QROM to build the superposition happens only $n_p$ times. Thus the QROM superposition cost is

$$2\left(2\left\lceil \frac{2^{n_{qrom}+1} - 2^{n_{qrom}-n_p}}{\beta_{NL}} \right\rceil + 3\beta_{NL}n_{NL}n_p + 2n_p\right) +$$

$(n_{NL} - 3)n_p$ (to be compared to Eq. (G8)), where the number of qubits used for the rotation ancilla is $n_{NL}$.

Similarly the cost to implement $V_{l,\sigma}$ for the reflection onto the states of type (c) can be computed with cost $5 \cdot 6(QROM_O + QROM_i + (n_{AA} - 2) + 2)$, where:

- the factor of five is because of the amplitude amplification,
- $n_{AA}$ - 2 is due to using the procedure in Section F - "Amplitude Amplification with Fewer Steps," above,
- the additional 2 is to compute the flag qubit for the successful preparation, and

$$QROM_i = 2 \cdot (2^{3+1} - 1) + 3(n'_{NL} - 3),$$

$$(J7)$$

$$QROM_O = 2(2\lceil \frac{2^{n'_{qrom\_bits}+1} - 2^{n'_{qrom\_bits}-n_p}}{\beta'_{NL}} \rceil + 3\beta'_{NL}n_{NL}n_p + 2n_p) + (n_{NL} - 3)n_p,$$

$$(J8)$$

with n'$_{qrom\_bits}$ = $n_p + \tau + 2$ and $n'_{NL} = 50$. $QROM_i$ is the cost of the QROM which prepares the one-hot-encoded superposition $\sum_{i=1}^{3} \sqrt{\frac{(b_i)_i^4}{\Sigma(b_i)_i^4}} |i\rangle$ and $QROM_O$ is the cost of the QROM preparing the superposition of $\psi_{l,(2,0)}$ once followed by amplitude amplification. *Remark* J.3. As mentioned beforehand, for the non-orthogonal lattices in case studies of the present disclosure, which allow a decomposition of the Gaussian states into 1D and 2D factors, an amplitude amplification need not be performed, and the hot-encoded superposition above is over two qubits. The changes to costs are straightforward to compute. For example, one obtains the following changes:

$$QROM_i = 2 \cdot (2^{2+1} - 1) + 3(n'_{NL} - 3).$$ (J9)

$$QROM_O = 2(2\lceil \frac{2^{n'_{\text{qrom\_bits}}+1} - 2^{n'_{\text{qrom\_bits}}-n_p}}{\beta'_{NL}} \rceil + 3\beta'_{NL} n_{NL} n_p + 4n_p) + (n_{NL} - 3)2n_p,$$ (J10)

where one should note the substitution $n'_{\text{qrom\_bits}} = 2n_p + \tau + 2$ and replacing $n_p$ with $2n_p$ where appropriate.

**Parallelization.** Given the decomposition of QROM to three parallel QROMs, the computation can be parallelized more so than in the previous procedures. One may apply the three QROMs in parallel, in addition to parallelizing each of them using Eq. (G11), yielding a depth of

$$2(2\lceil \frac{2^{n_{\text{qrom\_bits}}+1} - 2^{n_{\text{qrom\_bits}}-n_p}}{\beta_{NL}} \rceil + 3\lceil \log(\beta_{NL}) \rceil \lceil \frac{n_{NL}}{\kappa_{NL}} \rceil n_p + 2n_p) + (n_{NL} - 3)n_p$$ (J11)

to implement $|\Psi_{l,\sigma}\rangle$. Note, however, that the number of dirty qubits used in this case is $3\beta_{NL}n_{NL} \le n_{\text{dirty}}$ where the factor 3 is due to parallelization of all three QROMs. Similarly, one obtains $3\beta_{NL}\kappa_{NL} \le n_{\text{parallel}}$. These constraints imply the following optimization:

$$\beta_{NL} = \lfloor \min(\frac{2(2^{n_{\text{qrom\_bits}}+1} - 2^{n_{\text{qrom\_bits}}-n_p})}{3n_{NL}n_p/\kappa_{NL}} \log_e(2), \frac{n_{dirty}}{3n_{NL}}, \frac{n_{parallel}}{3\kappa_{NL}}) \rfloor.$$ (J12)

The same arguments apply for $\beta'_{NL}$, changing the depth to

$$2(2\lceil \frac{2^{n'_{\text{qrom\_bits}}+1} - 2^{n'_{\text{qrom\_bits}}-n_p}}{\beta'_{NL}} \rceil + 3\lceil \log(\beta'_{NL}) \rceil \lceil \frac{n_{NL}}{\kappa_{NL}} \rceil n_p + 2n_p) + (n_{NL} - 3)n_p$$ (J13)

where:

$$\beta'_{NL} = \lfloor \min(\frac{2(2^{n'_{\text{qrom\_bits}}+1} - 2^{n'_{\text{qrom\_bits}}-n_p})}{3n_{NL}n_p/\kappa'_{NL}} \log_e(2), \frac{n_{dirty}}{3n_{NL}}, \frac{n_{parallel}}{3\kappa'_{NL}}) \rfloor.$$ (J14)

*Remark* J.4. In the non-orthogonal case studies, the cost and parallelization need to reflect a decomposition of the Gaussian superpositions into a 1D and a 2D Gaussian superposition. The changes are straightforward to calculate. For example, $n_{\text{qrom\_bits}}$ in Eq. (111) must be changed to $2n_p + \tau + 4$, and the conditions for $n_{\text{dirty}}$, $n_{\text{parallel}}$ change to $2\beta_{NL}\kappa_{NL} \le n_{\text{parallel}}$, $2\beta_{NL}\kappa_{NL} \le n_{\text{parallel}}$ (similarly for $\beta'_{NL}$). Therefore, Eq. (J12) changes to

$$\beta_{NL} = \lfloor \min(\frac{2(2^{n_{\text{qrom\_bits}}+1} - 2^{n_{\text{qrom\_bits}}-n_p})}{3n_{NL}n_p/\kappa_{NL}} \log_e(2), \frac{n_{dirty}}{2n_{NL}}, \frac{n_{parallel}}{2\kappa_{NL}}) \rfloor.$$ (J15)

One can similarly obtain the correct equations for $\beta'_{NL}$.

### 3. ROT costings

The complete formula for qubitization Q needs a reflection on the qubits used in the state preparation. The number of these qubits equals the Toffoli cost of this reflection which has to be controlled on the qubits used as control for the phase measurement and requires an additional Toffoli for iterating those control qubits. In some embodiments, the qubits that need to be reflected upon include:

- The two qubits that are rotated to select between the operators $\chi$.
- There are $n_p$ for each of $r$ and $s$, for a total of $2n_p$.
- There are five qubits for register $f$, for a total of 5. Note the flag qubits for ineligible states are re-zeroed by PREP†, so no reflection is needed on them.
- There are $2n_\eta$ qubits for registers $d$, $e$ with 2 qubits that are rotated, for a total of $2n_\eta + 2$ qubits (the flag qubits are re-zeroed, so no reflection on them).
- Qubits used in the momentum state preparation for $U_{loc}$, $V$, specifically the following for $V$:

    1. Storing $v$ requires $3(n_p + 1)$ qubits.
    2. $\mu$ needs $n_p$ qubits since it is given in unary.
    3. $n_{MV}$ qubits for the equal superposition state.

One obtains the following cost associated to the momentum state preparation for $U_{loc}$:

1. Storing $v$ requires $3n_p$ qubits.
2. A qubit for the sign of $\gamma_l(G_v)$,
3. The $\tau + \max_t n_t$ qubits used for the two uniform superpositions over type and enumeration of nuclei, along with the two rotated ancillae.

All for a total of $7n_p + n_{MV} + 6 + \tau + \max_t n_t$.

- One obtains the arithmetic overflow qubits for the addition/subtraction, which have been computed to be 6 in some approaches, and is 9 according to methods set forth herein, in some embodiments, since the subtraction is done separately for $U_{loc}$ and $V$.
- The qubits used in register $k_{NL}$, $s_{NL}$, of which there are $\tau + \max_t n_t + 5$ and the rotation ancilla needed for $|l\rangle$ for the uniform superposition over $n_t$ nuclei, for a total of $\tau + \max_t n_t + 6$.
- Two qubits used for the procedure in Section F - "Amplitude Amplification with Fewer Steps," above, for implementing the reflections onto states of type $\sigma = (2,0)$ in $SEL_{NL}$. This trick is not used for materials with non-orthogonal lattices.

$$\sum_{i=1}^{3} \sqrt{\frac{(b_i)_i^4}{\sum (b_i)_i^4}} \, |i\rangle$$

- Three qubits for the one-hot-encoded superposition $\quad$. This is two for non-orthogonal lattices.
- All ancilla qubits used by all QROMs are either dirty and from the circuit itself, which are returned to their initial state, or are clean (such as in the SELECT variant of QROM), which are un-computed either by the procedure itself or measurement and Clifford gates after the QROM.

Note that all other flag or ancilla qubits not mentioned above, such as the qubits $|\cdot\rangle_\chi$s, are re-zeroed. Overall, the total number of qubits and Toffoli cost for the reflection is at most

$$2n_\eta + 9n_p + n_{M_V} + 35 + 2(\tau + \max_t n_t) \tag{J16}$$

### K. Qubit costings

An example entire qubit cost is provided below.

1. There are $\eta$ registers storing the momenta, each of which has three components with $n_p$ qubits, so the number of qubits needed is $3\eta n_p$.

2. The control register for the phase estimation needs $\lceil log(\lceil \frac{\pi\lambda}{2\epsilon_{pha}} \rceil) \rceil$ qubits.

3. The phase gradient state that is used for the phase rotations. There are $\max(n_R + 1, n_\chi, n_B, n_k, n'_{NL}, n_{NL})$ bits used in the phasing, as each of these $n_\chi$'s is the number of bits of a phase gradient state used within the subroutine building the superposition on the corresponding register.

4. One may desire one qubit for the $|T\rangle$ state that is used catalytically for controlled Hadamards.

5. The two qubits in register $X$.

6. Four qubits with registers $|\cdot\rangle_\chi$.

7. The $2n_\eta + 5$ qubits from the preparation of the superpositions over $i$ and $j$. There are $\eta$ qubits for each of these registers in unary, then 2 qubits that are rotated for each of these preparations, 2 qubits that flag success of the two preparations, and 1 qubit that flags whether $i = j$.

8. Eight qubits for register $f$. Five qubits in register $f$ along with three additional qubits needed to flag the eligible basis states.

9. Five qubits in total used by the two QROMs to make the superposition in register $f$. Note five are used and re-zeroed immediately, before four of them are reused to make the sgn($\omega$, $\omega'$) (and again re-zeroed).

10. The states $r$ and s are prepared in unary, and need $n_p$ qubits each, for a total of $2n_p$.

11. The register $\boldsymbol{R}$ itself uses $3n_R$ qubits.

12. The two QROMs used for computing the register $\boldsymbol{R}$ each use and immediately clean $\tau + \max_t n_t + 1$ ancilla qubits.

13. The register $k'_{loc}$ uses $\tau + \max_t n_t$ for the nuclei.

14. The register $k_{NL}$, $s_{NL}$ uses $\tau + \max_t n_t + 4 + 1$ for the nuclei and index $\sigma$.

15. Four qubits for the uniform superposition over the $n_t$ nuclei of each type a in $k'_{loc}$, $k_{NL}$. One for the rotation for each and one for the success flag.

16. Making the superposition on $k_{NL}$, $s_{NL}$ consumes $\beta_k n_k$ dirty qubits and $n_k + (\tau + 4)$ clean qubits which are all returned to their initial state.

17. Flagging the eligible states in $k_{NL}$ uses four qubits: one for the type, one for the $\sigma$ index, and two to compute whether these two flags and the flag for $n_t$ superposition are successful.

18. Three inequality tests using temporarily 4 qubits to determine where $\sigma$ lies ($\sigma = 0, 1 \leq \sigma \leq 3, 3 < \sigma < 11$),

19. The same three inequality tests use two qubits to determine $\sigma$'s associated type for computing $s_{NL}$.

20. Outputting the sign into $s_{NL}$ uses and re-zeroes $\tau + 2$ ancilla qubits.

21. The preparation of the momentum state superposition for V:

   (a) Storing v requires $3(n_p + 1)$ qubits.
   (b) $\mu$ needs $n_p$ qubits since it is given in unary. Note that $\mu$ takes values from 2 to $n_\mu = n_p + 1$, so there are $n_p$ possible values to be encoded in unary.
   (c) $n_{M_V}$ qubits for the equal superposition state.
   (d) $3n_p + 2$ qubits for testing if one obtains negative zero, including the flag qubit.
   (e) $2n_p + 1$ qubits used in signaling whether v is outside the box, including the flag qubit. There are 2 qubits needed as ancillae for each of the $n_p$ quadruple-controlled Toffolis, and the target qubit is the same each time.
   (f) The $n_{M_V}$ bits required by QROM to output the right-hand side (RHS) of the inequality, and the $\beta_V n_{M_V}$ dirty and $n_{M_V} + 3n_p$ clean ancilla qubits it uses and immediately returns to initial state to compute said RHS.
   (g) The qubit $j_V$ resulting from the inequality test.
   (h) Two qubits, one flagging success of the inequality test, no negative zero and v not outside the box, and the other an ancilla qubit used to produce the triply controlled Toffoli.

22. The preparation of the momentum state superposition for $U_{loc}$:

   (a) Storing $\boldsymbol{v}$ requires $3(n_p + 1)$ qubits.
   (b) Storing $I$ requires $\tau + \max_t n_t$ qubits.
   (c) One qubit for $s_{loc}$ register.
   (d) The $n_{M_{loc}}$ bits required by QROM with the sign into $s_{loc}$, and the $\beta_{loc}(n_{M_{loc}} + 1)$ dirty and $n_{M_{loc}} + 1 + (3n_p + \tau)$ clean ancilla qubits it uses and immediately returns to initial state to compute that RHS.

23. $3 + 3 + 3 + \tau + 9$ ancilla qubits used to compute $|.\rangle_\chi$, along with 4 more to compute and store $|.\rangle_{NL,c}$.

24. The temporary ancillae used in the addition and subtraction of $v$ for the $U_{loc}, V$. The cost here is given by items (a) and (c), giving a total of $5n_p + 1$.

(a) In implementing the SEL operations, it may be desired to control a swap of a momentum register into an ancilla, which takes $3n_p$ qubits for the output. The $n_\eta - 1$ temporary ancillae for the unary iteration on the $i$ or $j$ register can be ignored because they are fewer than the other temporary ancillae used later.

(b) $2n_p + 3$ temporary qubits are used to implement the block encoding of $T$, where components $\omega, \omega'$ of the momentum are copied into an ancilla, two bits of these components of the momentum are copied out, and then a controlled phase is performed with those two qubits as control as well as the qubit flagging that T is to be performed.

(c) For the controlled addition or subtraction by $v$ in the SEL operations for $U_{loc}$ and $V$, $n_p$ bits are used to copy a component of $v$ into an ancilla, then there are another $n_p + 1$ temporary qubits used in the addition, for a total of $2n_p + 1$ temporary qubits in this part. Even though the momentum $v$ registers are different for $U_{loc}, V$, the same temporary ancillae can be used since the computations are not done in parallel for the two.

(d) There are also temporary qubits used in converting the momentum back and forth between signed and two's complement, but these are fewer than those used in the previous step.

25. There are 2 overflow qubits obtained every time a component of $v$ is added or subtracted into a momentum. All these qubits may be kept, giving a total of 9.

26. There are also temporary qubits used in the arithmetic to implement $e^{-iG_v \cdot R_l}, e^{-iG_q \cdot R_l}, e^{iG_p \cdot R_l}$. The arithmetic requires a maximum of $2(n_R - 2)$ qubits. Note that the $R_l$ can be output by the QROM, the phase factor applied, and the $R_l$ erased, after (or before) the arithmetic for addition/subtraction of $v$ is performed, so one may only take the maximum of the $5n_R - 4$ qubits used in this item and item 11, and the $5n_p + 1$ temporary qubits used in item 25.

27. Two qubits used to control between adding and subtracting v in order to make SEL self-inverse. This can facilitate the avoidance of controlled application of the qubitization operator.

28. The clean qubit cost of the QROM used for $|\Psi_{l,\sigma}\rangle$ is $3n_{NL} + 3(n_p + \tau + 4)$ which are re-zeroed, and the dirty qubit cost of the QROM is $3\beta_{NL}n_{NL}$. This changes to $2n_{NL} + 3n_p + 2\tau + 8$ and $2\beta_{NL}n_{NL}$ for non-orthogonal lattices.

29. The reflection after $|\Psi_{l,\sigma}\rangle$ preparation uses $3n_p - 1$ temporary qubits.

30. The one-hot-encoded superposition for $|\Psi_{l,(2,0)}\rangle$ requires 3 qubits, along with the QROM preparing that superposition requiring an additional 3 clean qubits which are immediately re-zeroed. Both of these requirements become two instead of three when the lattice is non-orthogonal.

31. The clean qubit cost of the QROM used for $|\Psi_{l,(2,0)}\rangle$ is $3n_{NL} + 3(n_p + \tau + 2)$ which are re-zeroed, and the dirty qubit cost of the QROM is $3\beta'_{NL}n_{NL}$. This changes to $2n_{NL} + 3n_p + 2\tau + 4$ and $2\beta'_{NL}n_{NL}$ for non-orthogonal lattices.

32. The (controlled) rotation following the entire qubitization was computed previously to need $2n_\eta + 10n_p + n_{Mloc} + 35 + 2(\tau + \max_t n_t)$ Toffolis which is the same as the number of temporary qubits it needs.

*Remark* K.1. When the technique in Section F - "Amplitude Amplification with Fewer Steps," above, is performed, one may desire to change the phase gradient qubit cost (item 3) to $\max(n_R + 1, n_\chi, n_{AA}, n_B, n_k, n_{Mloc}, n'_{NL}, n_{NL})$. Furthermore, one may desire to add 2 each time this technique is performed (e.g., once for $\text{SEL}_{NL}$ when the lattice is orthogonal).

To summarize the above, one may take into account which temporary ancillae can be reused, and whether the maximum number of dirty qubits exceeds the total number of clean qubits used in the algorithm, in which case, one has to add the difference to the total number of qubits needed in the algorithm.

First, the subroutines and their associated numbers of temporary ancillae are presented. All ancillae mentioned below are clean and temporary unless mentioned otherwise.

1. Five ancillae for the QROM in register $f$.

2. Register $R$ with $3n_R$ qubits can be used and cleaned immediately before other procedures as described in the listing above.

3. $2(\tau + \max_t n_t + 1)$ qubits for the QROMs computing register $R$.

4. $\beta_k n_k$ dirty and $n_k + (\tau + 4)$ clean qubits for the QROM on $k_{NL}$.

5. Four qubits used for the inequality tests $\sigma = 0, 1 \le \sigma \le 3, 3 < \sigma < 11$.

6. $\tau + 2$ ancillae for the QROM to output $s_{NL}$.

7. $\beta_V n_{M_V}$ dirty and $n_{M_V} + (3n_p)$ clean qubits for the QROM on $k_V$.

8. $\beta_{loc}(n_{Mloc} + 1)$ dirty and $(n_{Mloc} + 1) + (3n_p + \tau) + n_{Mloc}$ clean qubits for the QROM on $k_{loc}, k'_{loc}$.

9. $5n_p + 1$ and the $2(n_R - 2)$ ancilla mentioned in the previous listing in items 24 and 26.

10. $3n_{NL} + 3(n_p + \tau + 4)$ clean and $3\beta_{NL}n_{NL}$ dirty qubit cost of the QROM for implementing $SEL_{NL}$. This changes to $2n_{NL} + 3n_p + 2\tau + 8$ and $2\beta_{NL}n_{NL}$ for non-orthogonal lattices.

11. $3n_p - 1$ qubits for the reflection for $SEL_{NL}$.

12. 3 clean ancilla along with $3n_{NL} + 3(n_p + \tau + 2)$, and $3\beta'_{NL}n_{NL}$ dirty qubits for the QROM for implementing $SEL_{NL}$. This changes to $2 + 2_{NL} + 3n_p + 2\tau + 4$ and $2\beta'_{NL}n_{NL}$ for non-orthogonal lattices.

13. $2n_\eta + 9n_p + n_{MV} + 35 + 2(\tau + \max_t n_t)$ temporary ancillae used for the reflection.

Regarding the dirty qubits requirement, since none of the operations above happen in parallel, one can simply take the maximum of them all to obtain $n_{dirty}$ as the dirty qubits requirement.

From item 1 to item 8, all calculations are for PREP. With the exception of item 2, they can re-zero their clean ancilla immediately and thus the clean qubit requirement is the maximum of all the requirements: $n_{clean,PREP} = \max(5, 2(\tau + \max_t n_t), n_k + (\tau + 4), 4, \tau + 2, n_{MV} + 3n_p, (n_{Mloc} + 1) + (3n_p + \tau) + n_{Mloc})$.

Once PREP is done, the SEL operations take over (items 9-12), and can use the $n_{clean,PREP}$ qubits freed up. Some SEL and PREP operations happen in specific orders as described for example in item 26 in the previous listing. The temporary clean qubit requirement $n_{tmp,clean}$ is obtained by

$$n_{tmp,clean,H} = \max(5n_p + 1, 5n_R - 4) +$$
$$\max(n_{clean,PREP}, 3n_p - 1, 3n_{NL} + 3(n_p + \tau + 4), 3n_{NL} + 3(n_p + \tau + 2) + 3) \quad \text{(K1)}$$

$$n_{tmp,clean} = \max(n_{tmp,clean,H}, 2n_\eta + 9n_p + n_{Mv} + 35 + 2(\tau + \max_t n_t))$$

$$\text{(K2)}$$

*Remark* K.2. The formula above is for orthogonal lattices, and when the lattice is non-orthogonal, one may use $2n_{NL} + 3n_p + 2\tau + 8n_{NL}$ and $2n_{NL} + 3n_p + 2\tau + 4 + 2$ instead of the corresponding terms in the equation for Eq. (K1).

Even though these temporary qubits have been distinguished from those that are not, further improvements can be made by a judicious allocation of the temporary qubits to operations that come last in PREP (thus covering their need for ancilla for their computation), so that they are clean again by PREP before getting reused.

## L. Resource estimation detailed results

Below are the detailed resource estimation results. Regarding the qubit costs, recall that the highest contribution comes from the encoding of the plane waves, needing $3n_p\eta$ clean qubits. The qubit cost in the tables is measured in two parts: clean and total. The clean cost is lower than the total cost for the pseudopotentials, but they are equal in the AE setting, as enforced by the definition of $n_{dirty}$ in Section IV - "Gate and Qubit Costings." Note that these numbers are reported for $n_{parallel} = 500$ runs optimizing the depth of the circuit, and not for the optimized costs. Further, this is only relevant to the PP-based algorithm, and the clean and dirty costings when optimizing the Toffoli cost of the PP-based algorithm are even smaller.

TABLE VIII. Resource estimation for dilithium iron silicate ($Li_2FeSiO_4$). Better numbers are indicated in bold. The algorithm is using almost the entire dirty qubit capacity ($n_{dirty}$), as the total qubit counts of both algorithms are almost equal.

| $N$ | Toffoli depth PP / AE | Clean Qubit PP / AE | Total Qubit PP / AE | Toffoli cost PP / AE |
|---|---|---|---|---|
| $10^3$ | $5.85 \times 10^{12}$ / **$4.86 \times 10^{12}$** | **2278** / 2366 | **2278** / 2366 | $1.54 \times 10^{13}$ / **$6.78 \times 10^{12}$** |
| $10^4$ | $1.93 \times 10^{13}$ / **$1.46 \times 10^{13}$** | **2650** / 2867 | **2847** / 2867 | $6.38 \times 10^{13}$ / **$2.94 \times 10^{13}$** |
| $10^5$ | $9.09 \times 10^{13}$ / **$8.07 \times 10^{13}$** | **2938** / 3365 | **3362** / 3365 | $2.68 \times 10^{14}$ / **$1.44 \times 10^{14}$** |

TABLE IX. Resource estimation for lithium manganese oxyfluoride ($Li_{0.75}MnO_2F$). Better numbers are indicated in bold. Depth circuit optimization consumes almost the entire $n_{dirty}$ available for $N = 10^4, 10^5$, meaning it is determined by the dirty qubit constraint. For $N = 10^3$ the optimization is fully achieved, i.e. $n_{dirty}, n_{parallel}$ are both large enough that the minimum possible depth for the optimized QROM circuit depths is obtained.

| $N$ | Toffoli depth PP / AE | Clean Qubit PP / AE | Total Qubit PP / AE | Toffoli cost PP / AE |
|---|---|---|---|---|
| $10^3$ | $\mathbf{9.08 \times 10^{13}}$ / $3.03 \times 10^{14}$ | **7602** / 10906 | **7602** / 10906 | $\mathbf{2.16 \times 10^{14}}$ / $3.58 \times 10^{14}$ |
| $10^4$ | $\mathbf{3.09 \times 10^{14}}$ / $8.21 \times 10^{14}$ | **8937** / 13525 | **13524** / 13525 | $\mathbf{9.64 \times 10^{14}}$ / $1.18 \times 10^{15}$ |
| $10^5$ | $\mathbf{8.55 \times 10^{14}}$ / $2.17 \times 10^{15}$ | **10260** / 16147 | **16121** / 16147 | $\mathbf{3.87 \times 10^{15}}$ / $4.41 \times 10^{15}$ |

TABLE X. Resource estimation for LLNMO ($Li_{0.75}[Li_{0.17}Mn_{0.58}Ni_{0.25}]O_2$). Better numbers are indicated in bold. The comparison between clean and total qubit count shows a situation somewhat similar to TABLE IX.

| $N$ | Toffoli depth PP / AE | Clean Qubit PP / AE | Total Qubit PP / AE | Toffoli cost PP / AE |
|---|---|---|---|---|
| $10^3$ | $\mathbf{1.13 \times 10^{14}}$ / $2.75 \times 10^{14}$ | **8244** / 12171 | **8244** / 12171 | $\mathbf{2.38 \times 10^{14}}$ / $3.45 \times 10^{14}$ |
| $10^4$ | $\mathbf{3.30 \times 10^{14}}$ / $7.18 \times 10^{14}$ | **9699** / 15105 | **15087** / 15105 | $\mathbf{1.08 \times 10^{15}}$ / $1.36 \times 10^{15}$ |
| $10^5$ | $\mathbf{9.59 \times 10^{14}}$ / $2.01 \times 10^{15}$ | **11130** / 18045 | **18017** / 18045 | $\mathbf{4.84 \times 10^{15}}$ / $5.59 \times 10^{15}$ |

TABLE XI. Resource estimation for lithium manganese oxide ($Li_{0.5}MnO_3$). Better numbers are indicated in bold. The comparison between clean and total qubit count shows a situation somewhat similar to Table IX.

| $N$ | Toffoli depth PP / AE | Clean Qubit PP / AE | Total Qubit PP / AE | Toffoli cost PP / AE |
|---|---|---|---|---|
| $10^3$ | $\mathbf{1.09 \times 10^{14}}$ / $2.10 \times 10^{14}$ | **7273** / 10248 | **7273** / 10248 | $\mathbf{2.37 \times 10^{14}}$ / $2.62 \times 10^{14}$ |
| $10^4$ | $\mathbf{3.37 \times 10^{14}}$ / $5.80 \times 10^{14}$ | **8551** / 12702 | **12696** / 12702 | $1.12 \times 10^{15}$ / $\mathbf{9.82 \times 10^{14}}$ |
| $10^5$ | $\mathbf{1.01 \times 10^{15}}$ / $1.63 \times 10^{15}$ | **9808** / 15156 | **15136** / 15156 | $5.00 \times 10^{15}$ / $\mathbf{4.12 \times 10^{15}}$ |

TABLE XII. Depth and clean qubit cost estimation for $N^{PP}$ and $N^{AE}$ plane waves. The total qubit cost includes dirty qubits. The clean cost is lower than the total cost for the pseudopotentials, but they are equal in the AE setting, as enforced by the definition of $n_{dirty}$.

| Material | Clean Qubit PP / AE | Total Qubit PP / AE | Toffoli depth PP / AE |
|---|---|---|---|
| $Li_{0.5}MnO_3$ | **9808** / 24974 | **15136** / 24974 | $\mathbf{1.01 \times 10^{15}}$ / $2.13 \times 10^{19}$ |
| $Li_{0.75}[Li_{0.17}Ni_{0.25}Mn_{0.58}]O_2$ | **11130** / 29784 | **18017** / 29784 | $\mathbf{9.59x10^{14}}$ / $3.59 \times 10^{19}$ |
| $Li_{0.75}MnO_2F$ | **10260** / 26629 | **16121** / 26629 | $\mathbf{8.55 \times 10^{14}}$ / $1.16 \times 10^{19}$ |
| $Li_2FeSiO_4$ | **2650** / 4859 | **2847** / 4859 | $\mathbf{1.93 \times 10^{13}}$ / $1.59 \times 10^{17}$ |

Pseudopotential Quantum Simulation Workflow

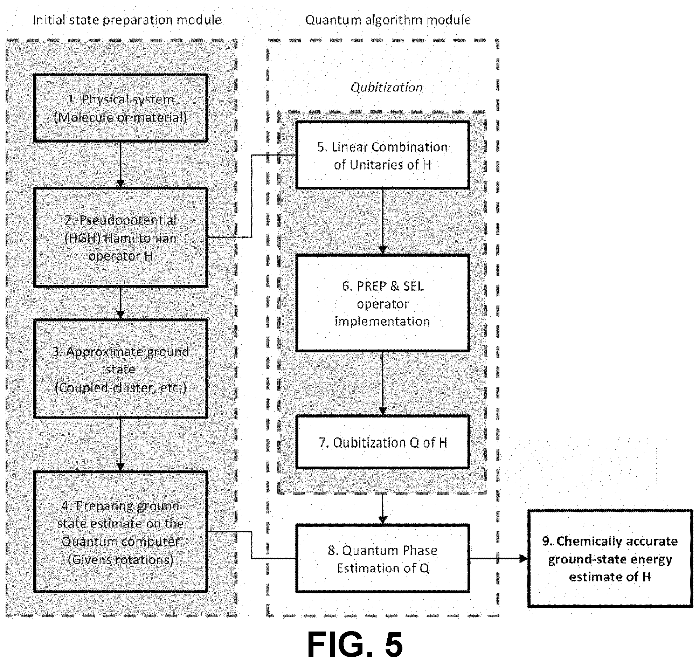

FIG. 5 is a diagram of an example pseudopotential quantum simulation workflow, in accordance with some embodiments. As shown in FIG. 5, the pseudopotential quantum simulation workflow is implemented using an initial state preparation module (implemented in software and/or hardware) and a quantum algorithm module (implemented in software and/or hardware), each of which is discussed further below.

Initial state preparation

At step 1, one or more physical systems are chosen based on their properties and relevance to practical applications. These can include molecules, materials, and/or other phases of matter. These can also be physical systems that are otherwise challenging or impossible to simulate in experiments.

At step 2, the physical system(s) are characterized (optionally fully characterized) in terms of a corresponding Hamiltonian operator in the plane-wave basis. The Hamiltonian is accurately modeled using the choice of a generalized separable pseudopotential, yielding the pseudopotential Hamiltonian H with a closed analytical formula for the matrix entries. Eigenstates of H are the states of interest, for example the state with minimal energy known as the ground state. The Hamiltonian is the input to the quantum algorithm module and to the approximate ground state method.

At step 3, the ground state wavefunction is approximated, for example using a classical method of choice, and preferably one that provides the highest overlap with the true ground state while being computationally feasible on a classical computer. There are many initial state preparation methods in the literature such as adaptive configuration interaction, coupled-cluster, Jastrow ansatz, and multi-reference perturbation theory.

At step 4, the approximate ground state is prepared on a quantum computer, using any efficient method in the number of plane waves, for example Givens rotations.

Quantum algorithm module

At step 5, to obtain the ground state energy estimate, one prominent strategy called quantum phase estimation involves the simulation of the time evolution of H. This can be performing using a variety of techniques, such as Trotter formulas, Taylor series, and interaction picture formulations. Methods such as qubitization are good candidates as they do not induce any extra error in the simulation. Such methods all start with a decomposition of H into a linear combination of unitaries (LCU). In some embodiments of the present disclosure, new and efficient techniques for preparing an LCU for the pseudopotential term in a Hamiltonian are presented.

At step 6, the LCU largely determines the cost of the two main subroutines of qubitization, called PREP and SEL. As discussed herein, and in accordance with some embodiments of the present disclosure, a new method to implement PREP and SEL for the pseudopotential term of the Hamiltonian is presented. An important improvement is to employ a technique called QROM to implement complicated superpositions that appear in the qubitization of H.

At step 7, PREP and SEL, along with a derived reflection operator on the qubits acting upon by PREP, form the unitary operator Q, referred to herein as the qubitization of H. Q has the same eigenstates as H, with eigenvalues related to those of H. These eigenvalues, particularly the ground-state energy, can be obtained with Quantum Phase Estimation.

At step 8, the qubitization Q, along with the initial state prepared in the previous module, are input to the Quantum Phase Estimation algorithm, which is run a number of times determined by the LCU and the overlap of the initial state with the true ground state.

At step 9, the result is a chemically accurate estimate of the ground state energy of H, which can be used in a number of applications in quantum chemistry and materials science. The overall cost of the algorithm is considerably reduced by employing pseudopotentials.

The inventors are aware of no prior work in the literature that incorporates atomic pseudopotentials in a quantum algorithm for electronic structure calculations of a fermionic Hamiltonian. As discussed herein, and in accordance with some embodiments of the present disclosure, a pseudopotential can be included efficiently in a quantum algorithm for the simulation of the time evolution of an electronic Hamiltonian and its ground state energy estimation.

Pseudopotentials bring considerable complexity to the structure of the Hamiltonian, making simulations more expensive if using known techniques. In some embodiments of the present disclosure, a series of methods is used which, when paired with the advantage of pseudopotentials in bringing down the number of electrons and required plane wave basis functions in the simulation, manages to improve considerably over previous state of the art.

In some embodiments of the present disclosure, a method includes is the use of a new LCU, proposed for any Hamiltonian using a generalized separable pseudopotential. The LCU in the qubitization lays the foundation for the implementation of the method and is the determining factor in the gate and qubit cost of the implementation. More precisely, the LCU for the non-local term of the pseudopotential does not exist in the literature and leads to a reduction in the cost of the simulation.

Another improvement facilitated by embodiments of the present disclosure is the use of QROM in the preparation of superpositions appearing in the qubitization. An advantage of QROM, as contrasted with other / known state preparation methods, is illustrated by its massive capacity for parallelization and ability to control the gate and qubit cost, especially when the number of plane waves is in the regime of interest for ground state energy estimation.

The gate and qubit count for the alternative all-electron simulation is prohibitively large, mainly due to the number of electrons and size of plane wave basis involved in the simulation to estimate the ground state energy of the quantum system with chemical accuracy. Moreover, for most materials, it is not known exactly how many plane waves are required to converge the energy of the all-electron calculation.

The pseudopotential operator, which replaces the Coulomb potential of the nucleus and the core electrons by fine-tuned functionals, significantly reduces both the number of electrons and plane wave basis functions involved in the simulation. In general, the pseudopotential operator consists of a local potential and a non-local potential. Typically, their values in real-space are reported numerically.

In some embodiments of the present disclosure, a suitable pseudopotential is selected that not only provides great accuracy for materials of interest, but also has a closed analytical formula which one can exploit to derive an efficient qubitization. In some such implementations, the class of generalized separable pseudopotentials proposed by Hartwigsen-Goedecker-Hutter (HGH) (see, e.g., Delgado et al.) is used, which satisfies these objectives. In this case, the implementation of the qubitization involves a new LCU and the use of QROM as the method of choice to prepare the complicated superpositions needed for the qubitization subroutines. Both may be desired to control the cost of the simulation, especially for materials with non-orthogonal lattices.

Implementations of the present disclosure are effective for achieving a significant cost improvement over all-electron algorithms, while delivering more accurate results for the ground state energy. The results set forth herein could impact different areas of industry seeking to develop practical applications that demand accurate simulations of the ground state properties of advanced materials and molecules.

Physical implementation

In some embodiments of the present disclosure, a quantum scheme is implemented on one or more quantum computers, while potentially using classical computers (e.g., for the initial state estimate).

In one example implementation, in an initial state preparation module, an approximate ground state can be estimated on a classical computer, while the rest of the implementation is achieved via quantum computers that can include superconducting qubits, photonic qubits, trapped-ion qubits, silicon-based qubits, or neutral atoms. These devices apply gates that depend on the input Hamiltonian and the qubitization scheme to implement the qubitized Hamiltonian for Quantum Phase Estimation.

In the last step of the Quantum Phase Estimation, the quantum computer performs measurements on the qubits to extract the desired information. This process may be repeated several times to produce the chemically accurate prediction of the ground state energy.

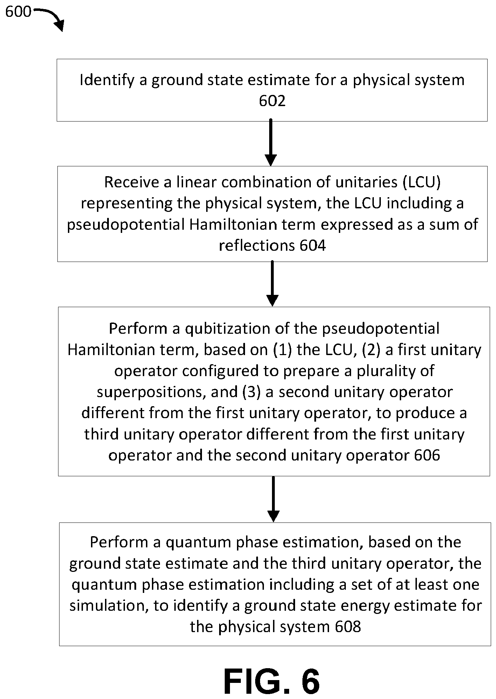

FIG. 6 is a flow diagram showing a first example method for generating a ground state energy estimate for a physical system, in accordance with some embodiments. The method can be implemented using code / instructions stored on a non-transitory, processor-readable medium. Depending on the implementation, some or all of the steps shown in FIG. 6 may be performed on a quantum computer. Alternatively, the steps shown in FIG. 6 may be shared between a quantum computer and a classical (non-quantum) computer. As shown in FIG. 6, the method 600 includes identifying, at 602, a ground state estimate for a physical system. The method 600 also includes receiving, at 604, a linear combination of unitaries (LCU) representing the physical system. The LCU includes a pseudopotential Hamiltonian term expressed as a sum of reflections. The method 600 also includes performing, at 606, a qubitization of the pseudopotential Hamiltonian term, based on (1) the LCU, (2) a first unitary operator configured to prepare a plurality of superpositions, and (3) a second unitary operator different from the first unitary operator, to produce a third unitary operator different from the first unitary operator and the second unitary operator. The method 600 also includes performing, at 608, a quantum phase estimation, based on the ground state estimate and the third unitary operator, the quantum phase estimation including a set of at least one simulation, to identify a ground state energy estimate for the physical system. In some implementations, the ground state energy estimate for the physical system has an accuracy that is higher than an accuracy of the first ground state estimate. Alternatively or in addition, in some implementations, the ground state estimate is a first ground state estimate, and the quantum phase estimation includes identifying a second ground state estimate having an accuracy that is higher than an accuracy of the first ground state estimate.

In some implementations, the pseudopotential Hamiltonian term includes representations of ionic pseudopotentials. Alternatively or in addition, in some implementations, the pseudopotential Hamiltonian term can include a representation of at least one pseudopotential from a generalized separable class of pseudopotentials.

In some implementations, the physical system is a cathode material, such as a lithium-excess material. The cathode material can include at least one of lithium manganese oxide ($Li_2MnO_3$), lithium nickel-manganese oxide ($Li[Li_{0.17}Ni_{0.25}Mn_{0.58}]O_2$), or lithium manganese oxyfluoride ($Li_{0.75}MnO_2F$).

In some implementations, the ground state estimate is generated using at least one of an adaptive configuration interaction method, a coupled-cluster method, a Jastrow ansatz method, a density matrix renormalization group method, or a multi-reference perturbation method. Alternatively or in addition, in some implementations, the ground state estimate is prepared using Givens rotations.

In some implementations, the qubitization of the pseudopotential Hamiltonian term has (1) eigenstates that correspond to eigenstates of the pseudopotential Hamiltonian term, and (2) eigenvalues that are related to the pseudopotential Hamiltonian term.

In some implementations, the first unitary operator is a prepare operator, and the second unitary operator is a select operator.

In some implementations, the instructions to perform the qubitization of the pseudopotential Hamiltonian term include instructions to perform at least one quantum read-only memory (QROM) subroutine.

In some implementations, the non-transitory, processor-readable medium also stores instructions to cause the processor to execute at least one of the first unitary operator or the second unitary operator using at least one quantum read-only memory (QROM) subroutine.

In some implementations, the instructions to transform the pseudopotential Hamiltonian term into the LCU include instructions to prepare at least one superposition using at least one quantum read-only memory (QROM) subroutine.

In some implementations, the non-transitory, processor-readable medium also stores instructions to cause the processor to generate the pseudopotential Hamiltonian term, and to identify the approximate ground state associated with the physical system based on the pseudopotential Hamiltonian representation. Alternatively, the generation of the pseudopotential Hamiltonian term and/or the identification of the approximate ground state associated with the physical system based on the pseudopotential Hamiltonian representation can be performed by another compute device (which may or may not be a quantum computer) that is operably coupled to the processor.

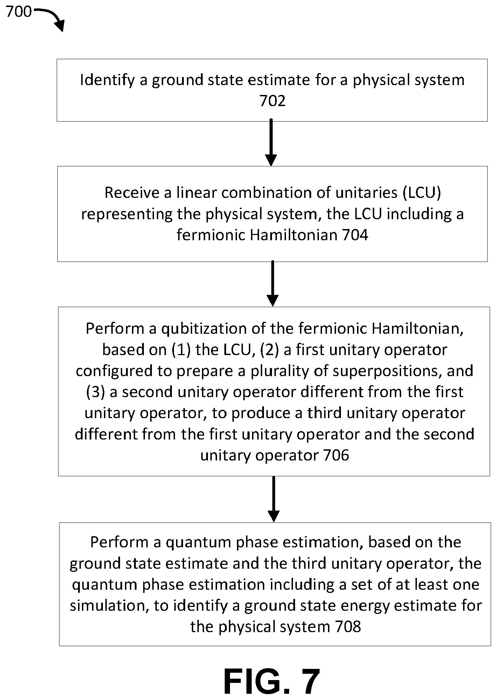

FIG. 7 is a flow diagram showing a second example method for generating a ground state energy estimate for a physical system, in accordance with some embodiments. The method 700 can be implemented using code / instructions stored on a non-transitory, processor-readable medium. Depending on the implementation, some or all of the steps shown in FIG. 7 may be performed on a quantum computer. Alternatively, the steps shown in FIG. 7 may be shared between a quantum computer and a classical (non-quantum) computer. As shown in FIG. 7, the method 700 includes identifying, at 702, a ground state estimate for a physical system. The method 700 also includes receiving, at 704, a linear combination of unitaries (LCU) representing the physical system, the LCU including a fermionic Hamiltonian. The method 700 also includes performing, at 706, a qubitization of the fermionic Hamiltonian, based on (1) the LCU, (2) a first unitary operator configured to prepare a plurality of superpositions, and (3) a second unitary operator different from the first unitary operator, to produce a third unitary operator different from the first unitary operator and the second unitary operator. The method 700 also includes performing, at 708, a quantum phase estimation, based on the ground state estimate and the third unitary operator, the quantum phase estimation including a set of at least one simulation, to identify a ground state energy estimate for the physical system. In some such implementations, the ground state energy estimate has an accuracy that is higher than an accuracy of the first ground state estimate. Alternatively or in addition, in some implementations, the ground state estimate is a first ground state estimate, and the quantum phase estimation includes identifying a second ground state estimate having an accuracy that is higher than an accuracy of the first ground state estimate.

In some implementations, the fermionic Hamiltonian includes representations of ionic pseudopotentials. Alternatively or in addition, in some implementations, the fermionic Hamiltonian includes a representation of at least one pseudopotential from a generalized separable class of pseudopotentials.

In some implementations, the physical system is a cathode material (e.g., a lithium-excess material). The cathode material can include at least one of lithium manganese oxide ($Li_2MnO_3$), lithium nickel-manganese oxide ($Li[Li_{0.17}Ni_{0.25}Mn_{0.58}]O_2$), or lithium manganese oxyfluoride ($Li_{0.75}MnO_2F$).

In some implementations, the ground state estimate is generated using at least one of an adaptive configuration interaction method, a coupled-cluster method, a Jastrow ansatz method, a density matrix renormalization group method, or a multi-reference perturbation method. Alternatively or in addition, in some implementations, the ground state estimate is prepared using Givens rotations.

In some implementations, the qubitization of the fermionic Hamiltonian has (1) eigenstates that correspond to eigenstates of the fermionic Hamiltonian, and (2) eigenvalues that are related to the fermionic Hamiltonian.

In some implementations, the first unitary operator is a prepare operator, and the second unitary operator is a select operator.

In some implementations, the instructions to perform the qubitization of the fermionic Hamiltonian include instructions to perform at least one quantum read-only memory (QROM) subroutine.

In some implementations, the non-transitory, processor-readable medium also stores instructions to cause the processor to execute at least one of the first unitary operator or the second unitary operator using at least one quantum read-only memory (QROM) subroutine.

In some implementations, the instructions to transform the fermionic Hamiltonian into the LCU include instructions to prepare at least one superposition using at least one quantum read-only memory (QROM) subroutine.

In some implementations, the non-transitory, processor-readable medium of claim 15, further storing instructions to cause the processor to generate the fermionic Hamiltonian, and to identify the approximate ground state (or ground state estimate) associated with the physical system based on the fermionic Hamiltonian. Alternatively, the generation of the fermionic Hamiltonian and/or the identification of the approximate ground state (or ground state estimate) associated with the physical system based on the fermionic Hamiltonian can be performed by another compute device (which may or may not be a quantum computer) that is operably coupled to the processor.

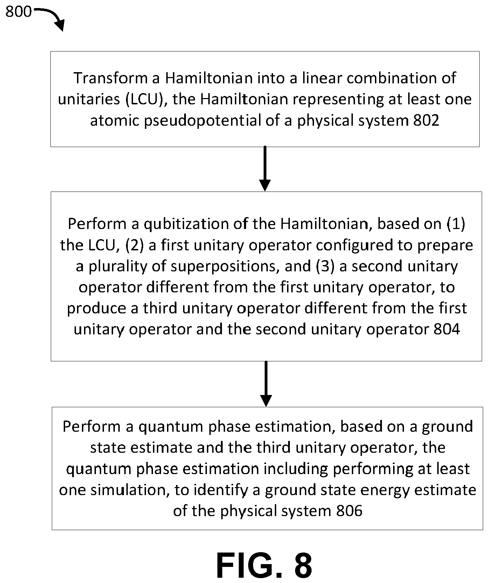

FIG. 8 is a flow diagram showing a third example method for generating a ground state energy estimate for a physical system, in accordance with some embodiments. The method 800 can be implemented using code / instructions stored on a non-transitory, processor-readable medium. Depending on the implementation, some or all of the steps shown in FIG. 8 may be performed on a quantum computer. Alternatively, the steps shown in FIG. 8 may be shared between a quantum computer and a classical (non-quantum) computer. As shown in FIG. 8, the method 800 includes transforming, at 802, a Hamiltonian into a linear combination of unitaries (LCU), the Hamiltonian representing at least one atomic pseudopotential of a physical system. The method 800 also includes performing, at 804, a qubitization of the Hamiltonian, based on (1) the LCU, (2) a first unitary operator configured to prepare a plurality of superpositions, and (3) a second unitary operator different from the first unitary operator, to produce a third unitary operator different from the first unitary operator and the second unitary operator. The method 800 also includes performing, at 806, a quantum phase estimation, based on a ground state estimate and the third unitary operator, the quantum phase estimation including performing at least one simulation, to identify a ground state energy estimate of the physical system. In some such implementations, the ground state energy estimate has an accuracy that is higher than an accuracy of the first ground state estimate. Alternatively or in addition, in some implementations, the ground state estimate is a first ground state estimate, and the quantum phase estimation includes identifying a second ground state estimate having an accuracy that is higher than an accuracy of the first ground state estimate.

In some implementations, the Hamiltonian includes representations of ionic pseudopotentials. Alternatively or in addition, in some implementations, the Hamiltonian can include a representation of at least one pseudopotential from a generalized separable class of pseudopotentials.

In some implementations, the physical system is a cathode material (e.g., a lithium-excess material). The cathode material can include at least one of lithium manganese oxide ($Li_2MnO_3$), lithium nickel-manganese oxide ($Li[Li_{0.17}Ni_{0.25}Mn_{0.58}]O_2$), or lithium manganese oxyfluoride ($Li_{0.75}MnO_2F$).

In some implementations, the ground state estimate is generated using at least one of an adaptive configuration interaction method, a coupled-cluster method, a Jastrow ansatz method, a density matrix renormalization group method, or a multi-reference perturbation method. Alternatively or in addition, in some implementations, the ground state estimate is prepared using Givens rotations.

In some implementations, the qubitization of the Hamiltonian has (1) eigenstates that correspond to eigenstates of the Hamiltonian, and (2) eigenvalues that are related to the Hamiltonian.

In some implementations, the first unitary operator is a prepare operator, and the second unitary operator is a select operator.

In some implementations, the instructions to perform the qubitization of the Hamiltonian include instructions to perform at least one quantum read-only memory (QROM) subroutine.

In some implementations, the non-transitory, processor-readable medium also stores instructions to cause the processor to execute at least one of the first unitary operator or the second unitary operator using at least one quantum read-only memory (QROM) subroutine.

In some implementations, the instructions to transform the Hamiltonian into the LCU include instructions to prepare at least one superposition using at least one quantum read-only memory (QROM) subroutine.

In some implementations, the non-transitory, processor-readable medium also stores instructions to cause the processor to generate the Hamiltonian, and to identify the approximate ground state associated with the physical system based on the Hamiltonian. Alternatively, the generation of the Hamiltonian and/or the identification of the approximate ground state associated with the physical system based on the Hamiltonian can be performed by another compute device (which may or may not be a quantum computer) that is operably coupled to the processor.

In some embodiments, a quantum computing method for identifying a ground state energy estimate of a physical system includes defining an LCU, where a pseudopotential term thereof is expressed as a sum of reflections. The method also includes a prepare (PREP) procedure, whereby pseudopotential terms are implemented, via a quantum computer, using QROM. The method also includes a select (SEL) procedure, whereby pseudopotential terms are implemented using reflection operators. More specifically, in some implementations, the reflection operators are implemented using QROM to generate superpositions, and the states can be Gaussian superpositions. A qubitization procedure of this method can include a sequence of PREP, SEL, and inverse PREP steps.

In some embodiments, given a physical system of interest (e.g., having a periodicity), a model of the physical system as a Hamiltonian is generated. The eigenstates of the Hamiltonian may represent states of interest of the physical system (e.g., ground state). A ground state estimate may be prepared using a classical method, while subsequent steps may be performed using quantum methods as described herein. Approximating a ground state energy of the physical system on a quantum computer includes decomposing the Hamiltonian into a linear combination of unitaries (LCU), and performing a qubitization of the LCU, using QROM, SEL and PREP, as described herein.

While various embodiments have been described and illustrated herein, a variety of other means and/or structures for performing the function and/or obtaining the results and/or one or more of the advantages described herein, and each of such variations and/or modifications are possible. More generally, all parameters, dimensions, materials, and configurations described herein are meant to be examples and that the actual parameters, dimensions, materials, and/or configurations will depend upon the specific application or applications for which the disclosure is used. It is to be understood that the foregoing embodiments are presented by way of example only and that other embodiments may be practiced otherwise than as specifically described and claimed. Embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Also, various concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States

Patent Office Manual of Patent Examining Procedures, Section 2111.03.

**Claims**

1. A non-transitory, processor-readable medium storing instructions that, when executed by a processor of a quantum computer, cause the processor to:

   identify a ground state estimate for a physical system;
   receive a linear combination of unitaries (LCU) representing the physical system, the LCU including a fermionic Hamiltonian;
   perform a qubitization of the fermionic Hamiltonian, based on (1) the LCU, (2) a first unitary operator configured to prepare a plurality of superpositions, and (3) a second unitary operator different from the first unitary operator, to produce a third unitary operator different from the first unitary operator and the second unitary operator; and
   perform a quantum phase estimation, based on the ground state estimate and the third unitary operator, the quantum phase estimation including a set of at least one simulation, to identify a ground state energy estimate for the physical system.

2. The non-transitory, processor-readable medium of claim 1, wherein the fermionic Hamiltonian includes representations of ionic pseudopotentials.

3. The non-transitory, processor-readable medium of claim 1 or claim 2, wherein the fermionic Hamiltonian includes a representation of at least one pseudopotential from a generalized separable class of pseudopotentials.

4. The non-transitory, processor-readable medium of any of the preceding claims, wherein the physical system is a cathode material.

5. The non-transitory, processor-readable medium of claim 4, wherein the cathode material is a lithium-excess material.

6. The non-transitory, processor-readable medium of claim 4, wherein the cathode material includes at least one of lithium manganese oxide ($Li_2MnO_3$), lithium nickel-manganese oxide ($Li[Li_{0.17}Ni_{0.25}Mn_{0.58}]O_2$), or lithium manganese oxyfluoride ($Li_{0.75}MnO_2F$).

7. The non-transitory, processor-readable medium of any of the preceding claims, wherein the ground state estimate is generated using at least one of an adaptive configuration interaction method, a coupled-cluster method, a Jastrow ansatz method, a density matrix renormalization group method, or a multi-reference perturbation method.

8. The non-transitory, processor-readable medium of any of the preceding claims, wherein the ground state estimate is prepared using Givens rotations.

9. The non-transitory, processor-readable medium of any of the preceding claims, wherein the qubitization of the fermionic Hamiltonian has (1) eigenstates that correspond to eigenstates of the fermionic Hamiltonian, and (2) eigenvalues that are related to the fermionic Hamiltonian.

10. The non-transitory, processor-readable medium of any of the preceding claims, wherein the first unitary operator is a prepare operator, and the second unitary operator is a select operator.

11. The non-transitory, processor-readable medium of any of the preceding claims, wherein the instructions to perform the qubitization of the fermionic Hamiltonian include instructions to perform at least one quantum read-only memory (QROM) subroutine.

12. The non-transitory, processor-readable medium of any of the preceding claims, further storing instructions to cause the processor to execute at least one of the first unitary operator or the second unitary operator using at least one quantum read-only memory (QROM) subroutine.

13. The non-transitory, processor-readable medium of any of the preceding claims, further storing instructions to cause the processor to transform the fermionic Hamiltonian into the LCU, the fermionic Hamiltonian representing at least one atomic pseudopotential of the physical system.

14. The non-transitory, processor-readable medium of claim 13, wherein the instructions to transform the fermionic Hamiltonian into the LCU include instructions to prepare at least one superposition using at least one quantum read-only memory (QROM) subroutine.

15. The non-transitory, processor-readable medium of any of the preceding claims, further storing instructions to cause the processor to:

generate the fermionic Hamiltonian; and
identify the approximate ground state associated with the physical system based on the fermionic Hamiltonian.

**FIG. 1**

**FIG. 2**

EP 4 414 899 A1

FIG. 3

FIG. 4A

FIG. 4B

Initial state preparation module

Quantum algorithm module

FIG. 5

600

| Identify a ground state estimate for a physical system 602 |

↓

| Receive a linear combination of unitaries (LCU) representing the physical system, the LCU including a pseudopotential Hamiltonian term expressed as a sum of reflections 604 |

↓

| Perform a qubitization of the pseudopotential Hamiltonian term, based on (1) the LCU, (2) a first unitary operator configured to prepare a plurality of superpositions, and (3) a second unitary operator different from the first unitary operator, to produce a third unitary operator different from the first unitary operator and the second unitary operator 606 |

↓

| Perform a quantum phase estimation, based on the ground state estimate and the third unitary operator, the quantum phase estimation including a set of at least one simulation, to identify a ground state energy estimate for the physical system 608 |

# FIG. 6

700

Identify a ground state estimate for a physical system
702

Receive a linear combination of unitaries (LCU)
representing the physical system, the LCU including a
fermionic Hamiltonian 704

Perform a qubitization of the fermionic Hamiltonian,
based on (1) the LCU, (2) a first unitary operator
configured to prepare a plurality of superpositions, and
(3) a second unitary operator different from the first
unitary operator, to produce a third unitary operator
different from the first unitary operator and the second
unitary operator 706

Perform a quantum phase estimation, based on the
ground state estimate and the third unitary operator, the
quantum phase estimation including a set of at least one
simulation, to identify a ground state energy estimate for
the physical system 708

# FIG. 7

800

Transform a Hamiltonian into a linear combination of unitaries (LCU), the Hamiltonian representing at least one atomic pseudopotential of a physical system 802

Perform a qubitization of the Hamiltonian, based on (1) the LCU, (2) a first unitary operator configured to prepare a plurality of superpositions, and (3) a second unitary operator different from the first unitary operator, to produce a third unitary operator different from the first unitary operator and the second unitary operator 804

Perform a quantum phase estimation, based on a ground state estimate and the third unitary operator, the quantum phase estimation including performing at least one simulation, to identify a ground state energy estimate of the physical system 806

# FIG. 8

**EP 4 414 899 A1**

# EUROPEAN SEARCH REPORT

**Application Number**

EP 24 15 5341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Delgado Alain ET AL: "How to simulate key properties of lithium-ion batteries with a fault-tolerant quantum computer", , 25 April 2022 (2022-04-25), XP093176707, Retrieved from the Internet: URL:https://arxiv.org/pdf/2204.11890v1 [retrieved on 2024-06-19] * page 1 - page 24, right-hand column, paragraph 1 * * Appendices A-F * | 1-15 | INV. G06N10/60 ADD. G06N10/20 |
| A | Kim Isaac H ET AL: "Fault-tolerant resource estimate for quantum chemical simulations: Case study on Li-ion battery electrolyte molecules", , 21 April 2021 (2021-04-21), XP093176758, Retrieved from the Internet: URL:https://arxiv.org/pdf/2104.10653v1 [retrieved on 2024-06-19] * page 1 - page 14 * * Appendices A-F * | 1-15 | |
| A | PABLO A M CASARES ET AL: "TFermion: A non-Clifford gate cost assessment library of quantum phase estimation algorithms for quantum chemistry", ARXIV.ORG, CORNELL UNIVERSITY LIBRARY, 201 OLIN LIBRARY CORNELL UNIVERSITY ITHACA, NY 14853, 13 July 2022 (2022-07-13), XP091269595, * page 1 - page 11, left-hand column, paragraph 5 * * Appendices A-H * | 1-15 | **TECHNICAL FIELDS SEARCHED (IPC)** G06N |

-/--

The present search report has been drawn up for all claims

| Place of search | Date of completion of the search | Examiner |
|---|---|---|
| The Hague | 28 June 2024 | Volkmer, Markus |

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/091874 A1 (GOOGLE LLC [US]) 7 May 2020 (2020-05-07) * abstract; claims 1-16; figures 1-3 * * paragraph [0030] - paragraph [0074] * | 1-15 | |
| X,P | MODJTABA SHOKRIAN ZINI ET AL: "Quantum simulation of battery materials using ionic pseudopotentials", ARXIV.ORG, CORNELL UNIVERSITY LIBRARY, 201 OLIN LIBRARY CORNELL UNIVERSITY ITHACA, NY 14853, 15 February 2023 (2023-02-15), XP091439969, * the whole document * | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 28 June 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 5341

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| WO 2020091874 A1 | 07-05-2020 | AU 2019370097 A1 | 08-04-2021 |
| | | AU 2022202653 A1 | 12-05-2022 |
| | | CA 3114094 A1 | 07-05-2020 |
| | | CN 112753040 A | 04-05-2021 |
| | | EP 3837644 A1 | 23-06-2021 |
| | | US 2021272009 A1 | 02-09-2021 |
| | | WO 2020091874 A1 | 07-05-2020 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63442651

**Non-patent literature cited in the description**

- **A. DELGADO et al.** Simulating Key Properties of Lithium-Ion Batteries with a Fault-Tolerant Quantum Computer. *Phys. Rev. A,* 2022, vol. 106
- **Y. SU et al.** Fault-Tolerant Quantum Simulations of Chemistry in First Quantization. *PRX Quantum,* 2021, vol. 2, 040332
- **S. MCARDLE et al.** Quantum State Preparation Without Coherent Arithmetic. *Quantum Physics, arXiv:2210.14892,* 2022
- **C. HARTWIGSEN et al.** Relativistic Separable Dual-Space Gaussian Pseudopotentials from H to Rn. *Physical Review B,* 1998, vol. 58, 3641
- **J. LEE et al.** Even More Efficient Quantum Computations of Chemistry Through Tensor Hypercontraction. *PRX Quantum,* 2021, vol. 2, 030305
- **J. HEYD et al.** Efficient Hybrid Density Functional Calculations in Solids: Assessment of the Heyd-Scuseria-Emzerhof Screened Coulomb Hybrid Functional. *J. Chem. Phys.,* 2004, vol. 121, 1187
- **R. BABBUSH et al.** Quantum Simluation of Chemistry with Sublinear Scaling in Basis Size. *Quantum Information,* 2019, vol. 5, 92
- **G.H. LOW et al.** Trading T-Gates for Dirty Qubits in State Preparation and Unitary Synthesis. *arXiv: 1812.00954,* 2018